# EUROPEAN PATENT APPLICATION

(11) **EP 2 249 253 A1**
(43) Date of publication of application: **10.11.2010**
(21) Application number: 10007973.0
(22) Date of filing: 19.12.2008
(51) Int. Cl.: G06F 9/48, G06F 21/00

(54) **Storage device having direct user access**

(30) Priority: 02.01.2008 US 18644; 04.01.2008 US 18979; 11.02.2008 US 29356; 25.02.2008 US 36440; 10.03.2008 US 45472; 10.04.2008 US 101065; 19.05.2008 US 123252; 18.07.2008 US 82094; 21.07.2008 US 177006
(62) Divisional of application: 08870111.5
(71) Applicant: SanDisk IL Ltd., 44425 Kfar Saba (IL)
(72) Inventor: Nochimowski, Alain, Tel Aviv (IL); Pomerantz, Itzhak, Kfar Saba (IL); Rave, Micha, Herzliya (IL); Stern, Ori, Modeen (IL); Santos Garcia, Jose Carlos, 28915 Madrid (ES); Lopez Martin, Antonio Manuel, 28915 Madrid (ES); Mosek, Amir, Tel Aviv (IL); Marcu, Alon, Tel Mond 40600 (IL)
(74) Representative: Hitchcock, Esmond Antony

(57) **Abstract**

Various methods, devices and systems are described for providing distributed storage services. A data storage device is capable of initiating a communication session with an external entity such as a local host computer (and vice versa) coupled directly to the data storage device, a remote server computer, or directly with remote data storage devices with or without intervention by a local host computer.

## Description

### FIELD OF THE INVENTION

The present invention relates generally to digital devices. More particularly, the present invention relates to providing cross platform mass storage services for digital devices. The present invention also relates to cache management and relates to providing secure distribution and consumption of digital content and to providing virtual storage with a local storage device. The present invention also relates to a local storage device that includes capability to index data in the local storage device without involvement of a host device to which the local storage device is operatively coupled.

### BACKGROUND

In the prior art, the 'autorun' or 'autoplay' function provides computer OSs with the ability to automatically take some action upon insertion of removable media (e.g. CD-ROM or flash media). This is a convenient feature as software distributed on removable media can automatically start an installer when the disc is inserted. Unfortunately, however, the 'autorun' feature is considered by some manufacturers to pose a security risk (i.e., malicious software can be distributed). In order to avoid this risk, the autorun (or autoplay) feature is often de-activated providing no mechanism by which a local storage device can directly interact with a user.

Internet technology is, has been and still remains, a rapidly developing field, particularly in the area of network optimization and in particular for improving the end-user browsing experience. In computer networks, a proxy server is a server (a computer system or an application program) which services the requests of its clients (e.g. request for a web page, connection establishment, etc.) by forwarding the requests to other servers, typically web servers.

An Internet application (e.g., a FTP client that uses the FTP protocol or any other Internet application such as a WEB browser) usually manages at least two relevant interfaces, a first interface to a local mass storage device referred to as a mass storage interface through which the internet application manages content stored in a cache by way of a cache manager using a host device file system (HDFS). More generally, however, any number of internet applications can each manage their own content stored in the local mass storage device through their respective logical interfaces where each of these individual storage areas are managed by their own set of rules. In the case where a representative internet application takes the form of a browser application, the browser cache manager uses a set of rules, also referred to as browser cache policies, to serve the browser with appropriate content. In order to improve response time and preserve network bandwidth, the browser cache will typically store content based upon the relevant rule(s) set forth by the cache policies. For example, the browser cache manager (following the relevant cache policies established for a particular browser) can store content (in the form of a WEB page for example) based upon previously retrieved WEB pages in anticipation that the browser is likely to request that particular WEB page again in the near future. In this way, instead of using valuable network resources, the browser cache manager can retrieve the relevant WEB page stored locally in the browser cache.

Another interface used by the internet application can be used for internet connectivity such as management of HTTP commands that are carried over a network connection in communication with a network resource that can be either a local resource or a remote resource. In the case of mobile browsing the browser usually gets access to the remote resource/server through a proxy server that can perform content optimization/adaptation/filtering/compression, and so on in order to preserve valuable mobile link resources. Proxy servers can also be used in enterprise systems that require additional tasks such as access control on the edge of the Internet. Another value lies in the management of a proxy cache that can apply 'content pre- fetching techniques" so as to pre-cache content "on the edge of the Internet" (i.e., closer to the user's browser). In this way, the browsing experience can be accelerated since requested content is on hand when needed.

However, since the browser cache and the proxy cache are managed independently of each other, there can be little or no "learning" from or about each other's cache policies. Therefore, there can be no overall cache management policy since the proxy cache and the browser cache are guided by their own set of rules that may or may not be known to the other since the browser application and the proxy can be supplied by different vendors. This lack of overall cache management policy can create inefficiencies that can result in a less than optimal browsing experience due to, in part, the inefficient allocation of storage resources. Such inefficiencies can include, for example, duplicating content stored in both the proxy cache and the browser cache, resulting in an inefficient use of network and storage resources (i.e., unnecessarily sending the browser content over the network link).

A proposed solution includes integrating a client agent on the mobile handset in order to synchronize between the browser and the proxy cache. However, since the client agent is typically application specific its use is limited to specific platforms. Due in part to the heterogeneity of host operating systems, particularly in mobile platforms, the usefulness of the client agent may be quite limited. This heterogeneity is made even worse in the case of a "closed" operating systems (such as Nucleus) as opposed to that of "open" operating systems such as Windows, Symbian, and the like. Since different mobile handsets may run on different operating systems, such implementation typically requires complex software integration. This software integration may prove even more complex when using mobile handsets that run on non-open operating systems.

There are at least two different approaches to distributing digital content: content download and content streaming. In general terms content download can be thought of as transferring digital content stored in a first device to a second device in which the transferred digital content is to be stored. Content downloading can encompass both a "push" and a "pull" approach to transferring the digital content from the first device to the second device. For example, digital content stored in the first device can be "pushed" by the first device to the second device in that it is the first device that initiates the transfer of the digital content. Alternatively, digital content stored in the first device can be pulled from the first device to the second device in that it is the second device that initiates the transfer of the digital content from the first device to the second device. Either push or pull can be achieved through regular download (HTTP-based etc.) or through progressive download technologies (i.e., start playing while downloading the content). In any case, once the digital content is received at the second device, the digital content is stored locally and persistently at the second device. In this way, the digital content stored in the second device can be moved from one digital device to another (totally under a user control) and user privacy is preserved (e.g. in the case of adult content) and so on.

However, one drawback lies in the fact that content providers (e.g. Hollywood studios, etc.) require a strong security level to counter pirates' attempts to 'copy the content' thereby limiting the content portability. This is typically where Digital Rights Management (DRM) technologies intervene with the definition of Rights Objects (RO) aimed at limiting the content usage/copy. DRM ROs are typically linked to a dedicated hardware solution such as TrustedFIash™ memory device manufactured by SanDisk Corporation of Milpitas, CA. Such hardware solutions allow a user to securely store the ROs on a removable media (e.g. SD storage device), in an attempt to provide true content and RO portability. In practice, however, portability is not achieved because ROs are DRM-scheme dependent and with the absence of a fully adopted DRM standard, full portability becomes limited only to those digital media players (or host platforms) supporting the corresponding DRM technology.

Content streaming can be implemented through a small number of industry standardized protocols (e.g. RTSP/RTP etc.), however, the content can not be persistently stored locally since a user can only access the content if he/she obtains network connectivity to the streaming server. One of the benefits of this approach is the fact that wide content access is ensured to those players compatible with the supported streaming protocol (i.e. most legacy players utilize standard RTSP/RTP). Since content providers have lighter security requirements there is little or no risk of content copying other than 'sniffing and recording' content that goes through the streaming interface. This is particularly true in mobile devices where constrained environments and often-closed operating systems constitute significant obstacles to potential pirates which is not the case for personal computers where recording the unprotected streams can be done quite easily through widely available tools.

Such risks can be partly removed by standard service-level protection such as the creation of a secure communication channel through mutual authentication between the streaming client and server (which may or may not be perceived as necessary in mobile systems). However, one of the drawbacks to this approach is the fact that full portability (where the user controls the content purchased) can not be implemented since only connected devices can access the content (since in the absence of connectivity there is no access to the streaming server). Furthermore, this lack of portability restricts available business models. In addition, privacy can be compromised since the service provider knows the user preferences and usage.

This concept is traditionally built on a statically pre-determined physical memory array, part of which is hidden from the host file system and hence the user, and which may only be activated upon user request. Such a user request may be initiated remotely by the device controller and may include payment. However, this approach has a number of shortcomings, not the least of which include: the size of the manufactured memory array is determined at production time resulting in an inability for the user to further expand the storage capacity of the memory array beyond the pre-determined hidden capacity, i.e., there is no usage flexibility etc., and, the ratio between hidden and exposed memory is determined at production time, or in any case, before the local storage device reaches the user. By way of example, a device vendor may manufacture a number of memory devices each having a total storage capacity of 2 GB. However, the memory devices may be sold as 1 GB memory devices with the remaining 1 GB being hidden from, or at least rendered inaccessible to, the user. Even if the second GB is accessible upon payment by the user, the manufacturer of the memory device bears a risk; that is, that the user will not be able to access the second hidden GB without first paying the manufacturer.

One way to overcome the limitations of such physically expandable storage devices is through a proprietary client agent integrated into the Host that provides an abstraction of the storage whether local (i.e. accessed by the agent through legacy mass storage commands) or remote (i.e. accessed by the agent through network protocols). This particular approach has been implemented in various products such as that manufactured by Personalite Numerique and described in French patent FR0412199. However, since the client agent is typically application specific, its use is limited to specific platforms. Due in part to the heterogeneity of host operating systems, particularly in mobile platforms, the usefulness of the client agent may be quite limited. Additionally, since different mobile handsets may run on various different operating systems, such implementation typically requires complex software integration. This software integration generally proves even more complex when using mobile handsets that run on "closed" operating systems (such as Nucleus) as opposed to that of "open" operating systems such as Windows, Symbian, and the like.

Therefore, a method, system, and apparatus that overcomes the above-mentioned limitations while still affording the opportunity to operate in legacy LBA/mass storage mode (i.e. compatible with current legacy host file systems) is desired.

Mass storage devices (such as FLASH memory devices that includes SD and MMC type mass storage devices) have increased greatly in both storage capacity and in the capabilities (i.e., processing resources) of associated mass storage device controllers. This increase in available storage capacity has had a synergistic effect on the general availability of devices ("host devices") whose capabilities can depend greatly on available memory. Such devices include portable digital devices such as portable media players, interactive personal communication devices (cell phones, PDAs, etc.) and the like. In this way, a digital consumer's exposure to digital products that use the storage capability of mass storage devices such as FLASH memory has greatly increased.

This exposure typically spans across multiple host devices - connected or unconnected - or access modes - wired vs. wireless, fixed vs. mobile etc. - each having specific storage requirements. A proposed configuration to generate an index of the data stored on a mass storage device includes, generally, having a different host-specific program being used for each host device. That program is typically installed on the host device and/or on a remote server to which the host device is always or occasionally connected.

The proposed indexing configuration, then, generally includes a program that is tightly coupled to the host device. Thus, for example, such an indexing program that is tightly coupled to a host device generally must be customized to operate with that host device. Yet further, having the host device highly involved in data indexing can take processing power from the host device that may be desired or required for other functions.

Another possible drawback of the legacy indexing configuration is evidenced as "content side-load," where a mobile host device is connected to a computer via a USB cable, for example, and content is stored in the storage device. In this case, the file system of the computer to which the mobile host is connected is the one managing the device, which results in the mobile indexing application not being aware of the storage operation carried out by the computer and, therefore, not indexing the content.

It has become commonplace to connect a host processor to different devices using a plurality of conducting wires referred to as a "bus" that typically complies with well known standards. The devices connected to the bus may include memory / storage devices, communications devices, sensing devices, etc. and these devices may be either fixed or removable. In most situations, some or all of the wires that define the bus are shared amongst any and/or all of the devices that are connected to the bus. Since the devices coupled to the bus share the same conducting wires, each device is typically assigned a unique ID or address on the bus and is configured to respond only to messages that are addressed to that unique ID / address. In this way, multiple devices can share the same conducting wires that form the bus resulting in a substantially reduced bus size than would otherwise be required.

Typically, a master/slave bus protocol is adopted for the bus. Master/slave is a model for a communication protocol in which one device or process has unidirectional control over one or more other devices. In a conventional system, once a master/slave relationship between devices or processes is established, the direction of control is always from the master to the slaves, i.e. a slave cannot initiate a transaction. In some systems a master is elected from a group of eligible devices with the other devices acting in the role of slaves. In conventional systems, data is not transferred directly between slave devices; rather, data is typically passed over the common bus from a source slave storage device to a host controller or other intermediary where the data is temporarily cached before being re-output by the host controller over the common bus and targeted towards a destination slave storage device where the data is then read from the bus and stored.

While conventional systems work well, it is desirable to reduce the host CPU resources required for transferring data between devices as well as to reduce the bus utilization and memory requirements of the host and/or other temporary storage devices.

The number and kind of portable (i.e., small form factor, hand held) consumer electronic products on the market is exploding. These portable consumer electronic products include, for example, PDAs, media players, cellular phones, and cameras. For competitive and other reasons, these consumer electronic products have increased their functionality. For example, cellular phones have added PDA and camera functionality, PDAs have added cellular phone and music player functionality, media players have added PDA and video game functionality, and so on.

In order to provide its primary function, a portable consumer electronic product uses a host device to execute a host application that uses content stored in a conventional mass storage device. The host application, in turn, can provide both core services directly related to the primary function of the hand held consumer product and ancillary services related to the manipulation and management of the content stored in the storage device. For example, in order for a media player to play a media file, such as an MP3 file, the host application can use a core application in the form of a media player application to retrieve and play a music file (in the form of an MP3 file) stored in the storage device. The host application can also use an ancillary services application to provide a user with the capability of managing the music files stored in the storage device. Such user management can include play list manipulation and generation, sorting and searching for a specific music file, music genre, artist, etc. In the case of a media player arranged to display images (both still and video) the core application can take the form of a photo display and editing application that provides a user with touch-up capabilities such as red eye reduction, black and white conversion, image cropping and rotation. An associated ancillary services application can take the form of an image and or video management program that allows a user to sort, store and catalog images.

Therefore, a host application can be called upon provide both core services (such as playing an MP3 file, displaying an image file, or playing a video file (MP4)) and ancillary services related to content management and manipulation (sorting and cataloging imaging, sorting MP3 files, playlist editing, content searching, indexing and so on). However, regardless of whether the host application is called upon to provide a core or ancillary service, the host application must access data stored in the storage device where all files are stored using a logical block format. Storing data in a logical block format does not typically present an undue burden to the core application (playing a music file, for example), however, since mass storage devices operate at the granularity of a mass storage device block, rather than at the logical file level, ancillary services may not be optimally configured. This is especially true since many files (such as MP3) are of a predetermined size, they are stored more naturally as a data object and not as the logical blocks imposed by the conventional mass storage device.

Since these portable products have both limited processing resources and available RAM., difficulties can arise when the portable consumer electronic product is called upon to perform process intensive tasks requiring the host application (in particular the ancillary application) to process data stored as logical blocks that would more naturally be stored as a data object. In particular, it is typically the search / query operations (i.e. 'read-related' commands) that consume the most processing resources of the host in the context of ancillary services that can result in excessive power consumption by a host processor and long execution times resulting in slow responsiveness. In this way, the user may be left with a negative user experience since users usually do not like a product that is slow and whose battery life is short.

Therefore, an indexing method, system, and apparatus that address these shortcomings is desirable.

### SUMMARY

According to different embodiments of the present invention, various methods, devices and systems are described for providing distributed storage services. Such services include providing direct interaction between a local storage device and an end user.

One embodiment of the invention describes a computing system that includes at least a host device (HD) and a local storage device (LSD) managed by the HD. The LSD does not utilize any interface to a device external to the HD other than that interface provided by the HD. The LSD indirectly prompts the HD to execute a requested process by using a LSD logical request to prompt the HD to establish a communication path between the LSD and a launching application. The LSD and the launching application logically interact over the communication path without intervention by the HD. The logical interaction causes the launching application to prompt the HD to execute the requested process.

In one aspect of the invention, the launching application is associated with a SIM card managed by the HD. The SIM card can be compliant with the SIM Application Toolkit set of commands or with the USIM Application Toolkit set of commands.

In another embodiment, a method for indirectly prompting the HD to execute a requested process in a computing system is described. The computing system includes a host device (HD) and a local storage device (LSD) managed by the HD, wherein the LSD does not utilize any interface to a device external to the HD other than that interface provided by the HD. The method is carried out by at least the following operations:

using a LSD logical request to prompt the HD to establish a communication path between the LSD and a launching application, wherein the LSD logical request is not created to serve a HD initiated process, logically interacting over the communication path, and causing the launching application to prompt the HD to execute the requested process, and executing the requested process.

According to different embodiments of the present invention, various methods, devices and systems are described for providing improved internet application (such as a browser) performance. One embodiment describes a local storage device (LSD). The LSD includes at least a memory array logically arranged to include at least a first portion and at least a second portion that are managed independently of each other. A first application manages first application content in the first portion and a second application manages second application content in the second portion. The first and the second applications execute independently from each other and the managing of the first application content by the first application is independent of the managing of the second application content by the second application. The LSD informs the second application of the first application content stored in the first portion independently from a host device.

In another embodiment, a computing system is described that includes at least a host device that includes a host device file system (HDFS) and a network interface, a local storage device LSD that includes a memory array logically arranged to include at least a first portion and at least a second portion wherein the first and the second portions are managed independently of each other. The first portion is managed by the HDFS such that the first application uses the HDFS to manage the first application content in the first portion, and the second portion is not managed by the HDFS such that the second portion is invisible to the HDFS. The first and the second applications execute independently of each other, and the managing of the first application content by the first application is independent of the managing of the second application content by the second application. The LSD informs the second application of the first application content available in the first portion where the informing is independent of the HD.

A method performed by a local storage device (LSD) is described. The LSD includes a memory array logically arranged to include at least a first portion and at least a second portion wherein the first and the second portions are managed independently from each other where a first application manages first application content in the first portion and where a second application manages second application content in the second portion, The first and the second applications execute independently of each other, and the managing of the first application content by the first application is independent of the managing of the second application content by the second application. The method is performed by at least the following operations: informing the second application by the LSD of the first application content stored in the first portion independent of a host device.

In another embodiment, computer program product executed by a system that includes a local storage device (LSD) in communication with a host device (HD) js described. The LSD includes a memory array logically arranged to include at least a first portion and at least a second portion that are independent of each other. A first application manages first application content in the first portion and a second application manages second application content in the second portion. The first and the second applications execute independently from each other, and the managing of the first application content by the first application is independent of the managing of the second application content by the second application. The computer program product includes computer code for informing the second application by the LSD of the first application content stored in the first portion where the informing is independent of the HD, and

computer readable medium for storing the computer code.

According to different embodiments of the present invention, various methods, devices and systems are described for securely distributing and consuming protected digital content are described. In one embodiment, a method of acquiring and consuming protected digital content having at least one restriction attached thereto by a digital content provider in accordance with a DRM scheme is described. The method can be performed by a system that includes a local storage device (LSD) having a memory array where the LSD is coupled with a host device (HD) having at least a host device file system (HDFS) arranged to manage at least a portion of the memory array. The method can be performed by the following operations: acquiring the protected digital content by the LSD, securely storing the acquired protected digital content in the memory array by the LSD, where the acquiring and the securely storing are each in accordance with the DRM scheme and neither are initiated by the HDFS, and consuming the protected digital content. The consuming the protected digital content can be performed by converting at least some of the securely stored protected digital content into a digital data stream, and streaming the digital data stream by the LSD. If the digital data stream has the at least one restriction attached thereto that is a usage restriction, then the LSD enforces the usage restriction.

In another embodiment, computer program product for acquiring and consuming protected digital content having at least one restriction attached thereto by a digital content provider in accordance with a DRM scheme is described. The computer program product can be executed by a processor included in a system that includes a local storage device (LSD) having a memory array, wherein the LSD is coupled with a host device (HD) having at least a host device file system (HDFS) arranged to manage at least a portion of the memory array. The computer program product includes at least computer code for acquiring the protected digital content by the LSD, computer code for securely storing the acquired protected digital content in the memory array by the LSD, where the acquiring and the securely storing are each in accordance with the DRM scheme and neither are initiated by the HDFS, computer code for consuming the protected digital content by converting at least some of the securely stored protected digital content into a digital data stream, and streaming the digital data stream by the LSD, where if the digital data stream has the at least one restriction attached thereto that is a usage restriction, then the LSD enforces the usage restriction, and computer readable medium for storing the computer code.

In still another embodiment, a system for acquiring and consuming protected digital content having at least one restriction attached thereto by a digital content provider in accordance with a DRM scheme is described. The system includes a host device (HD) having at least a host device file system (HDFS), and a local storage device (LSD) coupled with a host device (HD) that includes a memory array at least a portion of which is managed by the HDFS. The LSD acquires and securely stores the protected digital content in the memory array, where the acquiring and the securely storing are each in accordance with the DRM scheme and neither are initiated by the HDFS. The protected digital content is consumed by converting at least some of the securely stored protected digital content into a digital data stream and streaming the digital data stream by the LSD. If the digital data stream has the at least one restriction attached thereto that is a usage restriction, then the LSD enforces the usage restriction.

In yet another embodiment, a computing system is described. The computing system includes a host device (HD) having at least a host device file system and a LSD driver, a local storage device (LSD) having at least one storage area managed by the host device file system (HDFS), and a requesting application external to the LSD and in communication with the HD where the requesting application does not utilize any communication paths with either the HDFS or the LSD driver. The requesting application compels the LSD to read a selected portion of data stored in the at least one storage area without intervention by the HDFS, and the LSD then streams the selected data read from the at least one storage area to an external application.

In one aspect of the invention, if the selected portion of data stored in the at least one storage area is protected digital content having at least one restriction attached thereto by a digital content provider in accordance with a DRM scheme then the LSD streams the protected digital content read from the at least one storage area to the external application by converting the protected digital content read from the at least one storage area into a digital data stream having the at least one restriction attached thereto. If the at least one restriction attached to the digital data stream is a usage restriction, then the LSD enforces the usage restriction.

According to particular embodiments of the present invention, various methods, devices and systems are described for servicing a management command send from a host device (HD) to a local storage device (LSD). In one aspect, a method of servicing a management command sent from a host device file system (HDFS) within a host device (HD) by a local storage device (LSD) in communication with the HD is described. The method includes receiving a first management command at the LSD instructing the LSD to execute an operation on associated logical addresses. If the first management command is associated with at least a first set of logical addresses, the method includes servicing the first management command by the LSD at least by way of sending a second management command to a device (RD) external to the LSD that instructs the RD to execute an operation on memory locations within the RD. In various embodiments, the sending of the second management command to the RD and the execution of the operation associated with the first management command on the memory locations within the RD are invisible to the HDFS. If the first management command is not associated with the first set of logical addresses, the method includes servicing the first management command by the LSD only by way of operations executed by the LSD on memory locations within the LSD. In various embodiments, the LSD does not utilize any other physical interface to any other device external to the LSD other than that provided via the HD.

According to particular embodiments, if the management command is associated with at least the first set of logical addresses, the method further includes prompting the HD by the LSD to establish a communication path between the LSD and the RD via the HD. In a preferred embodiment, once the communication path is established, no further intervention by the HD is required except to maintain the communication path.

In a system aspect of the invention, a computing system is described that includes a host device (HD) having at least a host device file system (HDFS) and a local storage device (LSD) coupled with the HD by means of an HD/LSD interface. The LSD includes a memory array and an LSD controller arranged to locally manage the memory array. The memory array is logically arranged to include at least one mass storage region externally managed by the HDFS via the LSD controller by sending a management command to the LSD controller by way of the HD/LSD interface. The management command may instruct the LSD to execute an operation on associated memory addresses. According to particular embodiments, if the LSD controller determines that a first management command received from the HDFS is associated with at least a first set of logical addresses, the LSD controller services the first management command at least by way of sending a second management command to a device (RD) external to the LSD that instructs the RD to execute an operation on memory locations within the RD, the sending of the second management command to the RD and the execution of the operation associated with the first management command on the memory locations within the RD being invisible to the HDFS. Additionally, in some embodiments, if the LSD controller determines that the first management command received from the HDFS is associated with at least a second set of logical addresses, the LSD controller services the first management command by way of operations executed by the LSD on memory locations within the LSD mass storage region.

In another aspect, a computer system is described that includes a host device (HD) having at least a host device file system (HDFS). The system further includes a local storage device (LSD) coupled with the HD by means of an HD/LSD interface, the LSD including a memory array and an LSD controller arranged to locally manage the memory array, the memory array being logically arranged to include at least one mass storage region externally managed by the HDFS via the LSD controller by sending management commands to the LSD controller by way of the HD/LSD interface. In various embodiments, the HDFS is further configured to manage a device (RD) external to the LSD via the LSD by way of sending a first management command to the LSD that instructs the LSD to forward a second management command to the RD.

In sill another aspect, logic encoded in one or more tangible media within a local storage device (LSD) for servicing a management command sent from a host device file system (HDFS) within a host device (HD) in communication with the LSD is described. When executed the logic is operable to receive a first management command at the LSD, the first management command instructing the LSD to execute an operation on associated logical addresses, and if the first management command is associated with at least a first set of logical addresses, service the first management command by the LSD at least by way of sending a second management command to a device (RD) external to the LSD that instructs the RD to execute an operation on memory locations within the RD, the sending of the second management command to the RD and the execution of the operation associated with the first management command on the memory locations within the RD being invisible to the HDFS, otherwise, service the first management command by the LSD only by way of operations executed by the LSD on memory locations within the LSD.

In accordance with one aspect, a computing device having a host device (HD) is in communication with a local storage device (LSD), wherein the LSD includes a memory array. A method operates to generate a search index with respect to data stored in the memory array of the LSD. By the LSD without involvement of the HD, the index data is generated with respect to the data stored in the memory array of the LSD. By the LSD, the generated index data is stored on the LSD as at least a part of the search index. The index may include data that can be used to respond to search queries with respect to data of the LSD. The queries may be originated from a HD or from within the LSD. The use of the index is not limited to responding to search queries. For example, the index may be used for content screening.

According to different embodiments, various methods, devices and systems are described for providing storage services. One embodiment describes a system. The system includes at least a data storage array, a first logical interface suitable for managing data stored in the data storage array as logical data blocks, and a second logical interface suitable for managing data objects corresponding to the data stored as logical data blocks. When at least some of the data stored as logical data blocks is modified by way of the first interface, the modified data is accessible by way of both the first and the second interface, and when the being accessible by way of the second interface involves concurrently managing a predetermined set of data object properties.

Another embodiment describes local storage device (LSD). The local storage device includes a data storage array, a first logical interface suitable for managing data stored in the data storage array as logical data blocks, and a second logical interface suitable for managing data objects corresponding to the data stored as logical data blocks. When at least some of the data stored as logical data blocks is modified by way of the first interface, the modified data is accessible by way of both the first and the second interface. The being accessible by way of the second interface involves concurrently managing a predetermined set of data object properties.

In yet another embodiment, a method is described. The method is performed by carrying out at least the following operations in a data storage array. Managing data stored in the data storage array as logical data blocks by way of a first interface, and managing data objects stored in the data storage array by way of a second interface where the data objects correspond to the data stored as logical data blocks. When the data stored as logical data blocks is modified by way of the first interface, the modified data is accessible by way of both the first and the second interface. The being accessible by way of the second interface involves concurrently managing a predetermined set of data object properties.

### BRIEF DESCRIPTION OF THE DRAWINGS

Fig. 1 shows a symbolic representation of a system in accordance with an embodiment of the invention.

Figs. 2A-2C illustrates a host device/local storage device system in accordance with an embodiment of the invention.

Figs. 3A-3B shows a computing system in accordance with an embodiment of the invention.

Fig. 4 shows a computing system in accordance with an embodiment of the invention.

Figs. 5A-5B shows a more detailed view of network shown in Fig. 3.

Fig. 6 shows a flowchart detailing a process in accordance with an embodiment of the invention.

Fig. 7 shows a flowchart detailing a process in accordance with an embodiment of the invention.

Fig. 8 shows a representative media network in accordance with an embodiment of the invention.

Fig. 9 shows representative computing system in accordance with the invention.

Fig. 10 illustrates a specific implementation of the computing system shown in Fig. 9.

Fig. 11 shows a representative implementation of a local storage device in accordance with an embodiment of the invention.

Figs. 12A-B show embodiments of the invention.

Fig. 13 illustrates a host device/local storage device system in accordance with an embodiment of the invention.

Figs. 14A-14B illustrate diagrammatic representations of a mapping table and a perceived storage capacity, respectively, of a local storage device (LSD) in accordance with an embodiment of the invention.

Fig. 15 shows a flowchart illustrating a process for servicing a management command in accordance with an embodiment of the invention.

Fig. 16 illustrates a system suitable for use with the process of Fig. 15.

Fig.17 illustrates a computing system including a host device (HD) and a local storage device, wherein the LSD is configured to index data stored in a memory array of the LSD.

Fig. 18 illustrates an example in which the index data is generated based on data access to the LSD by the HD.

Fig. 19 shows an example configuration of a system in which the indexing data may be obtained and/or used by the HD.

Fig. 20 illustrates an example configuration in which the indexing data may be transferred to an external device outside of a master/slave paradigm.

Fig. 21 is a flowchart illustrating, in a broad aspect, a method by which an LSD may determine indexing data indicative of data stored in a memory array of the LSD.

Fig. 22 illustrates a simplified block diagram of a system in accordance with an embodiment of the present invention.

Fig. 23 illustrates a simplified block diagram of an example storage device in accordance with an embodiment of the present invention.

Fig. 24 shows a flowchart illustrating a process of transferring data directly between storage devices.

Fig. 25 illustrates a simplified block diagram of a system including a plurality of storage devices arranged into a daisy chain configuration in accordance with an embodiment of the present invention.

Fig. 26 illustrates a system including a host device (HD) and a local storage device (LSD).

Fig. 27 is an embodiment of a synchronizer.

Figs. 28 through 29 illustrate various operations that can be performed in the context of the described embodiments.

Fig. 30 shows a flowchart in accordance with an described embodiment.

Fig. 31 shows a representative media network in accordance with the described embodiments.

### DETAILED DESCRIPTION OF THE DESCRIBED EMBODIMENTS

Reference will now be made in detail to a particular embodiment of the invention examples of which are illustrated in the accompanying drawings. While the invention will be described in conjunction with the particular embodiments, it will be understood that it is not intended to limit the invention to the described embodiments. To the contrary, it is intended to cover alternatives, modifications, and equivalents as may be included within the spirit and scope of the invention as defined by the appended claims. It should be noted that any functional blocks or functional arrangements described herein can be implemented as either a physical entity or as a logical entity, or as a combination of both.

With the increase of the capabilities of storage device controllers, the execution of software applications from within the storage device using processing resources made available by the storage device controllers becomes possible. This enhanced operability of the storage device controllers leads to a paradigm of new (and heretofore impractical) interaction modes such as user-oriented storage services. Such user oriented storage services can be used for improving a user's digital content consumption experience that typically spans across multiple devices - connected or unconnected - or access modes - wired vs. wireless, fixed vs. mobile etc. - each having specific storage requirements.

In order to provide support "user-centric" (as opposed to traditional "device-centric") storage management approach, the invention goes beyond the strict limitations of the host managed, LBA-based mass storage paradigm and provides a storage services paradigm that while fully backward compatible with legacy mass storage devices enhances mass storage with other kinds of interactions. Other kinds of interactions that, for example, allow for storage resources and service building blocks to be potentially distributed across various physical locations (i.e., a data storage device, in a host computer, or across a network).

With this in mind, the storage services paradigm provides that a local data storage device is now capable of 1) interactions with other data storage devices present in the same host computer, or with applications running on a remote server computer, and 2) the interactions can be initiated by the data storage device itself, by a host application or by a remote server.

The invention can further pertain to an electronic system that includes a memory device discussed above. Memory devices (i.e., memory cards) are commonly used to store digital data for use with various electronics products. The memory device is often removable from the electronic system so the stored digital data is portable. The memory devices according to the invention can have a relatively small form factor and be used to store digital data for electronics products that acquire data, such as cameras, hand-held or notebook computers, network cards, network appliances, set-top boxes, hand-held or other small media (e.g., audio) players/recorders (e.g., MP3 devices), and medical monitors.

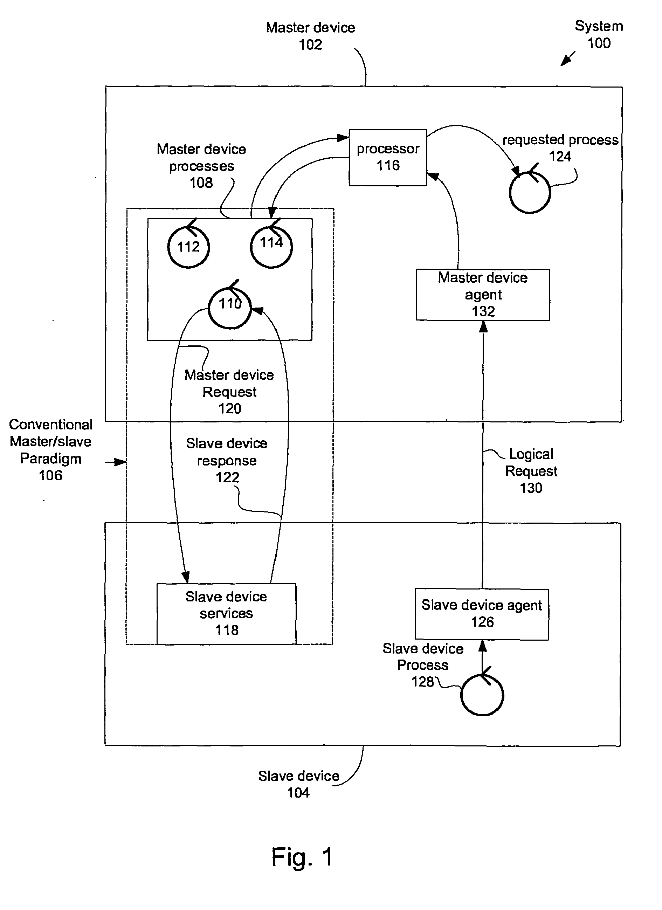

Embodiments of the invention are discussed below with reference to Figures 1 -31. However, those skilled in the art will readily appreciate that the detailed description given herein with respect to these figures is for explanatory purposes as the invention extends beyond these limited embodiments. It should be noted that it is contemplated that the invention can be used for any type of local data storage devices that can include non- volatile memory such as Multi Media Card (MMC) and Secure Digital Card (SD).

Fig. 1 shows a symbolic representation of master device/slave system 100 in accordance with an embodiment of the invention. By way of example, according to particular embodiments described herein, the slave device may take the form of a local storage device such as but not limited to any of the aforementioned local storage devices described above while the master device takes the form of a host device such as but not limited to any of the aforementioned host devices described above. It should be noted that master/slave is a model for a communication protocol where one device or process has unidirectional control over one or more other devices. In a conventional system, once a master/slave relationship between devices or processes is established, the direction of control is always from the master to the slaves. In some systems a master is elected from a group of eligible devices with the other devices acting in the role of slaves. Accordingly, master/slave system 100 (hereinafter referred to simply as system 100) includes master device 102 and slave device 104 that relate to each other, in part, by way of conventional master/slave paradigm 106. It should also be noted that slave device 104 does not utilize any interface to any device external to master device 102 other than that provided by master device 102.

Master device 102 can operate a number of master device processes 108. By master device process it is meant a process executed solely for the benefit of the master device. Such master device processes may include any number and type of processes such as, for example, a fetch instruction command useful in providing master device 102 with an executable instruction. Master device processes 108 can include master device processes 110, 112, and 114 each of which may be executed by processing unit 116. Any of the processes 110, 112 or 114 can request service from slave device services 118. Process 110, for example, can request service from slave device service 118 by generating master device request 120. Slave device service 118 may respond to master device request 120 with slave service response 122. For example, master device request 120 may take the form of a READ command and requested slave service response 122 may take the form of DATA. However, within the confines of a conventional master/slave paradigm 106, slave device 104 may not prompt nor in any manner cause master device 102 to execute any process outside of master device processes 108. In other words, within the context of conventional master/slave paradigm 106, only master device 102 may execute at least one of the master device processes 108.

However, the invention circumvents the conventional master/slave paradigm 106 by allowing slave device 104 to prompt processor 116 to execute requested process 124 for the benefit of slave device 102. In this way, requested process 124 can be executed by processor 116 and yet may be totally independent of and unrelated to any of the master device processes 108. Slave device 104 may include slave device agent 126 that can associate slave device process 128 with slave device logical request 130. Master device 102 may include master device agent 132 in communication with processor 116 and slave device 104 by way of slave device logical request 130. In this way, master device agent 132 can use slave device logical request 130 to prompt processor 116 to execute requested slave device process 124. In this way, a logical request generated by a slave device can be converted into a master device provided physical response unrelated to and independent of any master device initiated process.

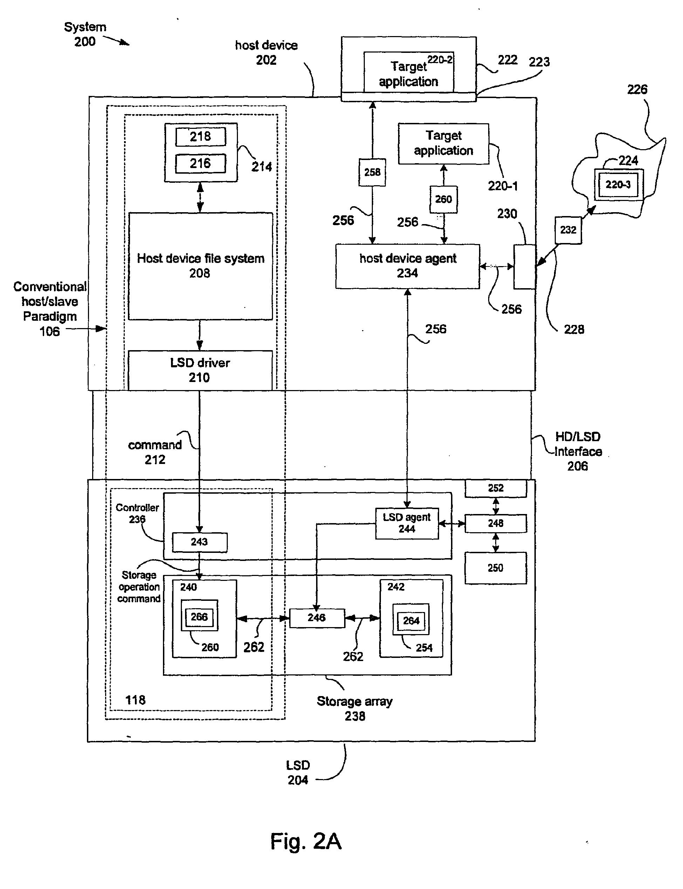

Fig. 2A shows a computing system 200 in accordance with an embodiment of the invention. System 200 can include slave device 104 that can take the form of local storage device (LSD) 204. LSD 204 can take the form of removable memory devices such as a memory card having a relatively small form factor and can be used to store digital data for electronics products such as cameras, hand-held or notebook computers, network cards, network appliances, set-top boxes, hand-held or other small audio players/recorders (e.g., MP3 devices), and medical monitors. Examples of a memory card include PC Card (formerly PCMCIA device), Flash card (e.g., Compact Flash Type I and II), Secure Digital (SD) card, Multimedia card (MMC), ATA card (e.g., Compact Flash card), memory stick, SmartMedia card. In addition, LSD 204 can take the form of non-removable memory devices such as SD compatible iNAND™ embedded Flash drive manufactured by SanDisk Corporation of Milpitas CA.

LSD 204 can communicate with master device 102 in the form of host device (HD) 202 by way of HD/LSD interface 206. It should be noted that HD/LSD 206 can be configured as a mechanical entity (such as a socket or interconnecting bus) into which HD 202 and LSD 204 can mechanically connect. In some embodiments, HD/LSD 206 can take the form of a wireless interface. Since HD 202 is a master device, HD 202 includes a processor. However, for the sake of clarity, the processor included in HD 202 is neither shown nor mentioned further in this discussion but is, nonetheless, presumed to be present. LSD 204 can be physically connected exclusively to HD 202 and therefore cannot access or otherwise communicate with circuits and/or applications external to computing system 200 without intervention by HD 202. Typically, LSD 204 does not utilize any interface to a device external to HD 202 other than that interface provided by the HD 202.

HD 202 includes host device file system (HDFS) 208 in communication with LSD driver 210. In the described embodiment, HDFS 208 can issue LSD management command 212 to LSD driver 210. LSD driver 210 can, in turn, pass LSD management command 212 (appropriately formatted) to LSD 204 by way of HD/LSD interface 206. For example, LSD management command 212 can take the form of a block command in those cases where LSD 204 is configured to include a data storage array having logical block address (LBA) architecture. HD 202 can also include (internal) software application 214. By internal application it is meant that software application 214 can utilize HDFS 208 and LSD driver 210 to communicate with LSD 204. Such software applications can include host device operating system (HDOS) 216 and application 218 each of which typically resides in host device main memory (that can take the form of a hard disk drive, or HDD, as well as non-volatile memory such as FLASH memory).

In the described embodiment, software application 214 can utilize HDFS 208 and LSD driver 210 to communicate with LSD 204 and is therefore "visible" to HDFS 208. In contrast to application 214, however, external application 220 (referred to hereinafter as target application) does not utilize any communication path between target application 220 and either HDFS 208 and LSD driver 210 to communicate with LSD 204 and is therefore not "visible" to HDFS 208. In the described embodiment, target application 220 can reside in any number of locations and devices, either locally or remotely. Such locations and devices can include, for example, HD 202 (having local application 220-1), or any device external to HD 202 and LSD 204 but still within system 200 such as external device 222 (having local application 220-2). In the described embodiment, external device 222 can take the form of a second LSD 222 coupled by way of interface 223 to HD 202. Moreover, such locations and devices can also include device 224 (having remote application 220-3) that is external to system 200 included in network 226 in communication with HD 202 by way network link 228 at network interface 230. In this way, a command path using network link 228 can be established between external device 224 and HD 202 through which information 232 can pass.

HD 202 can communicate with network 226 by way of network interface 230. In the described embodiment network interface 230 facilitates communication between HD 202 and network 226 by way of network link 228. For example if network 226 is an IP protocol type network, then network interface 230 can establish an IP protocol based network link 228 (such as a URL) between, for example, application 218 and any network device (ND) 224 included in network 226. It should be noted that network interface 230 can be physically located anywhere deemed appropriate. For example, network interface 230 can be incorporated into HD 202. However, network interface 230 can also be located in any physical location not included in HD 202 (or system 200) but still be utilized by HD 202 to establish the appropriate network link 228 with network 226. Network interface 230 is therefore not limited to being physically incorporated within or in close proximity to HD 202.

Master device agent 132 can take the form of host device agent 234 that provides in addition to the functions described above with regards to master device agent 132, at least a bridging functionality between storage services provided by LSD 204 and any available external resources. In the described implementation, host device agent 234 can be used to identify a LSD logical request by any means appropriate (such as polling or interrupts described below in more detail). Moreover, host device agent 234 can be configured to route and/or maintain a communication path to/from a target application once established by same. Furthermore, host device agent 234 can be application neutral so as to serve any type of target application.

LSD 204 can include controller 236 and mass storage array 238 having first storage array 240 and second storage array 242. It should be noted that storage array 238 can be formed of an array of memory cells (such as FLASH). In this particular case, even though mass storage array 238 can be presumed to be an array of FLASH memory cells, the invention is not limited to only FLASH type memory cells since it is contemplated that the invention can be used with any appropriate type of memory cell. Controller 236 includes file manager 243 that can manage first storage array 240 within host/LSD paradigm 106 (i.e., acting at the behest of HDFS 208). In a particularly useful arrangement, first storage area 240 can be a LBA based mass storage array. In this way, first storage array 240 is compatible with legacy installed base. Accordingly, the location of blocks of data stored in first storage area 240 can be specified using logical block addressing (LBA) where each block can be, for example, on the order of 512 or 1024 bytes each. In this way, first storage area 240 can be fully backward compatible with any contemplated legacy mass storage architectures (i.e. able to work in conjunction with legacy hosts) and more specifically LBA type systems. In particular, LSD 204 (in particular, first storage area 240) can operate under standard LBA architecture using legacy interfaces, busses, and all associated protocols providing for full compatibility with installed base of legacy products.

Controller 236 can also include LSD agent 244 that can act as a bridge (described below) between first storage area 240 and second storage area 242 using interface 246. LSD agent 244 can also manage a network stack/interface 248 that provides a mechanism for internal LSD applications 250 to communicate with external devices and/or target applications using standard protocols (such as Internet Protocol, or IP) and any available network resources by way of LSD interface 252. In particular, LSD 204 can translate any network communication (such as LSD logical request 130) into a standard format (such as physical bus-based format) so as to enable host device agent 234 to execute instructions (such as a message fetch) in a manner appropriate to an LBA based implementation of HD/LSD interface 206. In this way, any fetched message, for example, can be successfully conveyed over network link 228 created between host device agent 234 and remote application 220-3 (or a local communication path between local applications 220-1 or 220-2 and LSD 204). In this regard, network stack/interface 248 can be considered to be part of LSD agent 244. LSD agent 244 also can provide authentication and security services to LSD application 250 as well as manage any incoming service requests.

Either the first storage area 240 or second storage area 242 (or both) can be partitioned into separate internal regions. These partitioned regions can each be acted upon so that they can interact with each other and/or circuits and/or software applications external to LSD 204 in any appropriate manner. Such external circuitry can include for example, HD 202 (that includes all components therein, such as host file system 208), LSD 222, or any of a number of external devices included in network 226 such as ND 224.

Second storage area 242 can be partitioned to include region 254. In the described embodiment, region 254 can be configured to be "invisible" to HDFS 208 and as such can be designated as covert storage area (CSA) 254. In this way, any data content or changes to data content of CSA 254 cannot be detected by HDFS 208 (unless notified of such). However, HDFS 208 can be notified of any such data content or data content changes. For example, as described in more detail below, any circuit or software application not in communication with HDFS 208 (such as remote application 220-3 residing in ND 224, local application 220-1 in HD 202, and local application 220-2 in LSD 222), can prompt HD 202 to establish communication path 256 between itself and CSA 254 without being visible by HDFS 208. Conversely, LSD 204 can prompt HD 202 to establish communication path 256 between LSD 204 and any designated application 220. Once established, however, information (such as information 232, information 258, and information 260) can be passed without further intervention by HD 202 (except for any intervention related to the passing of data, such as data packet routing) and also being invisible to HDFS 208. In some cases, however, CSA 254 can provide notification to HDFS 208 of any such changes.

First storage area 240 can be partitioned to include region 260. In the described embodiment, region 260 can be fully accessible to HDFS 208 or any other appropriate external circuit so long as the communication is mediated by HDFS 208 (using, for example, LBA based commands as described in some detail above in some embodiments). Therefore, region 260 can be designated as host storage area (HSA) 260 in keeping with the fact that host device file system 208 manages HSA 260. In one aspect of the invention, CSA 254 and HSA 260 can communicate with each other by way of interface 246 that is independent of HDFS 208. In the described embodiment, as part of LSD agent 244, interface 246 can bridge first storage area 240 and second storage area 242. LSD agent 244 can include an internal file management system (e.g. LSD FS) that can read, for example, a file allocation table (FAT) managed by HDFS 208. LSD agent 244 can also write to/from CSA 254 to HAS 260 using, for example, a placeholder file having dummy content. In this way, CSA 254 and HSA 260 can communicate with each other over communication path 262 unseen by HDFS 208. In some cases, all (or only portions) of CSA 254 and/or HSA 260 can be designated as protected portions 264 and 266, respectively. By protected it is meant that HDFS 208 can not gain access to these protected regions unless authorized. Such authorization can be provided by a device external to computing system 200 such as, for example, an authorization server. As described above, LSD 204 can prompt HD 202 to execute requested process 124 for the benefit of LSD 204. It should be noted that even in those cases where a host command (e.g. read/write) triggers the generation of LSD logical request 130, LSD logical request 130 does not serve the host command.

In this way, requested process 124 can be totally independent of and unrelated to any of the host device processes 108. In particular, LSD 204 can prompt HD 202 to, for example, establish network link 228 and/or establish communication path 256 to either local applications 220-1 and/or 220-2 all without being visible to HDFS 208. However, once requested process 124 has been executed (i.e., the appropriate communication path established, for example) any further intervention by HD 202 is unnecessary (except for any routing or other housekeeping functions). HD 202 can be prompted by LSD 204 to execute LSD logical request 130 in a number of ways.

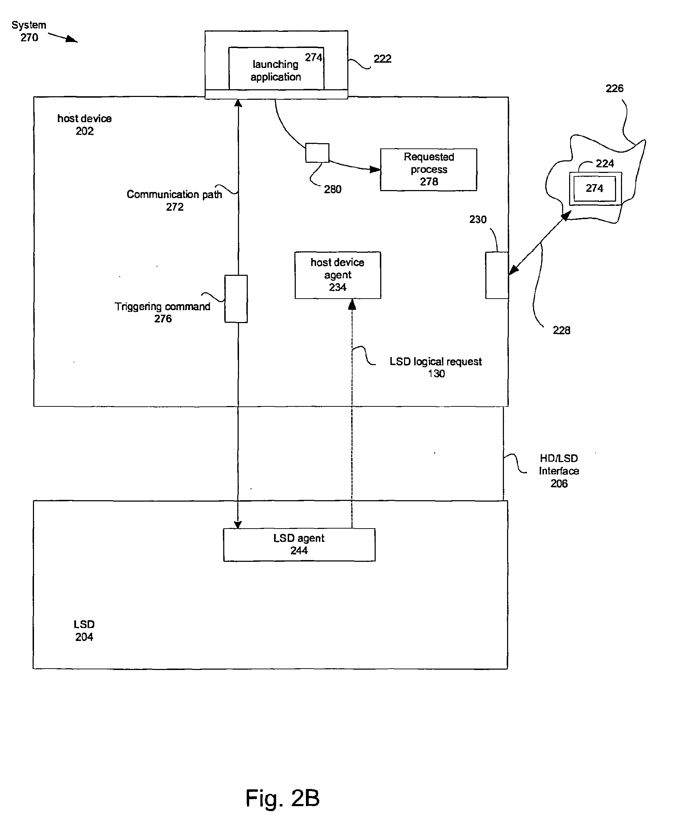

In some cases it can be desirable for LSD 204 to indirectly prompt HD 202 to execute a requested process. By indirect it is meant that LSD 204 uses an intermediary agent separate and distinct from HD agent 234 to prompt HD 202 to execute the requested process. Indirect prompting of a requested process can be illustrated with reference to computing system 270 of Fig. 2B. As shown, agent 244 in LSD 204 can prompt HD 202 to establish communication path 272 between agent 244 and target application 274 (also referred to as a launching application) using LSD logical request 130. It should be noted that launching application 274 can be located locally or remotely. For example, agent 244 can reside in LSD 204 whereas launching application 274 can reside in ND 224 in which case HD 202 uses network interface 230 to establish communication path 272 (i.e., analogous to network link 228). Alternatively, launching agent 274 can reside in external device 222 or within HD 202 in which case communication path 272 would be analogous to local communication path 256.

In any case, once communication path 272 has been established, agent 244 can logically interact with launching application 274 over communication path 272 without further intervention by HD 202 (except to maintain communication path 272). As part of this logical interaction, agent 244 can pass triggering command 276 to launching application 274. Launching application 274 can respond to triggering command 276 by prompting HD 202 to execute requested process 278 by sending command 280. HD 202 can then execute requested process 278. Requested process 278 can point back to agent 244. In this way, agent 244 and requested process 278 can logically interact.

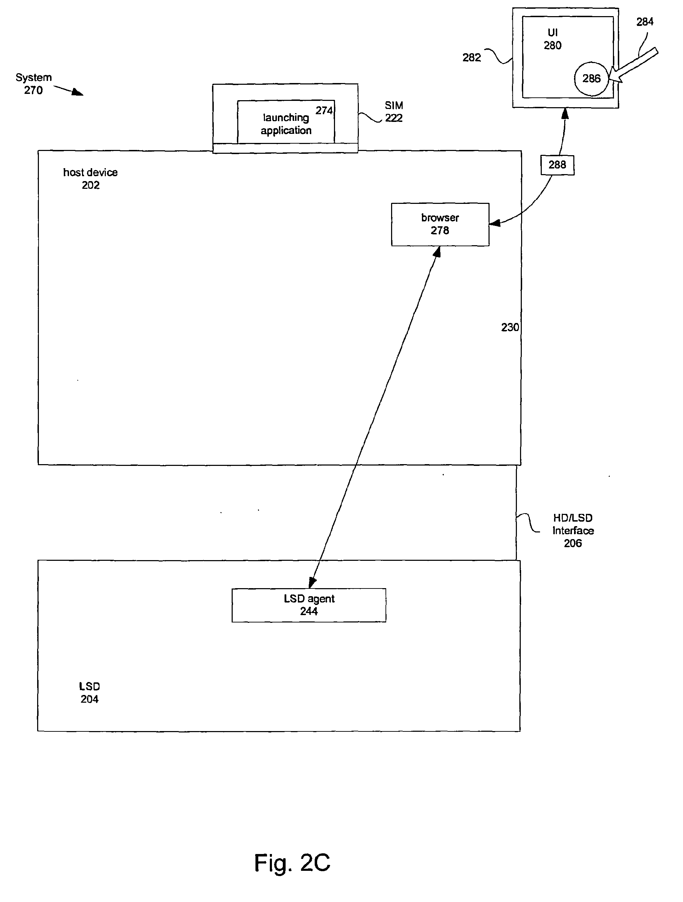

A particularly useful embodiment of this aspect of the invention is realized in those situations where it would be desirable for LSD 204 to logically interact with a user. A particular implementation of this embodiment is shown in Fig. 2C where launching application 274 can reside in external device 222 (it should be noted, however, that as described above, launching application 274 can reside remotely or locally). In this example, external device 222 can take the form of a Subscriber Identity Module (SIM) card 222. As well known in the art SIM card 222 can be used for mobile cellular telephony devices such as mobile computers and mobile phones. A SIM card can securely store the service subscriber key (IMSI) used to identify a subscriber. Moreover, the SIM card allows a user to change phones (or other broadband communication device) while conserving its subscription by simply removing the SIM card from one mobile phone and inserting it into another mobile phone or broadband telephony device. In this example, SIM card 222 is compliant with the SIM Application Toolkit (STK) set of commands that allows SIM card 222 to proactively launch a process on HD 202 (which can take the form of a cell phone, for example). The STK set of commands includes instructions programmed into the SIM card which define how the SIM card should interact directly with the outside world and initiates commands independently of the handset and the network. This enables the SIM card to build up an interactive exchange between a network application and an end user and access or control access to the network. The SIM card also gives commands to the handset, such as display menu and asks for user input.

Accordingly, one approach that LSD 102 can use to establish a direct communication path and therefore interact with an end user can be implemented as follows. Agent 244 can prompt HD 202 to establish communication path 272 to SIM card 222 arranged to proactively prompt HD 202 to execute a requested process on HD 202 using launching application 274. It should be noted that with an ISO interface-based SIM card, communication path 272 can be established using BIP (Bearer Independent Protocol) on the SIM-side. However, with a USB interface-based SIM card, communication path 272 can be established using the Ethernet Emulation (EEM) class on the SIM-side.

In this case, SIM card 222 can be STK compliant SIM card 222. However, as noted below, the invention is not limited to a particular communication technology or network type. In any case, agent 244 can trigger STK compliant SIM card 222 (using launching application 274) to prompt HD 202 to execute requested process 278 that can take, for example, the form of browser application 278. In the described embodiment, browser application 278 points to agent 244 (and LSD 204). Browser application 278 can cause user interface (UI) 280 to be displayed on display unit 282, for example. UI 280 can receive user input 284 at icon 286. In this way, UI 280 and agent 244 can logically interact thereby providing LSD 204 direct access to UI 280 and a user that provides user input 284. In some cases, it may be necessary for SIM 222 to act as intermediary between browser 278 and LSD 204. In any case, LSD 204 and UI 289 can logically interact without intervention by HD 202 (except that HD 202 executes browser 278 and provides the appropriate housekeeping duties with regards to maintaining the various communication paths).

For example, UI 280 can receive user input 284. User input 284 can be processed as, for example, user selection event 288 by browser application 278. Since browser application 278 can point to agent 244, agent 244 can, as part of the logical interaction between browser application 278 and agent 244, receive user selection event 288 without intervention by HD 202 (except that HD 202 maintains the various communication paths and executes browser application 278). In much the same way, agent 244 can pass information to a user using UI 280 or display unit 282 by way of the logical interaction. Such information can include, for example, current state of LSD 204, listings of selected stored content, etc.

It should be noted that depending upon the network and corresponding technology, the SIM card can be referred to in any number of ways. For example, in 3G type networks, the SIM card is referred to as USIM card. Therefore, reference would be made for USIM Application Toolkit, or USAT. In any case, the invention can be used in any network and corresponding technology (STK, USAT, etc.).

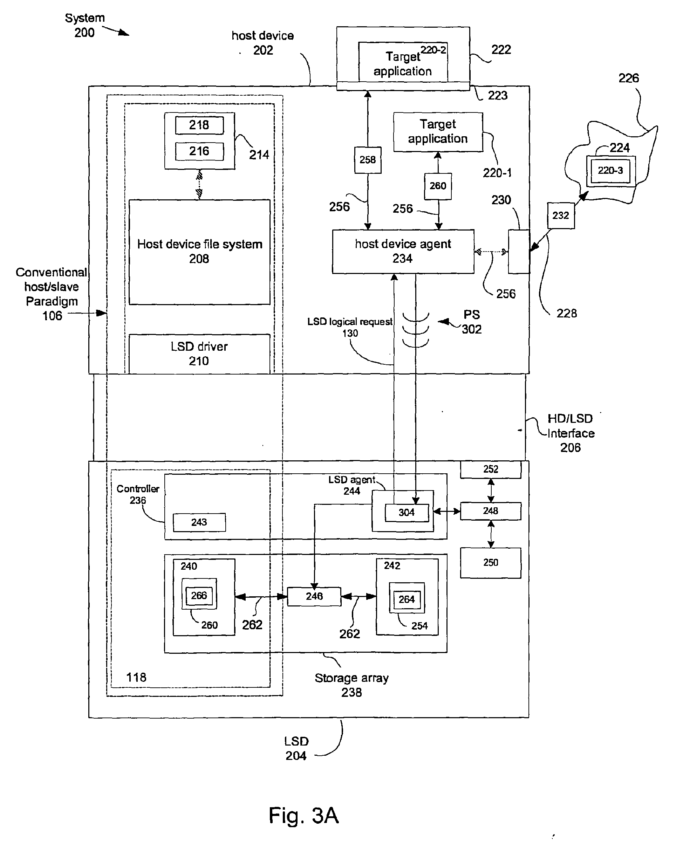

Fig. 3A illustrates a polling scheme 300 in accordance with an embodiment of the invention. HD 202 can poll LSD 204 by sending polling signal (PS) 302 to LSD 204 that is intercepted by LSD agent 244. In the described embodiment, LSD agent 244 can include logical request generator 304 that responds to PS 302 by generating LSD logical request 130. Logical request generator 304 subsequently forwards LSD logical request back to host device agent 234. It should be noted that the described polling process is not conditional upon the need or expectation of HD 202 for a specific response from LSD 204. In this way, LSD 204 can at any time prompt HD 204 to execute requested process 124 by simply responding to polling signal 302 with LSD logical request 130. In the described embodiment, LSD logical request 130 includes command information that can prompt HD 202 execute LSD requested process 124. It should be noted that command information can include data such as a command code indicative of a particular operation to be completed by HD 202 (such as setting up command path 256).

The command information can also include device information such as target device identification (ID), target device location (IP address, for example), etc. In some cases, however, neither LSD 204 nor HD 202 has sufficient information at hand to complete a required task. For example, LSD 204 can provide command information indicating a particular operation but lacks a particular target device ID or target device location. In these situations, it may be possible to utilize a discovery server computer that can be queried by LSD 204 by way of network link 238, for example, in order to obtain the missing yet necessary information. For example, LSD 204 can initiate a storage operation on a target storage device simply by responding to PS 302 at any time with LSD logical request 130. LSD logical request 130 can include a command with instructions for HD 202 to establish a command path between LSD 204 and the target storage device. It should be noted that the target storage device can be in any location so long as HD 202 can establish an appropriate command path For example, if the target storage device is ND 224 in network 226, then HD 202 can respond to LSD logical request 130 by establishing network link 228 between network interface 230 and the ND 224.

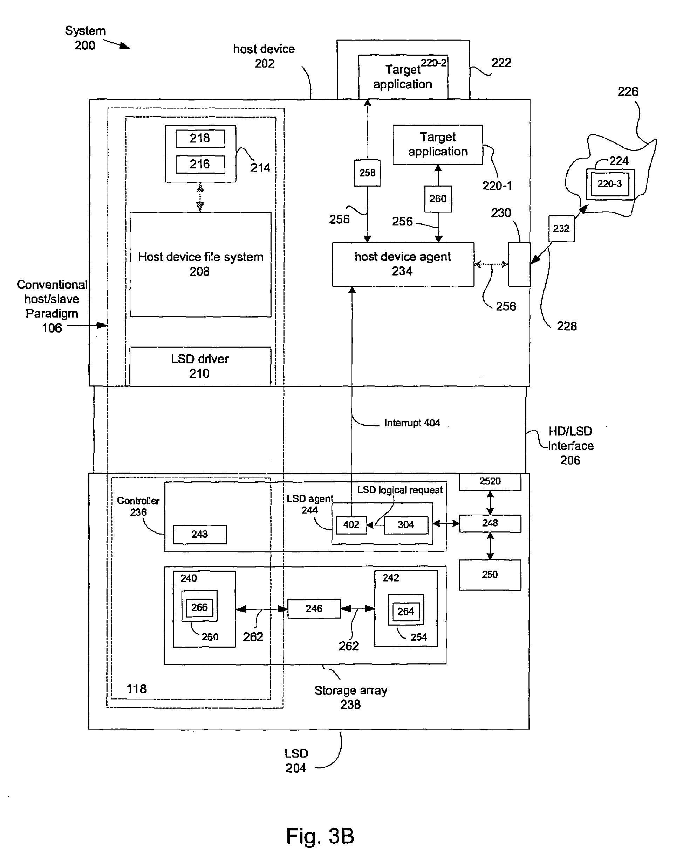

Another mechanism by which LSD 204 can prompt HD 202 to execute requested process 124 is described in terms of a LSD generated interrupt illustrated in Fig. 3B. LSD 204 can prompt HD 202 to execute requested process 124 by using LSD interrupt associator 402 to associate LSD logical request 130 received from LSD logical request generator 304 with LSD generated interrupt 404. Once LSD logical request 130 has been associated with LSD interrupt 404, LSD 204 raises interrupt 404 to the attention of HD 202. HD 202 responds to logical request 130 associated with LSD interrupt 404 by executing requested process 124.

LSD 204 can also direct HD 202 to establish communication with other local storage device(s) such as second LSD 222. For example, computing system 200 can be a portable media player (in which case LSD 204 stores various digital media files such as audio files in the form of MP3) that can be coupled to a personal computer in order to, for example, synchronize media files between second LSD 222 and LSD 204. In this example, LSD 204 can initiate an appropriate synchronization operation whereby data content between both LSD 222 and LSD 204 are compared and updated invisible to HDFS 208.

In another example, LSD 204 can perform any number of operations, generate a result and based upon that result, generate an associated logical request. The logical request can then be used by LSD 204 to prompt HD 204 to execute an appropriate LSD process. For example, LSD 204 can perform a detection of a set of LSD parameters operation. In the described embodiment, the set of LSD parameters detected can include parameter such as a data content back-up parameter, a data content parameter (such as a file size, a file type, a file name, and a file keyword), a logical storage parameter (such as a remaining capacity, and a LSD IP address, if appropriate), a physical storage parameter (such as a wear level, a number of bad blocks, a number of bit flips), a violation of rules parameter, and a host device IP address. Once LSD 204 has completed the detection operation, a detection operation result is generated. It should be noted that in some cases, the result generated is a NULL result in that the detected parameters fall within a set of rules governing the operation of the LSD. However, in other cases, the result generated can be associated with LSD logical request 130 as detection logical request 130 that can prompt HD 202 to establish a communication path to a target application. Such target applications can include local applications 220-1, 220-2 or remote application 220-3. It should be noted that in the case of local applications 220-1 and 220-2, the communication path is referred to as a local communication path. Once such a communication path has been established, LSD 204 and target application 220 can logically interact in order to perform a requested detection process. It should be noted that once the communication path has been established, no further intervention by HD 202 is required except for maintaining the communication path and any other housekeeping duties. The requested detection process can include a content backup process, a content sharing process, an event notification process, a request for a remote instruction process, a request for usage / access right process, a registration to a remote server process.

In one embodiment, LSD 204 associates the detection logical request with the polling by the host device. In other embodiments, however, LSD 204 associates the detection logical request with a LSD interrupt and raises the LSD interrupt to the attention of HD 202. In either case, HD 202 can be prompted to execute the appropriate requested detection process.

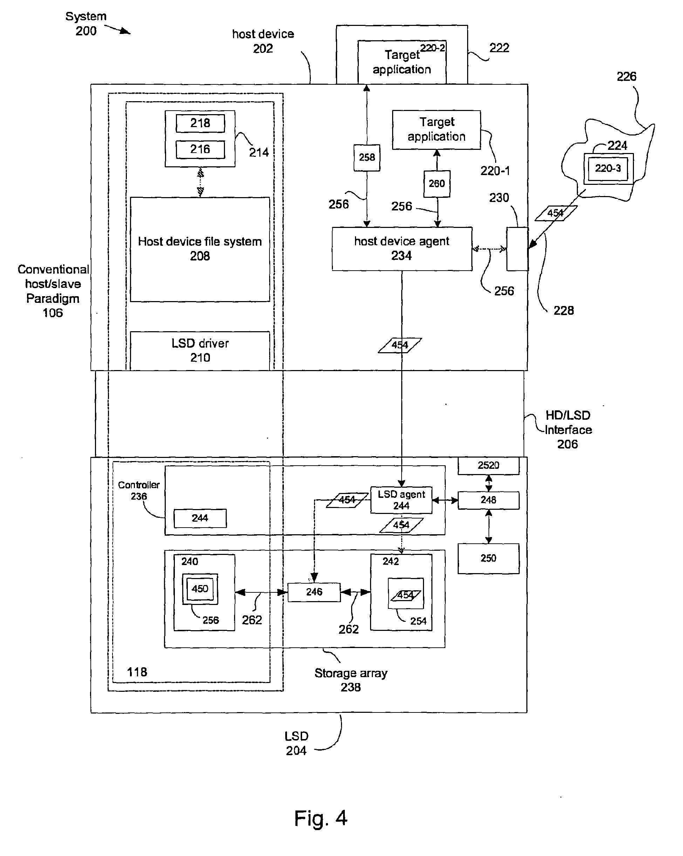

It should be noted that the invention is essentially symmetric in that any circuit or software application external to LSD 204 and/or system 200 can target LSD 204 using HD 204 as a mechanism to establish a communication path between the requesting device and target device, LSD 204. In this way, LSD 204 can respond to requests (such as provide current status information, current capacity, etc.) that originate from external circuits or external software applications. For example, Fig. 4 illustrates a situation whereby remote application 220-3 compels first storage area 240 to perform any of a number of storage operations independent of HDFS 208. For example, external application 220-3 can write data to storage area 240 by writing data to a preestablished proxy file 450 (also referred to as a placeholder file) that is visible and therefore manageable by host device file system (HDFS) 208. However, any data content included in placeholder file 450 can be considered "dummy" data in that placeholder file 450 is merely a part of the mechanism whereby remote application 220-3 can access/change data within proxy file without being "seen" by HDFS 208 (unless notified).

For example, external application 220-3 can write data 454 to placeholder file 450 without intervention of HDFS 208 by forwarding data 454 to be written to placeholder file 450. In one implementation, data 454 can be sent directly to placeholder file 450 or use CSA 254 as a cache to buffer selected portions of data 454. When CSA 254 is used to cache data 454, data 454 is passed to placeholder file 450 by way of communication path 256 without intervention by HD 202 (except for the establishing communication path 256). In this way, remote application 220-3 (or any external application 220 for that matter) can write data to placeholder file 450 or can stream data 454 from placeholder file 450 without intervention by HDFS 208.

For example, LSD 204 can perform a detection operation that determines that the available storage capacity of first storage array 240 is less than a predetermined amount. Based upon that result, LSD logical request generator 340 can generate a LSD detection logical request 130 that prompts HD 202 to establish communication path 228 between LSD 204 and remote application 220-3. Once communication path 228 has been established, HD 202 can have no intervention since HD 202 is now assuming a role commensurate to a modem, router, or other such device used to route data packets, for example. Once remote application 220-3 and LSD 204 are linked by way of communication path 228, LSD 204 and remote application 220-3 can logically interact over communication path 228. For example, LSD 204 can forward results of the detection operation to remote application 220-3. Remote application 220-3 can respond by pushing (writing) data 454 (in the form of a user notification, advertisement, etc.) to placeholder file 452. Once data 454 is stored in placeholder file 452, data 454 is now visible to HDFS 208 and can be processed by HD 202 in any number of ways. For example, data 454 can be used by HD 204 to display a notification that additional storage capacity is required and even suggest a product to purchase and where it can be purchased and for what price.

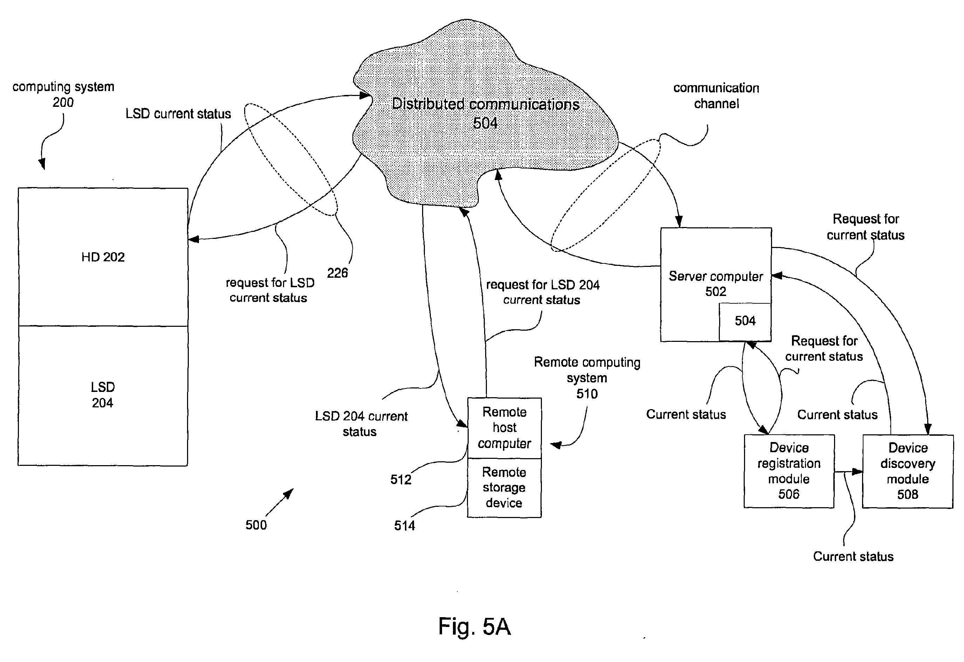

Fig. 5A shows a more detailed view of network 500 in accordance with an embodiment of the invention. In particular, network 500 is one embodiment of network 226 shown in Fig. 3. In particular, network 500 is shown to include server computer 502 coupled to computing system 200 by way of distributed command paths. Such distributed command paths can include wireless communications (WiFi, Bluetooth, etc.) as well as wired communications, etc. In the described embodiment, server computer 502 includes server component 504 that provides, in part, some clear and well defined interfaces, using, for example, standard Web technology e.g. HTTP/SOAP-based Web Services to developers and other users. In the described embodiment, server component 504 that can provide at least authorization and authentication services whenever a secure channel between a remote application and LSD 204, for example, is required. In this way, an efficient guard against possible network-originated attacks, spywares, malwares etc. can be provided. Furthermore, privacy protection, in order to ensure the end user content usage cannot be tracked by unauthorized third party, optimized communication protocol with the storage device possibly using some compression techniques and the server computer can also include broadcast and / or multicast capabilities. Device registration module 506 and/or discovery services module 508 can be included in or coupled to server computer 502.

Device registration module 506 and discovery services module 508 provide, respectively, a registration service and discovery service. By registration service it is meant that any device included in, added to, or removed from network 226 that is registered to device registration module 506 has associated registration data updated consistent with a current status of the corresponding device. Such registration data can include device type, device location (IP address if the network is an IP protocol based network), etc.

In one embodiment, registration data associated with a device (or software application) can be updated by registration module 506 in a number of different ways. One approach relies upon the registration module 506 being notified that a device status has changed (i.e., the device has been added, removed, or has moved location within network 226, etc.). In some aspects of the invention, in order to preserve processing resources as well as network bandwidth, not all changes are considered of sufficient interest to notify registration module 506. However, in those situations when a device status change has occurred and notice is warranted, registration module 506 can be notified of the status change by registration module 506 continually pinging all devices included in network 226 and requesting each device return current status information. Any status information that has changed with regards to a previous device status and that has been determined to represent a notifiable status change will invoke a notice event at device registration module 506.

In response to the notice event, registration module 506 can request that the device having the changed status forward current device status information to registration module 506. Once received by registration module 506, the status information associated with the device can be updated at registration module 506 and forwarded to discovery server 508. Another approach can have device registration module 506 taking on a more passive approach in that each device can forward its particular current status to device registration module 506 whenever a change in status has occurred. Again, in order to preserve computing resources and network bandwidth some aspects of the invention only provide for reporting only certain status changes and not all status changes.

In any case, once current status information has been received and appropriately processed, registration module 506 can forward the current status information to discovery services module 508 where it can be stored to provide subsequent discovery services to requesting devices and or software application. Such information can include any information related to any device included in network 324 in order to facilitate, for example, establishing a command path between the requesting device (including software applications, if any) and target device or target applications.

Still referring to Fig. 5A., if LSD 222 has not been previously coupled with HD 204 but at some point LSD 222 is coupled to HD 204 by inserting LSD 204 into interface 223 (for example, inserting a Secure Digital (SD) card into a portable computer, digital camera in communication with a network, etc.) then LSD 222 can, in one aspect of the invention, notify device registration service 506 that it has joined network 226. In yet another aspect of the invention, however, device registration service 506 can actively determine that LSD 222 has entered network 226 by, for example, pinging computing system 200 and determining that a notifiable change has occurred.

In the case where LSD 222 actively notifies device registration service 506 of a change in status (which in this case is that LSD 222 has been added to network 226), LSD 222 can request HD 202 to establish a command path between LSD 222 and device registration service 506 that includes network link 228 from HD 202 to network 226 and command path 510 from network 226 to registration service 506, using at least one of the mechanisms described above. It should be noted that if LSD 204 does not know the location of device registration service 506, then either HD 202 will provide the location as a default location or network services will automatically direct status changes to a predefined location.

Once communication between LSD 204 and registration service has been established, then device registration service 506 can update (either passively or actively) the current status of LSD 222 (where the current status of LSD 222 is either pushed by LSD 222 or pulled by registration server 506). Once updated, device registration service 506 can then forward the current status of LSD 222 to discovery services module 508 where it is stored for subsequent retrieval whenever a remote device targets LSD 222. It should be noted that registration information can include any relevant information related to the device. Such relevant information (in the case of a data storage device) can include logical storage device parameters (remaining available storage capacity, device IP address, available storage applications on the device, firmware version and characteristics, etc.) that are more of a fixed characteristic of the device. Such information can also include more transitory information such as currently available data storage capacity, quality of stored data, location of device, etc. as well as data content parameters that can include a file size, a file type, a file name, and a file keyword.

Once discovery service 508 has been updated, discovery service 508 can provide requested discovery information to any requesting device (or software application) about any target device (or target software application) having data stored therein. For example, remote computing device 510 having remote host device 512 coupled with remote storage device 514, can remotely invoke a storage operation on a target device such as LSD 204 using discovery service 508 by first establishing a command path between remote computing device 510 and LSD 204. The command path can be established by remote computing device 510 sending a discovery request 516 to discovery service 508 requesting discovery information for target device LSD 204. Such discovery information can include target device location information, target device current operating status information, target device current parametric information, etc. In response to the discovery request, discovery service 508 can forward a discovery server response 518 that includes the appropriate target device discovery information back to the requesting device (i.e., remote computing device 510).

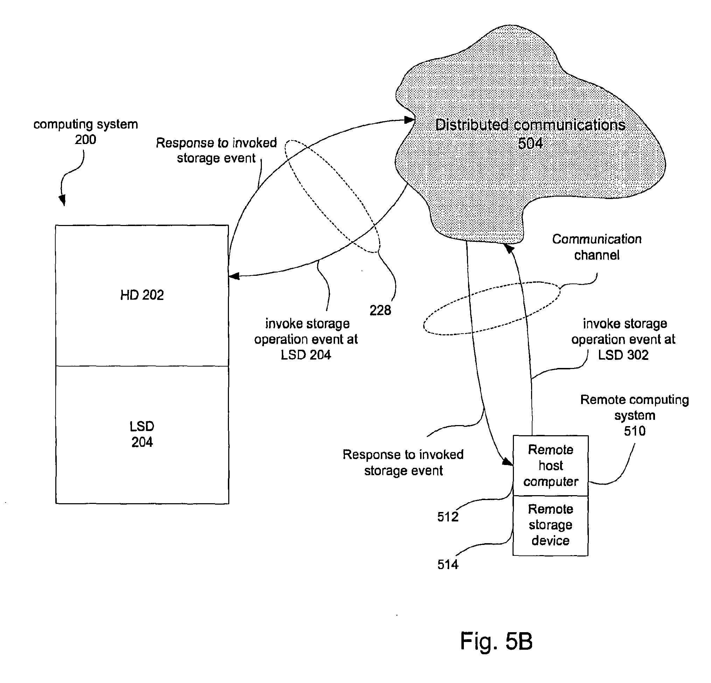

Once remote computing device 510 has received the appropriate target discovery information regarding target device LSD 204, then as shown in Fig. 5B, remote computing device 510 can establish a command path between target device LSD 204 (using HD 104 as a conduit) that includes at least network link 228. Once the command path has been established between target device LSD 204 and remote computing device 510, then remote computing device 510 can remotely invoke any number and types of storage operations on target device LSD 204. Such operations can include, for example, reading, writing, and/or erasing data.

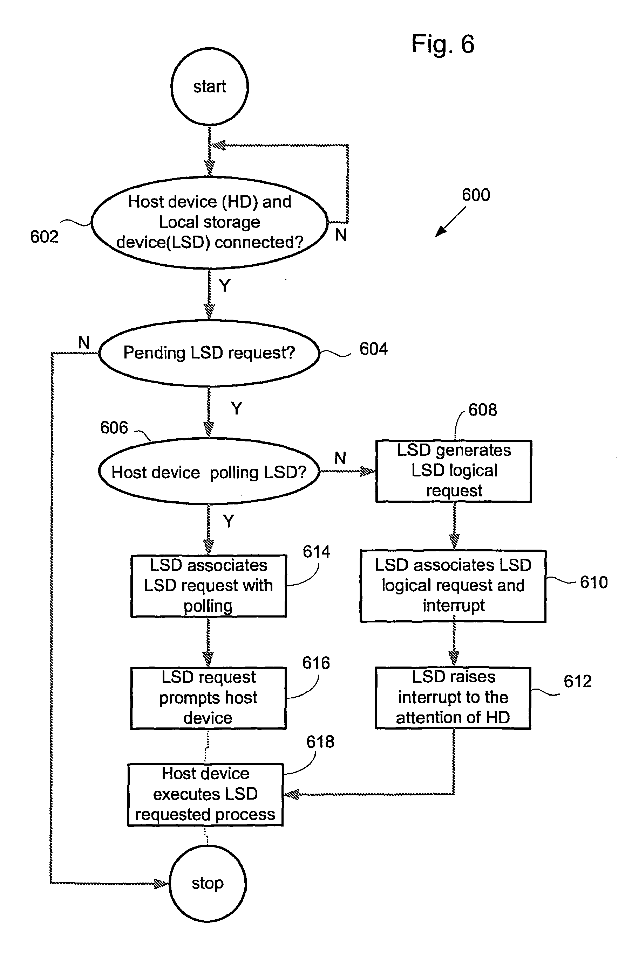

Fig. 6 shows a flowchart detailing a process 600 in accordance with an embodiment of the invention. Process 600 begins at 602 by determining if a host device is in communication with a local storage device. By communication it is meant that the host device and local storage device have a capable command path established between them. By capable communication, it is meant that there is a physical connection established, a wireless connection established, or a logical connection established between the host device and the local storage device over which information can be passed. Once it has been determined that a capable communication path exists between the host device and the local storage device, then at 604 a determination is made if the local storage device has a pending LSD initiated event. By LSD initiated event it is meant an event unrelated to and independent of any host device or host device file system process. If at 604, it is determined that there is no pending LSD initiated event, then the process 600 ends, otherwise a 606 a determination is made whether or not the host device in continuously polling the local storage device. If the host device is not polling the local storage device, then the local storage device generates a LSD logical request at 608 that includes information related to the pending LSD initiated event and at 610 the local storage device throws up an interrupt flag associated with the LSD logical request. At 612, the host device responds to the interrupt flag.

Returning to 606, if the host device is continuously polling the local storage device, then at 614, the local storage device responds to the host device polling with an LSD polling response that includes information related to the pending LSD initiated event. At 616, the host device responds to the LSD polling response.

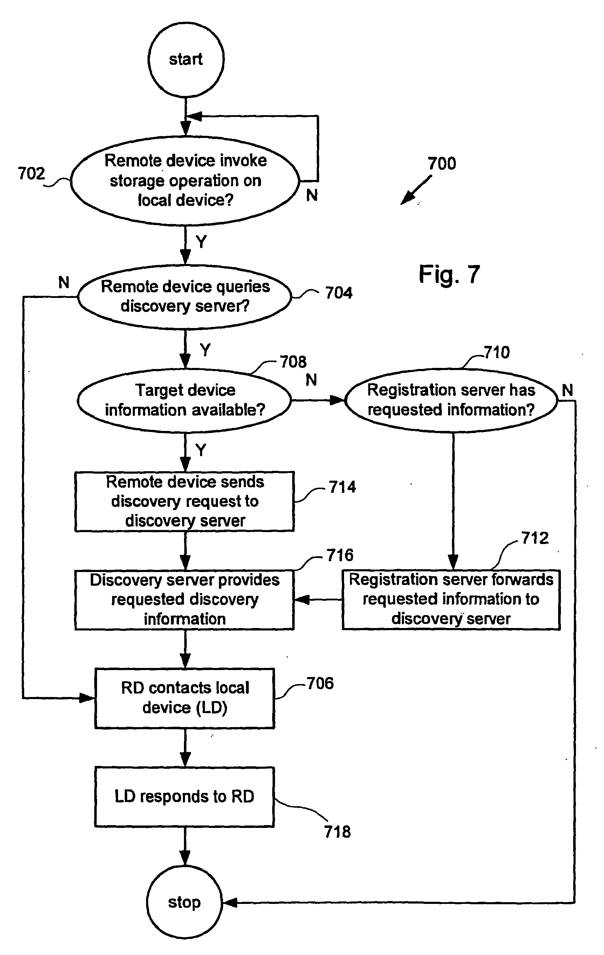

Fig. 7 illustrates a process 700 in accordance with an embodiment of the invention. Process 700 begins at 702 by determining if a remote device wants to invoke an operation on a local target device. If affirmative, then at 704 a determination is made if the remote device sends a query to the discovery server in order to obtain target device information. If the remote device has determined that it does not need to query the discovery server, than at 706 the remote device contacts the local device. On the other hand, if the remote device has determined that discovery information for the target device is needed, than at 708 a determination is made whether or not the discovery server has the target device discovery information. If it is determined that the discovery server does not have the requested target device discovery information, then at 710 a determination is made whether or not a registration server has the requested target device information. If it is determined that the registration server does not have the requested target device information, then process 700 ends. Otherwise, the registration server forwards the requested target device discovery information to the discovery server at 712. Returning back to 708, if the discovery server has determined that it has the requested target device discovery information, then at 714, the remote device sends a discovery information request to the discovery server and at 716 the discovery server provides the requested target device discovery information. At 706, the remote device contacts the target device and at in any case, at 718 the target device responds to the remote device.

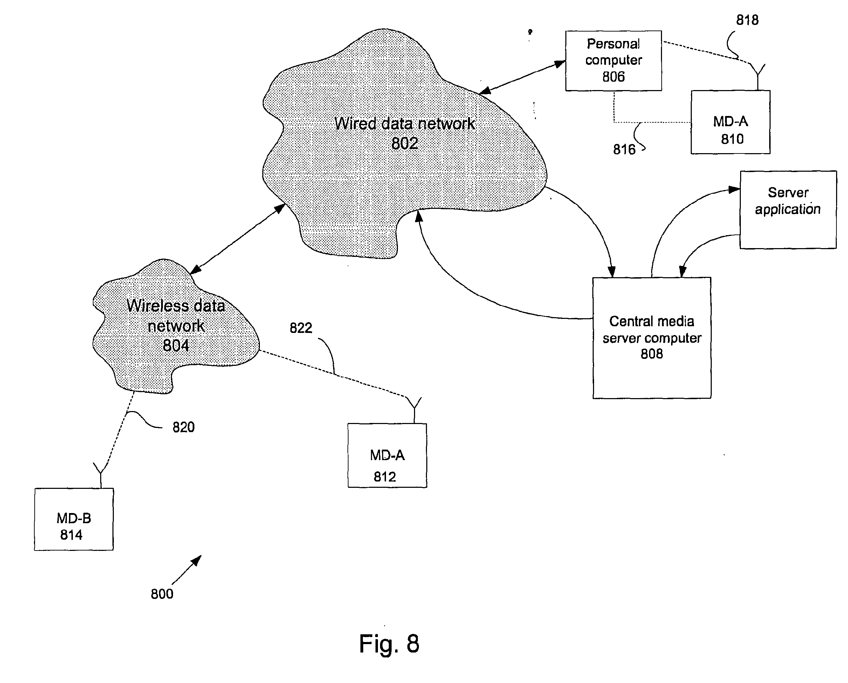

Fig. 8 provides a context of the invention where a media network 800 as a specific configuration of network 226 includes a number of media devices such as media players. In this example, computing system 200 can be a media player 100 arranged to store a number of digital media items (such as video, audio possibly as MP3 files, etc.). Network 800 can include distributed communications 802 configured as either or both a wired network 804 and a wireless network 806. In the described embodiment, wired data network 802 pertains to some portion of the World Wide Web. Personal computer 806 can couple to wired network 802 (which in this case is connected to computing system 100 by way of a USB cable at second interface). Wireless data network 804 can also couple to wired data network 802. Wireless data network 804 can include one or more wireless data networks, such as cellular networks, WiFi networks, WiMAX networks, etc.

Media network 800 includes central media server 808 that stores or has access to numerous media items. In addition, network 800 supports one or more additional computing systems 810 configured as network devices that can take the form of portable media devices such as portable media player 200, 810, 812 and 814 some of which can be configured as having only legacy mass storage while others can be configured as computing system 200 shown in Fig. 2. Any of the portable media devices 200, 810, 812 and 814 can communicate with personal computer 806 over wired link 816 or wireless link 818. As an example, wired link 816 can correspond to a cable (e.g., USB cable) that, if available, can interconnect portable media device 810 to personal computer 806. Wireless link 818 can be provided by a wireless capability, such as Bluetooth, infrared, etc. Typically, the portable media device 810 would be capable of communicating with personal computer 806 using either wired link 816, wireless link 816, or both.

Portable media device 814 can couple to the wireless data network 804 over a wireless link 820. Similarly, portable media device 812 can couple to wireless data network 804 over a wireless link 822. In this regard, portable media devices 814 and 812 can access central media server 808 via wireless data network 804. In addition, portable media devices 810, 812 and 814 can wirelessly access each other, thereby exchange media item data between portable media devices.

Computing system 200 can take the form of a media device that can pertain to portable media players such as MP3 players as well as wireless device such as mobile phones that can include LSD 204 and HD 202. These mobile devices can include a media management application on the host computer that operates on the mobile device. Given the portability of mobile devices, mobile devices are smaller and have fewer resources (e.g., storage capacity). Consequently, a media management application designed for use on a mobile device can offer less features and capabilities than would a counterpart media management application operating on a larger, more powerful computing device, e.g., a personal computer. Given that the mobile devices have wireless access to central media server 808, the mobile devices can interact with media server 808 to request and/or receive media item data (or other data). In this regard, a media management application operating on the mobile devices can communicate with the media server 808 to perform various tasks, including: navigating available media content at the server (such as navigation of a media store), receiving a periodic delivery of media content to media devices (such as a daily pushing of media item data from a server to a media device), etc.

The local storage device discussed herein may be compatible with any memory card format or protocol, such as a secured digital (SD) memory card format and protocol used for managing digital media such as audio, video, or picture files. The storage device may also be compatible with a multi media card (MMC) memory card format, a compact flash (CF) memory card format, a flash PC (e.g., ATA Flash) memory card format, a smart-media memory card format, or with any other industry standard specifications. One supplier of these memory cards is SanDisk Corporation of Milpitas, CA. The nonvolatile memory retains its memory or stored state even when power is removed. The storage device may also apply to other erasable programmable memory technologies, including but not-limited to electrically-erasable and programmable read-only memories (EEPROMs), EPROM, MRAM, FRAM ferroelectric and magnetic memories. Note that the storage device configuration does not depend on the type of removable memory, and may be implemented with any type of memory, whether it being a flash memory or another type of memory. The storage device may also be implemented with a one-time programmable (OTP) memory chip and/or with a 3 dimensional memory chip technology.

Host systems with which such memory cards are used include cellular telephones, personal computers, notebook computers, hand held computing devices, cameras, audio reproducing devices, and other electronic devices requiring removable data storage. Flash EEPROM systems are also utilized as bulk mass storage embedded in host systems. The storage device may be part of a local proxy system that may be implemented on PDAs (Personal Digital Assistants), mobile handsets, and other various electronic devices. A PDA is typically known as user-held computer systems implemented with various personal information management applications, such as an address book, a daily organizer, and electronic notepads, to name a few.

As described herein, a computing system can include a host device (HD) and a local storage device (LSD). The LSD can function concurrently as either as a mass storage device or as a network accessible device. In this way, a number of applications can be run by the computing system. Such applications can execute independently from each other and can also each independently manage a corresponding set of content stored on the LSD. It should be noted that managing content can include any number of operations performed by or on content stored on the LSD. Such operations can include, but are not limited to, reading data, writing data, erasing data, copying data, formatting data, and so on. One of the advantages presented by the invention is the ability of the LSD to inform one application of the content made available on the LSD by another one of the applications even though the applications have no relationship to each other. In this way, a synergy between the independent applications can be achieved providing a co-operative environment that can result in, for example, improved operation of the computing system, improved resource (i.e., memory, bandwidth, processing) allocation and use, and other factors.

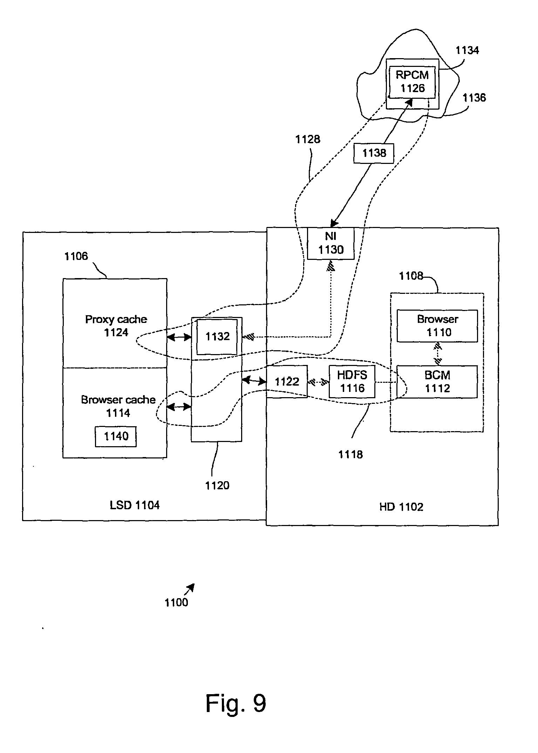

For example, Fig. 9 illustrates computing system 1100 in accordance with an embodiment of the invention. System 1100 includes host device (HD) 1102 in communication with LSD 1104 having memory array 1106. HD 1102 can be executing applications 1108. Applications 1108 can include internet applications such as browser application 1110 having browser cache manager BCM 1112 managing an associated local (browser) cache 1114 on LSD 1104. BCM 1112 can manage browser cache 1114 by way of HDFS 1116 using what can be referred to as mass storage path 1118 that can include memory controller 1120 and LSD driver 1122. LSD 1104 can include proxy cache 1124 managed by remote proxy cache manager (RPCM) 1126 by way of network path 1128 that includes network interface 1130. It should be noted, that network path 1128 can be established by HD 1102 at the prompting of LSD 1104 independent of HDFS 1116. Furthermore, once network path 1128 is established by HD 1102, there is no further intervention by HD 1102 except for any maintenance of network path 1128 (and any other "housekeeping" duties).

During operation, RPCM 1126 can push pre-fetched content 1138 directly to LSD 1104 in a pre-emptive manner. By pre-emptive manner, it is meant that pre-fetched content 1138 can be pushed to LSD 1104 prior to any actual request by BCM 1112 for content 1138 thereby obviating the need for an actual request to be sent to RPCM 1126 over network path 1128. In this way, network bandwidth can be preserved.

Clearly then BCM 1112 and RPCM 1126 are used differently. For example, BCM 1112 can act through mass storage path 1118 to locally cache content 1140 already requested by browser application 1110 into browser cache 1114 in LSD 1104. Meanwhile, RPCM 1126 typically performs functions in support of BCM 1112 such as content pre-fetching (i.e., retrieving content before that particular content is requested). However, BCM 1112 and RPCM 1126 are typically provided by different vendors, and therefore BCM 1112 and RPCM 1126 most likely have different caching policies. Moreover, since mass storage path 1118 and network path 1128 do not cross (i.e., communicate with) each other, BCM 1112 and RPCM 1126 can not function in a synchronized manner.

This lack of synchronicity is clearly sub-optimal in terms of overall performance of BCM 1112/RPCM 1126. For example, RPCM 1126 can be storing content already stored by BCM 1112 (and vice versa) thereby wasting precious memory, processing, and bandwidth resources. This waste of resources can be especially problematic in mobile environments where most or all resources can be at a premium. However, the invention provides for RPCM 1126 and BCM 1112 to cooperate in a fashion unavailable to conventionally arranged systems. For example, LSD 1104 can inform RPCM 1126 of the type and nature of browser content 1140 that BCM 1112 is caching to browser cache 1114. In this way, RPCM 1126 can, for example, automatically pre-fetch any pages corresponding to the links of those pages already cached in browser cache 1114 by BCM 1112. In addition, RPCM 1126 can avoid duplicating the effort required to cache content 1140 already stored in browser cache 1114, further reducing any unproductive use of valuable resources. Furthermore, RPCM 1126 can "reverse-engineer" the caching policy of the BCM 1112 thereby improving the ability of RPCM 1126 to predict BCM 1112 actions and thereby improve overall efficiency of the interaction of RPCM 1126 and BCM 1112 This improvement in efficiency can result in a substantial improvement in an end user's Internet experience.

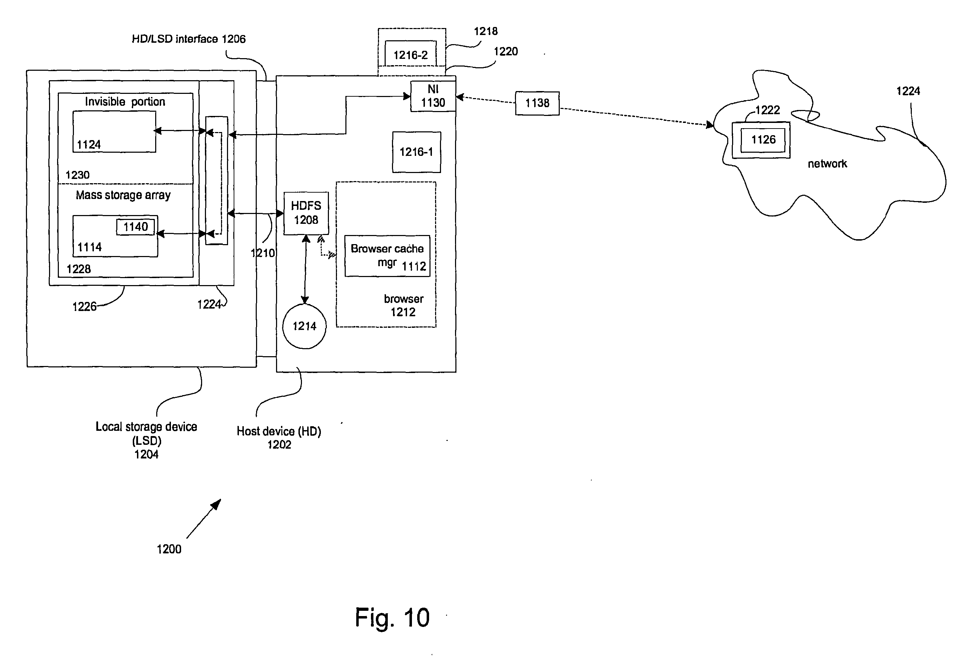

Fig. 10 shows a system 1200 illustrating a specific embodiment of system 100 shown in Fig. 9. System 1200 can include host device (HD) 1202 connected to or otherwise in communication with local storage device (LSD) 1204. HD 1202 and LSD 1204 can communicate with HD 1202 by way of HD/LSD interface 1206. LSD 1204 can take the form of removable memory devices such as a memory card having a relatively small form factor and can be used to store digital data for electronics products such as cameras, hand-held or notebook computers, network cards, network appliances, set-top boxes, hand-held or other small audio players/recorders (e.g., MP3 devices), and medical monitors. Examples of a memory card include PC Card (formerly PCMCIA device), Flash card (e.g., Compact Flash Type I and II), Secure Digital (SD) card, Multimedia card (MMC), ATA card (e.g., Compact Flash card), memory stick, SmartMedia card. In addition, LSD 1204 can take the form of nonremovable memory devices such as SD compatible iNAND™ embedded Flash drive manufactured by SanDisk Corporation of Milpitas CA.

It should be noted that HD/LSD interface 1206 can be configured as a mechanical entity (such as a socket or interconnecting bus) into which HD 1202 and LSD 1204 can mechanically connect. In some embodiments, HD/LSD 1206 can take the form of a wireless interface. HD 1202 includes a processor, however, for the sake of clarity, the processor included in HD 1202 is neither shown nor mentioned further in this discussion but is, nonetheless, presumed to be present. LSD 1204 can be physically connected exclusively to HD 1202 and therefore cannot access or otherwise communicate with circuits and/or applications external to system 1200 without intervention by HD 1202. Typically, LSD 1204 does not utilize any interface to a device external to HD 1202 other than that interface provided by the HD 1202.

HD 1202 includes host device file system (HDFS) 1208. HDFS 1208 can issue LSD management command 1210 that can be passed to LSD 1204 by way of LSD driver (not shown) and HD/LSD interface 1206. For example, LSD management command 1210 can take the form of a block command in those cases where LSD 1204 is configured to include a data storage area having logical block address (LBA) architecture. System 1200 can also have a number of applications resident on either LSD 1204 or HD 1202 that can execute independent of each other. In addition, each of the applications can manage their own particular cache of data on LSD 1204 each of which is also independent of the other. Such applications can include, for example, Internet applications such as browser 1212 supported by BCM 1112 that can utilize HDFS 1208 to communicate with LSD 1204 using mass storage path 1118 discussed above. In addition to browser application 1212, independent applications 1214 can utilize HDFS 1208 to communicate with LSD 1204 and is therefore "visible" to HDFS 1208. In contrast to applications 1214, however, certain independent applications do not utilize mass storage path 1118 to store data in LSD 1204. Such applications can be referred to as external, or target, application 1216 and are therefore not "visible" to HDFS 1208.

In the described embodiment, target application 1216 can reside in any number of locations and devices, either locally or remotely. Such locations and devices can include, for example, HD 1202 (having local application 1216-1), or any device external to HD 1202 and LSD 1204 but still within system 1200 such as external device 1218 (in which resides local application 1216-2). In the described embodiment, external device 1218 can take the form of a second LSD 1218 coupled by way of interface 1220 to HD 1202. Moreover, such locations and devices can also include remote device 1222 (in which resides remote application 1216-3 that can take the form of RPCM 1126 suitable for managing proxy cache 1124).

LSD 1204 can include controller 1224 and data storage area 1226. Data storage area 1226 can be logically arranged to include at least mass storage area 1228 managed by HDFS 1208 using mass storage path 1118. In a particularly useful arrangement, mass storage area 1228 can be a LBA based mass storage area. Data storage area 1226 can also be logically arranged to include a portion 1230 that is invisible to HDFS 1208. By invisible to HDFS 1208 it is meant that invisible portion 1230 is not managed by HDFS 1208 and is therefore not directly accessible to HDFS 1208.

Mass storage area 1228 can be further logically arranged to include browser cache 1114 that can include browser content 1140 provided by BCM 1112 in support of browser 1212. By caching information previously used by browser 1212 locally at browser cache 1114, the amount of network bandwidth used to provide browser 1212 is reduced. The reduction of mobile network bandwidth can be essential to the efficient operation of a mobile network especially since available network bandwidth may be limited. Invisible portion 1230 can be logically arranged to include proxy cache 1124.

An issue related to the performance of the caching mechanism is caching policy which decides how content is brought into and removed from the cache. Caching policies are typically formed of optimizing instructions promulgated by application developers that are followed in order to manage a cache of information stored on the computer. Cache size is usually limited, and if the cache is full, the caching policy must choose which items to discard to make room for the new ones. The most efficient caching algorithm (also referred to as a caching heuristic) would be to always discard the information that will not be needed for the longest time in the future. Since it is impossible to predict how far in the future information will be needed, this is not practical. The practical minimum can be calculated only after experimentation, and one can compare the effectiveness of the actually chosen cache algorithm with the optimal minimum. Examples of various caching policies include Least Recently Used (LRU), Most Recently Used (MRU), Psuedo-LRU, and Adaptive Replacement Cache (ARC).

In addition to the temporal nature of the resources stored in cache, the nature of the content itself stored can also be an important consideration. The nature of the content stored can be items with different cost (keep items that are expensive to obtain, e.g. those that take a long time to get) or items taking up more cache (if items have different sizes, the cache may want to discard a large item to store several smaller ones), as well as items that expire with time. All or only some of these considerations can be taken into account in varying degrees when an application developer formulates a caching policy to be applied to a cache associated with an application.

In the case of browser 1212, the appropriate caching policy applied to browser cache 1114 can depend upon any or all of the above mentioned considerations particularly when viewed in the light of the mobile environment in which browser 1212 will be used. Since browser 1212 will be used in a mobile environment, special consideration can be given to those items that present an especially large burden when it comes to network traffic, available bandwidth, etc. Therefore a browser developer will create a browser cache policy specifically tailored to optimize the performance of browser 1212 when used in a mobile WEB environment. Any caching policy applied to proxy cache 1124 can be very different than that caching policy applied to browser cache 1114. The potential mis-match between proxy cache caching policy and the browser cache caching policy can present substantial inefficiencies and loss of performance exhibited by browser 1212. For example, proxy cache caching policy applied to proxy cache 1124 may be directed at preserving available cache memory space at the expense of "freshness" of a resource stored therein, whereas browser caching policy applied to browser cache 1114 may be directed at just the opposite, focusing on retaining the "freshest" resource at the expense of any other factor. Therefore, in this example, proxy cache caching policy and browser cache caching policy are working at cross purposes creating, in the process, a basic conflict in the operation of proxy cache 1124 and browser cache 1114. Clearly, it would be desirable for proxy cache 1124 and browser cache 1114 to work in concert as much as is practicable in order to improve overall efficiency and utilization of the local cache system.

One of the features of the invention is that LSD 1204 can deduce (i.e., reverse engineer) the browser cache caching policy based upon the nature of the data stored in browser cache 1114 (i.e., size of files, kind of files) and the dynamics of the data stored in browser 1114 (i.e., length of retention of files). For example, a comparison can be made between a current state of browser cache content 1140 and any number of previous states of browser cache content 1140. In this way, a pattern indicating a change of state over time of browser cache content 1140 can be developed. This pattern can then be used by LSD 1204, for example, to deduce the browser cache caching policy. For example, if LSD 1204 determines that browser cache 1114 is discarding the least recently used items first, then LSD 1204 can deduce that browser cache 1114 is being directed by a browser cache caching policy structured along the lines of a LRU type caching policy. On the other hand, if LSD 1204 deduces that browser cache 1114 is discarding the most recently used items first, then LSD 1204 can deduce that browser cache 1114 is following a cache policy structured along the lines of a MRU type caching policy. In any case, once LSD 1204 has deduced a browser cache caching policy, LSD 1204 can then use the deduced browser cache caching policy to modify the proxy cache caching policy resulting in an overall improvement in efficiency of the local cache system.

For example, if LSD 1204 has deduced that browser cache 1114 is following an LRU type caching policy, then LSD 1204 can modify the proxy cache caching policy to preferentially discard the least recently used proxy cache content. In this way, overall content duplication can be reduced improving overall utilization of the local cache system. Conversely, if LSD 1204 deduces that browser cache 1114 is following an MRU type caching policy, then LSD 1204 can modify the proxy cache caching policy to preferentially discard the most recently used proxy cache content. In any case, LSD 1204 has the freedom to modify proxy cache caching policy as deemed appropriate.

For example, in the mobile WEB environment, an important use of proxy cache manager is to perform web page pre-fetching. Since browser sits on the edge of the Internet closest to the end user any improvement in browser performance can substantially enhance an end user's overall browsing experience. Therefore, by modifying the cache policy used to direct the operations of proxy cache manager, proxy cache manager can improve observed browser performance by, for example, automatically pre-fetching proxy cache content (such as a WEB page) associated with browser cache content already stored in browser cache. For example, if Page P is stored in browser cache, then proxy cache can automatically pre-fetch any WEB pages appearing on the links of page P (i.e. pages P+1 and so on).

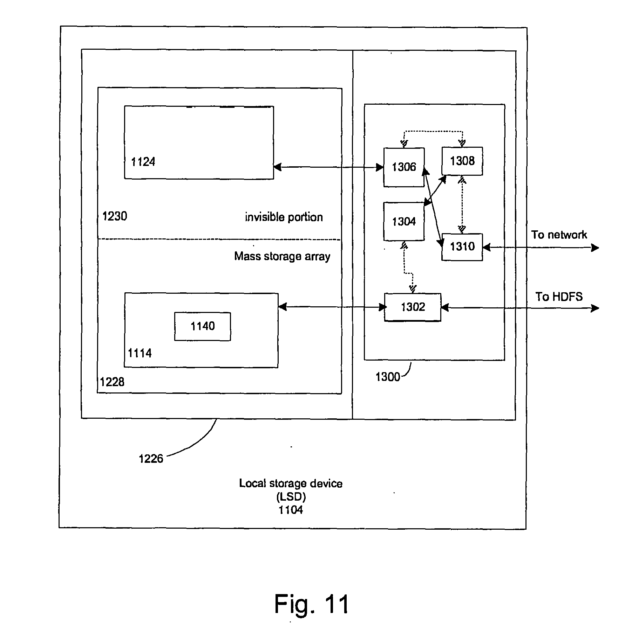

Fig. 11 shows representative controller 1300 included in LSD 1104 in accordance with an embodiment of the invention. Controller 1300 is a particular embodiment of controller 1120 shown in Fig. 9 showing various functional blocks representative of applications run on controller 1120. Accordingly, controller 1300 includes management block 1302 in communication with HDFS 1208. Management block 1302 is, in turn, in communication with mass storage filter block 1304. Mass storage filter block 1304 communicates with both internet file manager block 1306 and proxy cache manager block 1308. Both internet file manager block 1306 and proxy cache manager block 1308 can each communicate with proxy server block 1310. In the described embodiment, mass storage filter block 1304 can provide information to proxy cache manager block 1308 about browser cache content 1140 stored in browser cache 1114. There are a number of techniques that can be used to infer the nature of the stored content and to communicate this inference to the RPCM. One technique provides for determining a name associated with a stored content file and its corresponding file extension (such as ".htm"). Once this information is known, it can be communicated to the RPCM. Proxy cache manager block 1308 can be local to LSD 1104. In some implementations, proxy cache manager block 1308 can reside in a remote device such as remote proxy server 1126.

A method, system, and apparatus that provides a solution for secure distribution and consumption of protected digital content that provides at least the advantages of the push/pull approach to content distribution is described. In the context of this discussion, 'protected digital content' refers to digital content having restrictions such as usage and access restrictions imposed by content providers. For example usage restrictions can include, for example, playing content only a specific number of times or for a particular length of time as well as preventing unauthorized copying. Access restrictions can limit access to protected digital content to only those entities with appropriate access credentials. Protected digital content can cover any relevant configuration depending on the particular DRM scheme so as to retain all restrictions imposed by content providers. Protected content received at the LSD can include the content only or a protected piece of content and any associated Rights Objects (ROs) referred to as 'combined delivery', or the ROs referred to as 'separate delivery' if the corresponding protected piece of content is already stored in the LSD.

The invention can be described in terms of a computing system that includes a host device (HD) having a host device file system (HDFS) and a local storage device (LSD) having a mass storage memory array controlled by a memory controller. In the embodiments described herein, the HDFS manages the mass storage memory array by way of a mass storage path that includes a LSD driver. In some cases, the memory array can have pre-loaded digital content stored therein. By pre-loaded digital content, it is meant digital content stored in the memory array by a manufacturer, OEM, or any content provider. Such pre-loaded digital content can include media items such as songs, music, and/or video that can also include both protected and unprotected preloaded media items. Whether or not the memory array contains pre-loaded digital content, the LSD can acquire digital content from a digital content server where the acquiring is invisible to the HDFS. However, in some cases it may be desirable for the LSD to not be able to store digital content received or not be able to receive digital content at all from the digital content server if the memory array has pre-loaded digital content stored therein. This situation can include, for example, when a content originator has pre-loaded digital content (such as proprietary content that includes music, songs, and so on) in the memory array and does not want additional content (not associated with the proprietary digital content) stored in the LSD. In these cases, the LSD can be precluded from acquiring any digital content or can be precluded from storing digital content in the memory array but can still nonetheless stream the preloaded digital content from the memory array.

In any case, whenever digital content is acquired by the LSD, the acquiring is invisible to the HDFS and more generally, the acquiring is invisible to a mass storage path. The LSD can securely store the acquired protected digital content in the memory array in any number of ways. In some cases, there may occur some transformation of the protected digital content received at the LSD. For example, Rights Objects (ROs) can be stored in an unencrypted form (i.e., "in the clear) in a HDFS-invisible portion of the memory array while the corresponding digital content can be stored in the portion of the array visible to the HDFS. Alternatively, the ROs can be stored in a portion of the memory array that is visible to the HDFS albeit in an encrypted form. In any case, the digital content can be securely stored locally under user control within the usage restrictions retained by the digital content. In addition, there is no need to add or integrate additional DRM software in the mass storage path in the HD thereby maintaining compatibility with state of the art security thereby satisfying content provider requirements. Once stored in the memory array, the LSD can stream all or some (such as when a user selects a particular media item to play, for example) of the digital content from the memory array.

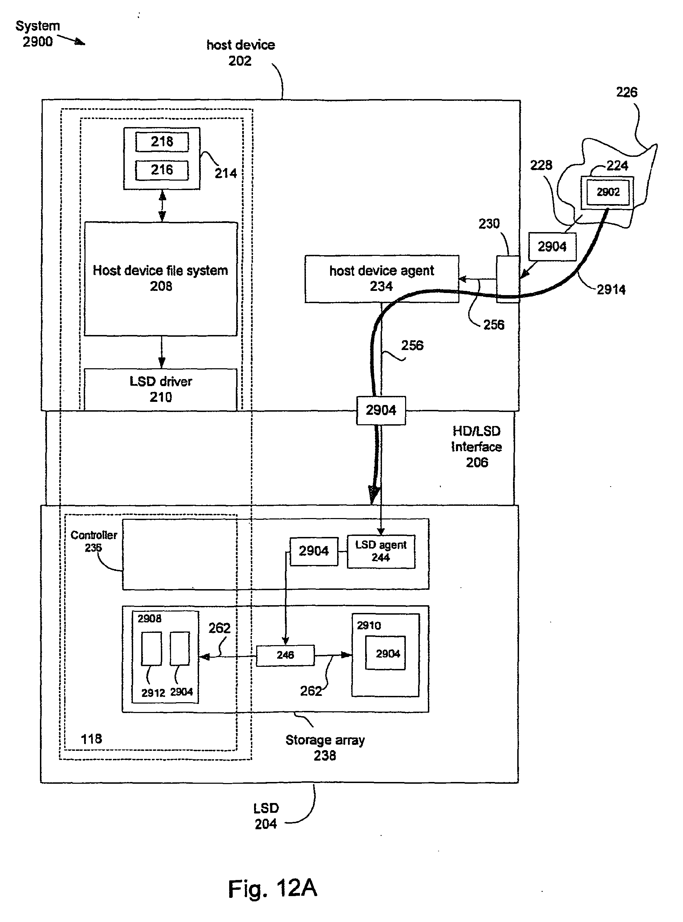

Fig. 12A shows a system 2900 in accordance with an embodiment of the invention suitable for securely distributing and consuming protected digital content. System 2900 includes HD 202, LSD 204, and digital content server 2902 arranged to store digital content 2904. Digital content 2904 can include protected or un-protected digital content. There are many schemes used to protect digital content, many of which fall under, Digital Rights Management, or DRM, (an umbrella term that refers to access control technologies used by publishers and copyright holders to limit usage of digital media or devices). A particular DRM scheme usually defines at least a protected digital content (PDC) acquisition method (which in the case of separate delivery amounts to a RO acquisition method) and at least a protected digital content consumption method that allows for secure enforcement of any usage/access restrictions (that can include a RO enforcement method). In parallel to defining a secure PDC acquisition and a secure PDC consumption methods, content providers usually prescribe a set of robustness rules to define the what is meant by 'secure'. This usually includes secure storage prescriptions that describe by which mechanisms (i.e., software or hardware) should the protected digital content be locally stored so as to avoid unauthorized use and/ or access. In the context of this discussion, it is presumed that for any given DRM scheme, the LSD is at least compatible with any required secure storing prescriptions called out by the content provider.

In conventional systems, HD 202 must include a specific DRM program that would be required in order for protected digital content 2904 to be distributed and ultimately consumed by an end user. In the prior art, this is usually achieved by integrating in the mass storage path some DRM-specific application able to handle the DRM-specific content, so as to ensure content / associated ROs are consumed in an authorized manner. The assumption here is that for a given DRM scheme, the LSD is at least compatible with the required 'secure storing prescriptions' However, the invention does not require HD 202 to integrate any specific DRM module / application with the HDFS or HD since any digital content received from digital content server 2902 and stored at LSD 204 retains all restrictions and therefore requires no additional DRM-specific agent to be integrated in the mass storage path. In the described embodiment, storage array 238 can be logically arranged to include mass storage area 2908 managed by HDFS 208 using the mass storage path and to include HDFS invisible storage area 2910. By being invisible to HDFS 208, it is meant that HDFS 208 does not manage invisible storage area 2910. In this way, HDFS 208 is not aware of any storage operation performed at or content stored in invisible storage area 2910.

During operation, HD 202 determines if mass storage area 2908 includes any pre-loaded protected digital content 2912. Such pre-loaded protected digital content can include for example, proprietary digital files, such as digital music files, digital video files, digital media files related to, for example, advertising, and so on. If HD 202 determines that there is no pre-loaded protected digital content 2912 stored in mass storage area 2908, then LSD 204 can prompt HD 202 to establish communication path 2914 between LSD 204 and digital content server 2902. (It should be noted that digital content server 2902 can prompt HD 202 to establish communication path 2914.) Once communication path 2914 has been established, HD 202 is no longer involved except to maintain communication path 2914. LSD 204 and digital content server 2902 can logically interact over communication path 2914 without further intervention by HD 202 (except to maintain communication path 2914). As part of the logical interaction, either digital content server 2902 or LSD 204 can initiate an authentication session between remote digital content server 2902 and LSD 204 in order for both LSD 204 and remote digital content server 2902 to authenticate each other.

Once the authentication session has been successfully completed (i.e., LSD 204 and digital content server 2902 have been authenticated), LSD 204 and digital content server 2902 can resume the logical interaction over communication path 2914. More generally, any protected digital content acquisition mechanism can be implemented so as to satisfy content providers' security requirements. One example of such an acquisition mechanism, in the case of OMA (Open Mobile Alliance) DRM would be the Rights Object Acquisition Protocol (ROAP). As part of the logical interaction, either LSD 204 can initiate a transfer of protected digital content 2904 (that can include only Rights Objects, for example) from remote digital content server 2902 to LSD 204 or digital content server 2902 can initiate the transfer of protected digital content from digital content server 2902 to LSD 204. In any case, once protected digital content 2904 is received, controller 236 can securely store protected digital content 2904 in memory array 238. In some cases, controller 236 can store protected digital content 2904 in mass storage area 2908. However, since any data stored in mass storage area 2908 is visible to HDFS 208, then any such data can be encrypted. However, if controller 238 stores protected digital content 2904 in invisible area 2910, then no such encryption is necessary. For example, the secure storing of the protected digital content formed of digital content and corresponding rights objects (RO) can be accomplished by storing both the content and ROs in the HDFS invisible area or that encrypted content is stored in the visible partition while the corresponding ROs are stored in the invisible partition, and so on.

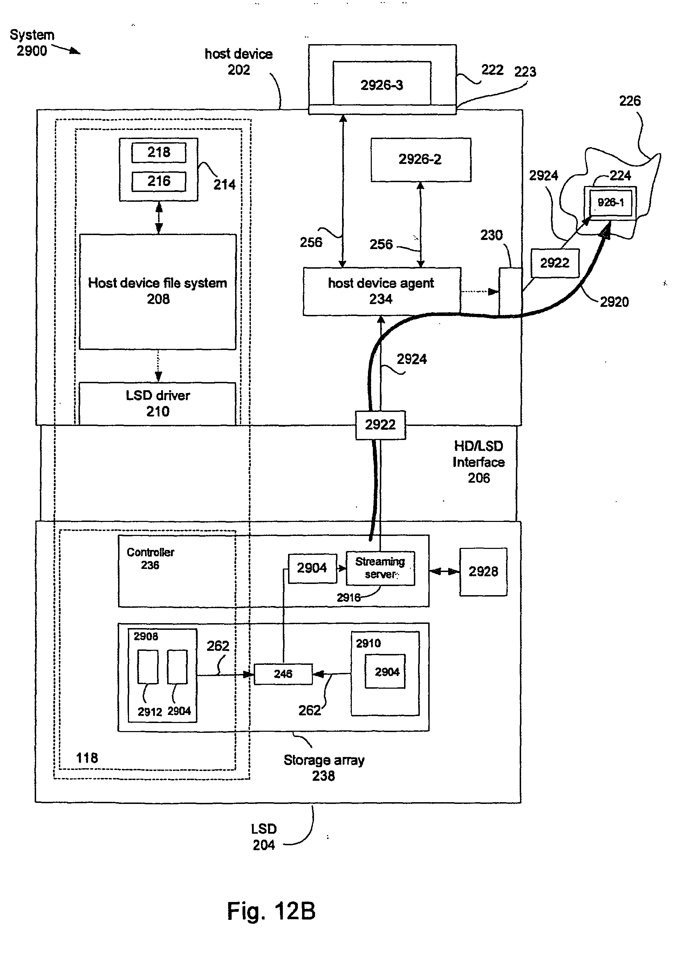

As shown in Fig. 12B, controller 236 can be logically arranged to include digital content streaming server 2916. Digital content streaming server 2916 can read any digital content (including pre-loaded digital content) stored in memory array 238. Digital content streaming server 2916 can organize any data read from storage array 238 into data stream 2920. Data stream 2920 can include, for example, at least one data packet 2922 that can be formed of a header and payload well known to those in the art. In some cases, data packet 2922 can be encrypted. LSD 204 can prompt HD 202 to establish streaming channel 2924 over which data packet 2922 can be transported in the form of data stream 2920. Streaming channel 2924 can be a secure channel or unsecured channel as per original content provider requirements. In the case where data packet 2922 is encrypted, additional protection against unauthorized use can be implemented by passing encrypted data packet 2922 over secure channel 2924. Another feature of the invention includes the ability of the LSD to interpret and enforce the protected digital content usage/access restrictions (e.g. decrement ROs) when servicing external agent 2926 using for example, authorization server 2928. In this way, since the LSD enforces any restrictions, any player or other such application can be a legacy application.

It should be noted that the channel can be an unsecure channel (i.e., players that are not authenticated can play the digital content such as in a mobile environment) in which case usage restrictions could be applied by the LSD (e.g. play twice or play from Jan. 1^{st} etc.). Alternatively, the channel can be a secure channel (i.e., there is a mutual authentication in that, for example, the player credentials can be recognized by the streaming server) in which case the LSD can also enforce 'access restrictions' (e.g. only a given authorized player can play the content). Typically, in a mobile environment, an unsecure channel is often sufficient in terms of security and other considerations while retaining the advantages inherent in a DRM type system (such as the use of rights objects semantics). In this way, unlike the prior art, the invention provides the ability to link between closed/proprietary DRM systems and the world of legacy players without being obligated to integrate proprietary software into the HD platform while still maintaining most, if not all, of the content provider restrictions.

External agent 2926 arranged to process data packet 2922 can be located either remotely as external agent 2926-1, or locally as local agents 2926-1. For this example, local agent 2926-2 can be located in HD 202. Remote agent 2926-1 can receive data packet 2922 by way of streaming channel 2924. In a particularly useful embodiment, remote agent 2926-1 can be an authorized agent. By authorized it is meant that remote agent 2926-1 possesses the appropriate credentials to successfully process data packet 2922 (encrypted or not). The appropriate credentials can be acquired in any number of ways well known to the art. Authentication and authorization server 2928 for example can provide the appropriate credentials required to process data packet 2922. Such servers can be located remotely (such as in network 226 or another local device) or located locally such as server 2928. In the described embodiment, credentials for application 2926 can be acquired off-band. Local authentication/authorization server 2928 can enforce (e.g. decrement) any usage/access restrictions. In any case, when an access restriction is enforced by the LSD, only those agents possessing the appropriate credentials can process data packet 2922. In this way, a provider of protected digital content can be assured that any protected digital content will be available to only those users having the appropriate credentials. In the most likely embodiment, application 2926, would take the form of a local digital media player/renderer running in HD 202 and compliant with streaming standards (e.g. RTP/RTSP). Application 2926 would therefore be able to play/render protected digital content without requiring the addition of any DRM software in HD 202. Also, most likely, no additional security can be required for agent 2926 in a mobile environment thereby enabling the use of legacy players in which case, if there is not mutual server/player authentication, only usage restrictions can be enforced by the LSD.

In this way, the invention provides a solution for secure distribution and consumption of protected digital content. Advantageously, the protected digital content can be locally stored under user control while concurrently having the widest acceptance by legacy players/platforms (i.e. no need to add or integrate additional software) while still remaining compatible with 'state of the art security' in order to satisfy content provider requirements.

Particular embodiments of the present invention provide remotely enabled virtual expansion of the storage capacity of a local storage device as seen by an associated managing host device. While the concept of remotely/user-controlled expansion of local storage devices is not new, the present invention provides a new and innovative approach. Generally, all non-volatile storage devices include a statically pre-determined physical memory array. However, part of the memory array is generally hidden from the host device file system and, as a result, is hidden from the host device and ultimately the user. In conventional implementations, the size of the manufactured memory array is determined at the time of production and, hence, there is no ability for the user to further expand the physical storage capacity of the memory array beyond the confines of the pre-determined hidden capacity; that is, there is no flexibility in the total storage capacity of the memory array. In contrast, it is a goal of the present invention to provide flexible expansion of the storage capacity of a local storage device as perceived by the host device file system of a host device.

Although it is contemplated that any suitable storage devices may be used, in the following description of particular embodiments, the storage devices are presumed to be non- volatile storage devices. However, the invention may also be implemented on volatile storage devices. By way of example, the non- volatile storage devices may be FLASH or EEPROM based storage devices. The storage devices may also be either removable or non-removable (fixed) devices. As is well known, nonremovable devices are not intended for subsequent removal from the host once they have been connected with the host whereas removable devices are configured so as to be readily removed or added to the host.

One type of removable device that is well suited for implementing the present invention is a memory card. Memory cards are commonly used to store digital data for use with various electronics products. The memory card is often removable from the electronic system so that the stored digital data may be portable. The memory cards may have a relatively small form factor and be used to store digital data for electronics products that acquire data, such as cameras, media players/recorders (e.g., MP3 devices), hand-held or notebook computers, personal digital assistants (PDAs), cellular phones, network cards, network appliances, set-top boxes, and hand-held or other devices.

The local storage device described herein may be compatible with any memory card format, such as a secured digital (SD) memory card format used for managing digital media such as audio, video, or picture files. The storage device may also be compatible with a multi media card (MMC) memory card format, a compact flash (CF) memory card format, a flash PC (e.g., ATA Flash) memory card format, a smart-media memory card format, or with any other industry standard specifications. One supplier of these memory cards is SanDisk Corporation of Milpitas, CA. The storage device may also apply to other erasable programmable memory technologies, including but not-limited to electrically-erasable and programmable read-only memories (EEPROMs), EPROM, MRAM, FRAM ferroelectric and magnetic memories. Note that the storage device configuration does not depend on the type of removable memory, and may be implemented with any type of memory, whether it being a flash memory or another type of memory. The storage device may also be implemented with a one-time programmable (OTP) memory chip and/or with a 3 dimensional memory chip technology.

Host systems with which such memory cards are used include personal computers, notebook computers, hand held computing devices, cellular telephones, cameras, audio reproducing devices, and other electronic devices requiring removable data storage. Flash EEPROM systems are also utilized as bulk mass storage embedded in host systems. The storage device may be part of a local proxy system that may be implemented on PDAs (Personal Digital Assistants), mobile handsets, and other various electronic devices. A PDA is typically known as user-held computer systems implemented with various personal information management applications, such as an address book, a daily organizer, and electronic notepads, to name a few.

As will become clear from the following description, the ability of a slave device to initiate a master device provided physical response may be advantageously exploited to provide additional benefit to the master device. By way of example, according to the invention, a first slave device may initiate a master device provided physical response that causes the master device to establish a communication path between the first slave device and a second slave device. According to particular embodiments in which both slave devices are storage devices, the master device may initiate a storage operation by way of a master device command sent to the first storage device. Although the master device command is always "serviced" by the first storage device at least in that any response to the master device command is transmitted via the first storage device to the master device, the first storage device determines, based in part on the command, whether to execute the requested storage operation on itself and/or, forward a command to the second storage device by way of the communication path established at the behest of the first storage device, at which point the second storage device may execute a requested storage operation on itself. Furthermore, both the establishment of the communication path and the logical interaction between the first and second slave devices may be hidden from the file system of the master device.

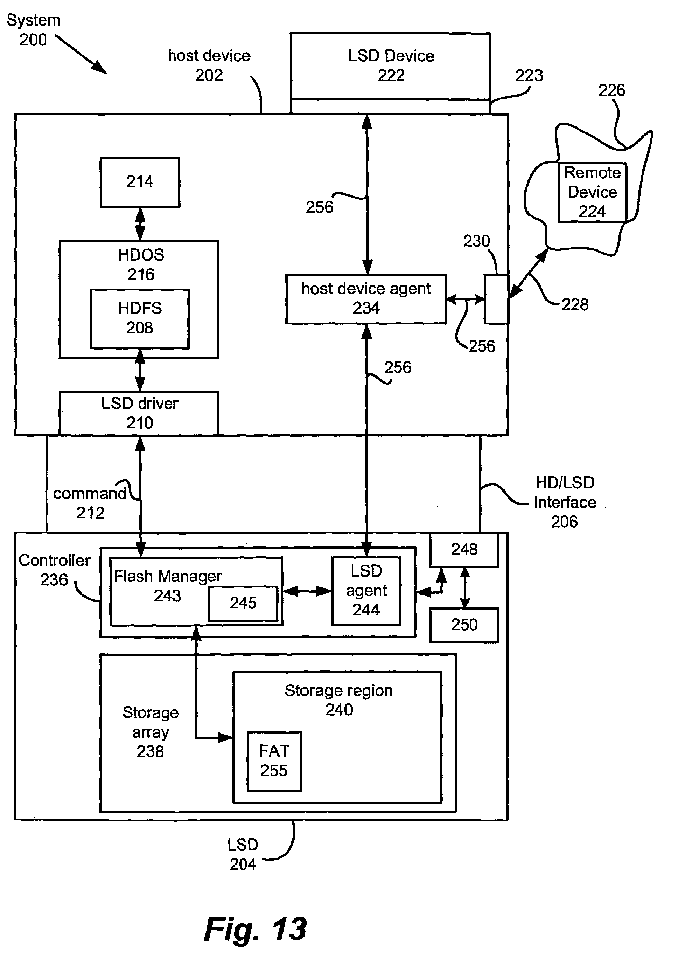

Fig. 13 shows a computing system 200 in accordance with an embodiment of the invention. System 200 includes a slave device that takes the form of local storage device (LSD) 204. System 200 also includes a master device that takes the form of host device (HD) 202. LSD 204 may communicate with HD 202 by way of HD/LSD interface 206. It should be noted that HD/LSD interface 206 may be configured as a mechanical entity (such as a socket or interconnecting bus) into which HD 202 and LSD 204 may mechanically connect. However, in some embodiments, HD/LSD interface 206 may take the form of a wireless interface. While HD 202 necessarily includes a processor, for the sake of clarity, the processor included in HD 202 is neither shown nor mentioned further in this discussion but is, nonetheless, presumed to be present. In many embodiments, LSD 204 does not utilize any interface to a device external to HD 202 other than that interface provided by the HD 202. In other words, LSD 204 may be connected exclusively to HD 202 and therefore may be unable to access or otherwise communicate with circuits and/or applications external to computing system 200 without intervention by HD 202.

HD 202 includes a host device file system (HDFS) 208 in communication with LSD driver 210. Typically, HDFS 208 is a part of a host device operating system (HDOS) 216 that typically resides in host device main memory (that may take the form of a hard disk drive, or HDD, as well as non-volatile memory such as FLASH memory). In the described embodiment, HDFS 208 is configured to issue an LSD management command 212 to LSD driver 210. LSD driver 210 may, in turn, pass LSD management command 212 (appropriately formatted) to LSD 204 by way of HD/LSD interface 206. By way of example, LSD management command 212 may take the form of a block command in those cases where LSD 204 is configured to include a data storage array having logical block address (LBA) architecture. HD 202 may also include (internal) software application 214. By internal application it is meant that software application 214 may utilize HDFS 208 and LSD driver 210 to communicate with LSD 204. In the described embodiment, software application 214 may utilize HDFS 208 and LSD driver 210 to communicate with LSD 204 and is therefore "visible" to HDFS 208.

System 200 also includes at least a second storage device. The second storage device may reside in any number of locations either locally or remotely. In one embodiment, the second storage device is an external device in the form of a second LSD 222 coupled by way of interface 223 to HD 202. In other embodiments, the second storage device may be a remote device 224 included in a network 226 in communication with HD 202 by way of a network link 228 at network interface 230. In this way, a command path using network link 228 may be established between remote device 224 and HD 202 through which information may pass. In still other embodiments, the second storage device may be a non-removable device embedded within HD 202.

In the described embodiment, network interface 230 facilitates communication between HD 202 and network 226 by way of the network link 228. By way of example, if network 226 is an IP protocol type network, then network interface 230 may establish an IP protocol based network link 228 between, for example, application 214 and any network device, e.g., remote device 224, included in network 226. It should be noted that network interface 230 may be physically located anywhere deemed appropriate. For example, network interface 230 may be incorporated into HD 202. However, network interface 230 may also be located in any physical location not included in HD 202 (or system 200) but still be utilized by HD 202 to establish the appropriate network link 228 with network 226. Network interface 230 is therefore not limited to being physically incorporated within or in close proximity to HD 202.

Master device agent 132 may take the form of host device agent 234 that provides, in addition to the functions described above with regards to master device agent 132, at least a bridging functionality between storage services provided by LSD 204 and any available external resources. In the described implementation, host device agent 234 may be used to identify an LSD logical request by any means appropriate (such as polling or interrupts). Moreover, host device agent 234 may be configured to route and/or maintain a communication path to/from an external device such as external device 222 or remote device 224 and LSD 204 once established.

LSD 204 includes controller 236 and storage array 238 having at least a first mass storage region 240. It should be noted that storage array 238 may be formed of an array of memory cells (such as FLASH). Although, in the described embodiment, the storage array 238 may be presumed to be an array of FLASH memory cells, the invention is not limited only to FLASH type memory cells as it is contemplated that the invention may be used with any appropriate type of memory cell. Included in controller 236 is flash manager 243 that may manage mass storage region 240 according at least to host/LSD paradigm 106 (i.e., acting at the behest of HDFS 208 and according to HDFS issued commands). More specifically, flash manager 243 may be configured to translate physical / array level flash commands to logical block / sector level commands and vice versa. Controller 236 also includes a mapping module 245 (described in more detail below) which, in the described embodiment, may be a part of flash manager 243. In a particularly useful arrangement, storage array 238 may include an LBA based mass storage region. The LBA based mass storage region may, in turn, include mass storage region 240. In this way, mass storage region 240 may be compatible with a legacy installed base. Accordingly, the location of blocks of data stored in mass storage region 240 may be specified using logical block addressing (LBA) where each block may be, for example, on the order of 512 or 1024 bytes each. In this way, mass storage region 240 may be fully backward compatible with any contemplated legacy mass storage architectures (i.e. able to work in conjunction with legacy hosts) and more specifically LBA type systems. In particular, LSD 204 (and more particularly, mass storage region 240) may operate under standard LBA architecture using legacy interfaces, busses, and all associated protocols providing for full compatibility with installed base of legacy products.

Controller 236 also includes LSD agent 244 that may act as a bridge establishing a communication path 256 at the behest of the controller 236 between flash manager 243, and particularly mapping module 245, and external storage device 222 or remote device 224 via host device agent 234. It should be noted that this communication path 256 is not routed through the HDFS 208 and hence may be invisible to the HDFS 208. It should be noted that, in various embodiments, LSD agent 244 is also capable of performing various storage operations (e.g., a read operation) on storage region 240 and, furthermore, may be aware of the file system structure and metadata associated with the data stored within mass storage region 240. Such file structure awareness may be implemented by configuring LSD agent 244 to read and traverse the file metadata stored within mass storage region 240 including data within a file allocation table.

LSD agent 244 may also manage a network stack/interface 248, which in some embodiments may be a part of controller 236, that provides a mechanism for controller 236 to communicate with external devices and/or target applications using standard protocols (such as Internet Protocol, or IP) and any available network resources. In particular, LSD 204 may translate any network communication (such as LSD logical request 130) into a standard format (such as physical bus-based format) so as to enable host device agent 234 to execute instructions (such as a message fetch) in a manner appropriate to an LBA based implementation of HD/LSD interface 206. In this way, any fetched message, for example, may be successfully conveyed over network link 228 created between host device agent 234 and an external device. In this regard, network stack/interface 248 may be considered to be part of LSD agent 244. LSD agent 244 may also provide authentication and security services to an LSD application 250, which may be running off of controller 236, as well as manage any incoming service requests.

It will be appreciated that mass storage region 240 may be partitioned into separate internal regions. These partitioned regions may each be acted upon so that they may interact with each other and/or circuits and/or software applications external to LSD 204 in any appropriate manner. Such external circuitry may include for example, HD 202 (that includes all components therein, such as host file system 208), external LSD 222, or any of a number of external devices included in network 226 such as remote device 224.

While HDFS 208 effectively manages the mass storage region 240 of storage array 238, flash manager 243 serves as a translation layer between the HDFS 208 and the physical memory array. More specifically, flash manager 243 translates commands received from the HDFS 208 targeting logical addresses/units (e.g., clusters) into actions performed on the physical addresses/units (e.g., blocks, pages, etc.) within mass storage region 240. In the described embodiments, HDFS 208, via flash manager 243, stores data in the form of logical areas referred to as clusters. One or more clusters are allocated to each file to be stored by LSD 204. Those of skill in the art will appreciate that a cluster is the smallest unit of memory space that may be allocated to a file and thus, every file must be allocated an integer number of clusters. It should also be noted that there is no requirement that a particular file be stored in adjacent clusters. In fact, the clusters used to store a particular file are often spread throughout the physical memory array. In other words, the files are generally "fragmented" in that the file is divided into smaller pieces that are then stored throughout the available memory array. Although a cluster is the smallest unit of memory space that may be allocated to a given file in conventional mass storage systems, the smallest storage segment of the memory array that is logically addressable by the file system is referred to as a sector. Multiple sectors form a cluster. In conventional systems, each sector is capable of storing up to 512 bytes of data. Those of skill in the art will appreciate that flash memory devices in particular are prone to wear when a single physical block is repeatedly overwritten. Thus, it is generally desirable for the LSD driver 210 and/or flash manager 243 to spread out write operations evenly on average throughout the mass storage region 240.

In the described embodiments, HDFS 208 utilizes a file allocation table (FAT) 255 to manage mass storage region 240; however, in alternate embodiments the HDFS 208 may be not be a FAT-based file system. By way of example, in other embodiments, the HDFS 208 may be a file system based on ext2, ext3, NTFS and JFFS, among others. Thus, while the invention may be practiced with other file systems, the following description focuses on FAT-based file system embodiments. By way of example, the FAT file system may be a FAT- 16 or FAT-32 file system known in the art. FAT 255 may be stored in mass storage region 240 as any other data. FAT 255 may be considered a database that tracks the logical location(s) of files stored by LSD 204. However, it should be noted that in some embodiments, not all of the files stored by the LSD 204 may be tracked with the FAT 255; that is, some files stored in the storage array 238 may not be managed by the HDFS 208, and thus, any data stored in those regions will be invisible to the HDFS 208. By way of example, it may be desirable to hide certain data from the HDFS 208 and thus, this data may be stored in a portion of the memory array 238 not managed by the HDFS 208. However, for those files that are managed by the HDFS 208 (e.g., those within mass storage region 240), the FAT 255 tracks the logical addresses of the sectors and clusters that are assigned/allocated to each file. By way of example, each of the HDFS managed files has a corresponding directory entry or memory address in the FAT 255. An operating system (OS) or software application such as HDOS 216 or a host device application may access the FAT 255 to determine where the data in a file is logically located. More particularly, each file entry in the FAT 255 contains the cluster numbers of the corresponding clusters allocated to the particular file. Each cluster entry also includes a cluster number that links the current cluster to the next cluster used by the file. Each cluster not in use is typically marked with a zero or some other predetermined value in its corresponding cluster entry in the FAT 255. This alerts an OS or other application that the cluster is free and available for assignment. In this way, the FAT 255 may inform the HDFS 202 into which clusters a particular file are stored and also which clusters are available for use. In this way, the HDFS 208 may ascertain the available and total storage capacities of the LSD 204.

According to a particular embodiment of the invention, the memory addresses identified in the FAT 255 may be associated with clusters that are in turn associated with two or more sets of sectors. By way of example, the logical addresses associated with sectors physically located within the first storage area 240 within the LSD 204 (hereinafter referred to as real sectors) may represent a first set X of logical addresses. In one particular embodiment, the first set X of logical addresses may correspond to a fixed range of consecutive logical addresses identified in the FAT 255. In a representative embodiment, all of the logical addresses in the first range X are associated with real sectors physically located within the first storage area 240. Additionally, the FAT 255 may include clusters associated with one or more other sets (or ranges in some embodiments) of sectors physically located in storage arrays in devices external to LSD 222 such as, by way of example, set Y in an external device such as external LSD 222 or remote device 224. Sectors in a device external to the LSD 204 may be referred to as virtual sectors. Thus, in this example, the sectors made available to the HDFS 208 include both sets X and Y.

According a particular embodiment, the HDFS 208 may not differentiate between X and Y; that is, the HDFS perceives that the sets X and Y of logical addresses are all associated with sectors physically located within the mass storage region 240 of the LSD 204. More particularly, the physical locations of the various sectors associated with clusters identified in the FAT 255 are not available through the FAT 255 and, hence, are unknown to the HDFS 208. Consequently, the perceived storage capacity (hereinafter also referred to as the virtual storage capacity) as seen by the HDFS 208 is actually the sum of the combined storage capacities of the real and virtual sectors associated with the logical addresses in sets X and Y in the LSD 204 and the external device, respectively. Thus, although the storage capacity of the real sectors physically located within the LSD storage region 240 is fixed, the perceived storage capacity as determined by the HDFS 208 by reading the FAT 255 has effectively been expanded to include virtual sectors physically located within the external device.

In the described embodiment, a mapping module 245 is configured to map or associate particular logical sectors with either local real sectors or external virtual sectors. That is, mapping module 245 and/or flash manager 243 are responsible for associating the real and virtual sectors associated with particular logical sector numbers with the actual physical addresses (i.e., blocks, pages, etc.) within mass storage region 240 or within a storage region physically residing in an external device. Thus, in some particular embodiments, commands received from the HDFS 208 targeting logical addresses at the cluster level may be translated into logical sector numbers and in turn translated by mapping module 245 into actions performed on the physical addresses/units (i.e., blocks, pages, etc.) associated with real and virtual sectors within mass storage region 240 and an external device, respectively. In one embodiment, the translation from cluster level addresses to sector level addresses may be performed by the flash manager 243. In another embodiment, this translation may be performed by the HDFS itself.

It should be noted that, in various preferred embodiments, mapping module 245 is capable of dynamically changing the ratio of data stored in the real sectors versus that stored in the virtual sectors. More particularly, it may be desirable to dynamically adjust the allocation of real and virtual sectors to particular content including data associated with a particular file as well as metadata associated with the file and even portions of the FAT 255 itself. That is, for example, data may be transferred from one or more virtual sectors within an external device to one or more real sectors within storage region 240 and vice versa at the behest of the mapping module 245. However, in a preferred embodiment, this reallocation is invisible to the HDFS 208 as no updating of the FAT 255 is necessary.

In one particular embodiment, mapping module 245 and/or LSD agent 244 may additionally keep a separate mapping table 356 that associates the clusters identified in the FAT 255 with real and/or virtual sectors unbeknownst to the HDFS 208. This may be beneficial in embodiments in which some level of optimization is desirable such as, by way of example, embodiments in which mapping module 245 is configured to pre-fetch and cache (i.e., without specific instruction from the HDFS 208) data in sectors belonging to the same cluster or file..

Again, it should be noted that according to particular embodiments, the HDFS 208 perceives all of the clusters identified in the FAT 255 as associated with sectors and corresponding physical addresses residing within mass storage region 240 when, in fact, the clusters identified in the FAT 255 may be logically associated with both the real sectors corresponding to physical addresses in the mass storage region 240 as well as any virtual sectors corresponding to physical addresses residing in external devices. It should also be noted that a widely variable number of external storage devices may be coupled with HD 202 thereby permitting great flexibility in the expansion of the virtual storage capacity of the LSD 204 as perceived by the HDFS 208; that is, the virtual storage capacity of the LSD 204 may be expanded as long as there are file address entries available in the FAT 255 that may be associated with virtual sectors in corresponding external devices. Furthermore, in embodiments in which the LSD agent 244 has internal file system awareness (e.g., file structure and metadata awareness), the LSD agent 244 may manage its own cluster/sector mapping table.

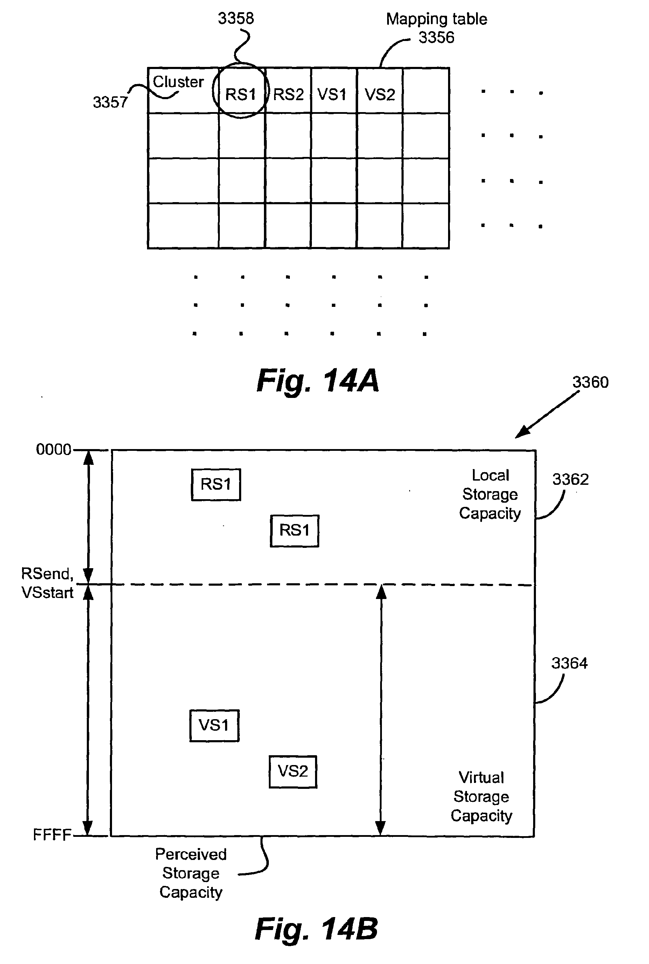

Fig. 14A illustrates a diagrammatic representation of a mapping table 3356 in accordance with particular embodiment in which LSD agent 244 and/or mapping module 245 are configured to manage the mapping of clusters to real and virtual sectors. Mapping table 3356 includes a number of cluster entries 3357 represented by rows in the mapping table. Each entry 3357 includes a number of sector entries 3358. In the example illustrated in Fig. 14A, a particular cluster entry 3357 may be associated with both real sectors represented by, for example, entries RSI and RS2, which may or may not be physically adjacent one another in mass storage region 240, as well as virtual sectors represented by, for example, entries VSI and VS2, which may or may not reside within the same external device. Hence, the cluster represented by entry 3357 includes data that is stored in both storage array 240 via real sectors RSI and RS2 as well as within storage areas residing in one or more external devices via sectors VS2 and VS2. That is, in the illustrated embodiment, there is no requirement that all of the sectors associated with a particular cluster be stored either entirely locally via real sectors, or stored entirely externally via virtual sectors.

Fig. 14B illustrates a representation of the perceived storage capacity of the LSD 204 as read by the HDFS 208 in an embodiment in which all logical addresses in a given range (e.g., 0000 to xxxx) are associated with real sectors and all logical addresses in a given range (e.g., yyyy to FFFF) are associated with virtual sectors. More particularly, Fig. 14B illustrates the relationship between memory addresses in hex notation and the physical sectors associated with the memory addresses. It should be noted that this relationship is only representative of one particular embodiment, as in various alternate embodiments, both the relationship between a given logical address and associated cluster(s) as well as the relationship between a given cluster and corresponding sectors may be changed dynamically. The entire box 3360 represents the perceived storage capacity of the LSD 204. In the illustrated embodiment, the upper portion 3362 of the box 3360 represents the memory addresses, beginning at 0000 and ending at some value xxxx, in the case of FAT 16 addressing for example, associated with the actual storage capacity of the storage array 240; that is, the real sectors such as RSI and RS2 located within the storage array 240. Conversely, the lower portion 3364 of the box 3360 represents the memory addresses, beginning at yyyy (at or after xxxx) and ending at FFFF, in the case of FAT 16 addressing, associated with the virtual storage capacity of the LSD 204; that is, clusters residing in external devices such as VCI and VC2.

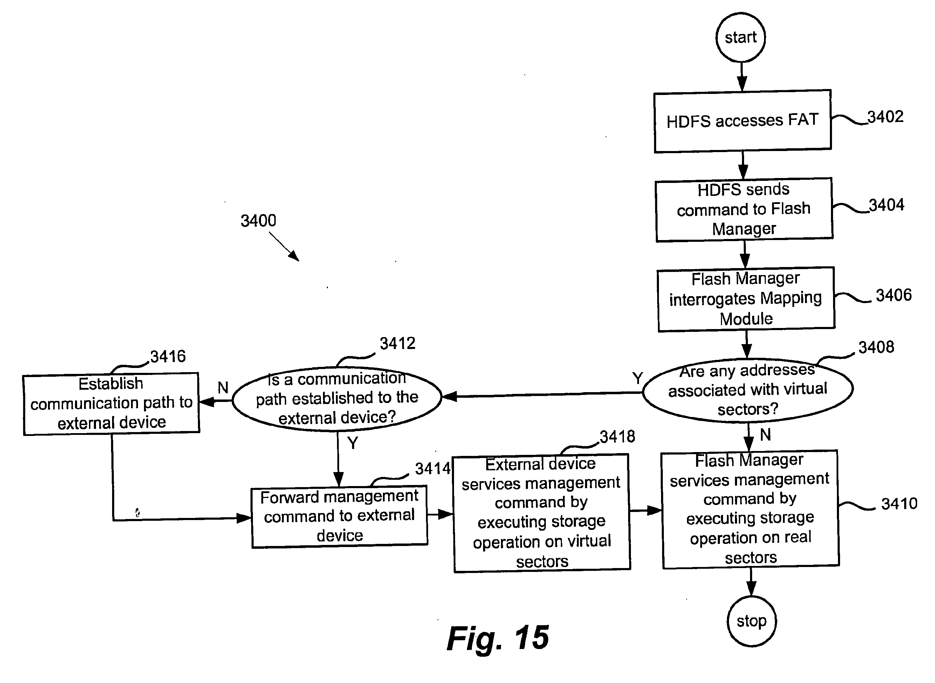

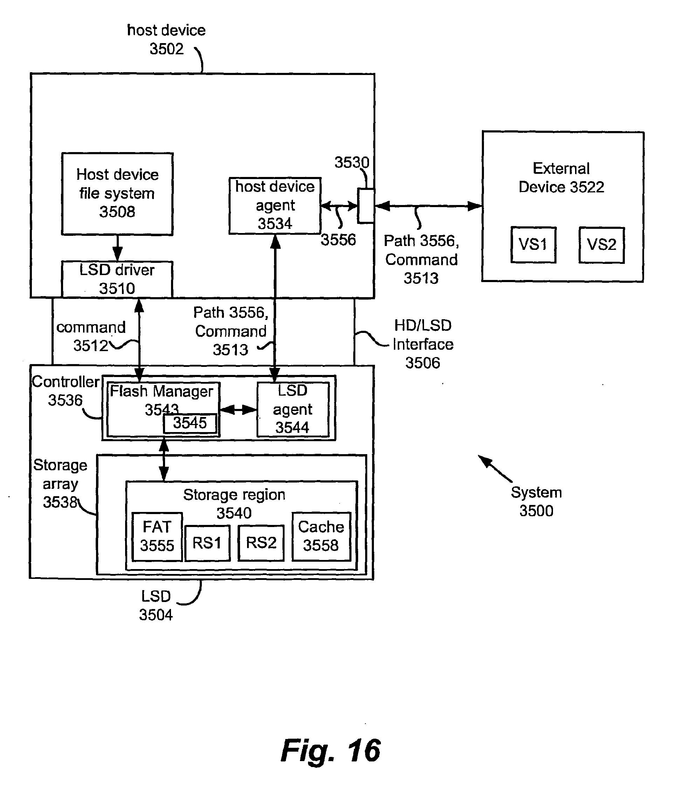

For the purpose of illustrating a few particular embodiments of the present invention, a process 3400 of servicing a management command by an LSD 3504 sent from an HD 3502 to the LSD 3504 is described with reference to the flowchart of Fig. 15 and the system of Fig. 16. Process 3400 may begin at 3402 with HDFS 3508 accessing FAT 3555. This enables HDFS 3508 to check the mapping of data the HDFS presumes is actually stored by LSD 3504 within storage array 3538 and to identify logical addresses for a subsequent storage operation. However, in some cases the FAT 3555 may already be cached within local memory within HD 3502 and the logical addresses and corresponding clusters may already be identified. In the former case, flash manager 3543 and/or mapping module 3545 may determine, in some embodiments, which logical address(es) were shown interest by HDFS 3508 during the accessing 3402. More particularly, in these embodiments, mapping module 3545 is able to discern which sectors the HDFS 3508 intends for a storage operation and then is able to anticipate which sectors will be targeted by a subsequent command from the HDFS 3508.

At 3404, flash manager 3543 receives a management command 3512 from HDFS 3508 requesting a desired storage operation. By way of example, the management command 3512 may include a read, write or erase command and the associated logical addresses where the storage operation is to be executed, and in the case of a write command, the data to be written to the logical addresses. In some embodiments, this command may be predicted (e.g., based on some intelligent pre-fetching mechanism known in the prior art). At 3406, flash manager 3543 interrogates mapping module 3545 which manages/maintains the mapping between logical sector numbers and associated real and virtual sectors. At 3408, mapping module 3545 determines if some or all of the logical addresses associated with the command sent by the HDFS 3508 are associated with virtual sectors (e.g., virtual sector VSI or VS2) referring to sectors physically residing in a device 3522 external to the LSD 3504 (e.g., a second LSD, a remote network device, or a non-removable device embedded within the HD). In a preferred embodiment, the actions taken by the mapping module 3545 are independent from and transparent to the HDFS 3508. In this way, no updates or other changes to legacy components such as the HDFS 3508 or LSD driver 3510 are required. If it is determined at 3408 that all of the sectors are real sectors physically residing in a mass storage region 3540 of storage array 3538 (e.g., real sector RSI or RS2), then flash manager 3543 may service the command 3512 at 3410. More particularly, if mapping module 3545 determines that the management command 3512 is entirely associated with real sectors, then the requested storage operation may be executed on these targeted real sectors in real time at 3410. The servicing of the command 3512 will also generally include transmitting a response from LSD 3504 to HDFS 3508. The response may include an acknowledgement that the requested operation was executed and/or data associated with the requested operation.

If, however, mapping module 3545 determines at 3408 that at least some of the sectors associated with the management command 3512 are virtual sectors then, at 3412, the LSD agent 3544 determines if a communication path is established between the LSD 3504 and the external device 3522 having an associated storage array that includes the physical location of the virtual sectors (e.g., VSI and VS2). By communication path it is meant that the LSD 3504 and external device 3522 have a capable command path established between them via HD 3502. By capable, it is meant that there is a physical connection established, a wireless connection established, or a logical connection established between the LSD 3504 and external device 3522 via LSD agent 3544, host device agent 3534 and interface 3530 over which information may be passed, and in a preferred embodiment, unbeknownst to HDFS 3508.

In the illustrated embodiment, if it is determined at 3412 that a communication path 3556 is established between LSD 3504 and external device 3522 then the LSD agent 3544 forwards at 3414 a management command 3513 based on the management command 3512 to the external device 3522 and which instructs the external device 3522 to perform a requested storage operation on a number of virtual sectors. In some embodiments the establishment of the communication path 3556 may be initiated prior to actually receiving the management command 3512 from the HDFS 3508 based on a predicted management command as described above. In parallel, there may be some local cache management operation for storage region 3540. In some embodiments, a local cache 3558 may be a part of storage region 3540, while in other embodiments the cache may be located within RAM outside of storage array 3538. Managing a local cache 3558 may involve cooperation between flash manager 3543 (and/or mapping module 3545) and LSD agent 3544 to optimally ensure that there is sufficient storage room in the cache 3558 for data to be stored locally (e.g., data to be written to the external device 3522 from the HD 3502 in the case of a write operation or data fetched through LSD agent 3544 from the external device 3522 to be transmitted to the HDFS 3508 in the case of a read operation). Sufficient storage room may be evacuated by erasing local data from the cache 3558, transferring local data to be written from the local cache 3558 to the external device 3522 or by transferring local data to be read from the local cache 3558 and transferred to the HD 3502.

In some embodiments, the LSD agent 3544 may be involved in the cache management operations as the LSD agent 3544 may have some file system structure awareness which may allow the LSD agent 3544 to introduce some level of optimization in the management of the cache. More particularly, if LSD agent 3544 is aware of the remaining sectors to fetch for the cluster related to the given file, for example, the LSD agent 3544 may ensure that there is sufficient storage in the local cache 3558 within the LSD in advance. File system structure awareness may also enable the LSD agent 3544 to identify the current content stored in the cache 3558 that is desirable to maintain locally. Hence, LSD agent 3544 may perform some level of intelligent caching.

At 3418, external device 3522 executes the requested storage operation on the virtual sectors in response to management command 3513 (and indirectly through management command 3512). It should be noted that the second command 3513 sent to the external device 3522 may not always instruct the external device to perform a storage operation on the virtual sectors associated with logical address identified in the first command 3512. That is, in some cases, even though all of the logical addresses identified in the management command 3512 are associated with real sectors, it may be desirable to free storage space in the mass storage region 3540 by writing data from real sectors within the mass storage region 3540 not associated with the first management command 3512 into virtual sectors within the external device 3522. Thus, the second command 3513 may be a write command containing data from the real sectors within the mass storage region 3540 and instructing the external device 3522 to write the data from the real sectors into virtual sectors within the external device. Additionally, if the management command 3512 sent by the HDFS 3508 included addresses associated with both real and virtual sectors then, the flash manager 3543 may execute the requested storage operation on the real sectors at 3410 in parallel with the forwarding of the management command 3513 to external device 3522 and/or in parallel with the executing of the requested storage operation on the virtual sectors by external device 3522.

Alternatively, according to particular embodiments, if it is determined at 3412 that a communication path 3556 does not exist then, at 3416, LSD agent 3544 prompts HD 3502 by way of HD agent 3534 to establish a communication path 3556 between LSD 3504 and external device 3522. More particularly, as described above with reference to the communication path 256 of FIG. 13 LSD 3504 may prompt HD 3502 to execute a requested process establishing the communication path 3556 to external device 3522 using a network interface or a local communication path, for example. Once established, however, information may be passed between the LSD 3504 and external device 3522 without further intervention by HD 3502 (except for any intervention related to the passing of data, such as data packet routing) and also being invisible to HDFS 3508. Once the communication path 3556 is established, the process proceeds to 3414 where the management command 3513 is sent to the external device 3522 at which point the external device 3522 may perform the requested storage operation on the virtual sectors.

Thus, in various embodiments, the servicing of a single command 3512 initiated by the HDFS 3508 may generally involve a number of operations, both internal to the LSD 3504 as well as in relation to an external device 3522. While the process 3400 described above represents general implementations of various embodiments of the present invention, the following description will provide more specific implementations of particular embodiments of the present invention.

More particularly, in the case that the management command 3512 is a write command, if any of the logical addresses identified in the write command 3512 are associated with real sectors residing in storage region 3540, then data may be written to these targeted real sectors in real time at 3410 as described above. A response including an acknowledgment that the write command has been serviced may then be sent to the HDFS 3508. If, however, some or all of the logical addresses are associated with virtual sectors then, LSD agent 3544 forwards the write command 3513 and associated data to external device 3522 along communication path 3556 unbeknownst to HDFS 3508 instructing external device 3522 to write the associated data to the relevant physical counterparts of the virtual sectors residing in external device 3522 as described above.

Alternately, it may be desirable to wait before forwarding the data and write command 3513 to the external device 3522. By way of example, it may be advantageous to temporarily store the data within cache 3558 within the LSD 3504 until certain predetermined conditions are met. By way of example, it may be desirable to temporarily store the data in cache 3558 and wait to forward the cached data to the external device 3522 until a predetermined level of bandwidth is available over the communication path 3556. Additionally, it may be more efficient to wait until a predetermined quantity of data is cached before forwarding data to the external device 3522 where it is then written. For these and other considerations, servicing the write command 3512 may first involve caching the data temporarily and sending a response to the HDFS 3508 including an acknowledgment that the write command has been serviced (although in other embodiments the acknowledgment response may be sent later as long as the acknowledgment is sent within HDFS required time constraints). The servicing may then involve a determination as to whether or not the data to be written to the virtual sectors (or even the command 3513 itself) associated with the write command 3512 should be forwarded to the external device 3522 during the present clock window. Concurrently, before or after this determination, other portions of the data to be written to the real sectors by flash manager 3543 may be written at 3410. If the data is to be forwarded during the current clock window then the data is forwarded where it is then written to the virtual sectors within external device 3522. In some embodiments, the forwarding of the data may be performed progressively; that is, various "chunks" or portions of the data may be forwarded when possible or otherwise deemed appropriate. If the data is not to be forwarded to the external device 3522 during the current clock window, then the data may be stored in cache 3558 where it remains until the controller 3536 determines that the data should be forwarded to the external device 3522 to be written.

It should be noted that in particular embodiments, the FAT 3555 needs not to be modified if a portion of the data destined for the virtual sectors is cached. Additionally, in one embodiment, flash manager 3543 and/or mapping module 3545 may map the virtual sector location(s) to temporary cache location(s) such that the FAT 3555 accessed by the HDFS 3508 does not have to be modified. In fact, both real and virtual sectors associated with clusters identified in the FAT 3555 in general may not always correspond to the same physical sectors in storage region 3540 or within external devices.

In the case that the management command 3512 is a read command, if any of the logical addresses identified in the read command 3512 are associated with real sectors residing in storage region 3540, then data may be read from the real sectors at 3410 and subsequently transmitted to HDFS 3508. If, however, some or all of the logical addresses are associated with virtual sectors then, LSD agent 3544 forwards a read command 3513 at 3414 to external device 3522 along communication path 3556 unbeknownst to HDFS 3508 instructing external device 3522 to read from the relevant physical counterparts of the virtual sectors residing in external device 3522 as described above. The data read from the external device 3522 may then be forwarded along communication path 3556 to LSD 3504 whereupon it may then be temporarily stored locally in cache 3558 before being forwarded to HDFS 3508 as if it had been read directly from storage region 3540.

It should be noted that the management and transfer of data between the LSD 3504 and HD 3502, and particularly between the flash manager 3543 and HDFS 3508, are usually submitted to a number of restrictions including time-outs etc. (i.e. on legacy storage buses such as SD, MMC etc. the HD expects to receive a response from the LSD in a limited time period (e.g. at most 100 ms), after which it considers the request to be aborted which may result in re-setting the system...). Thus, while conventional legacy host devices, storage devices and buses communicate and manage the transfer of data based on 'guaranteed response time,' the communication and transfer of data between LSD 3504 (particularly LSD agent 3544) and external device 3522 may be based on 'best effort'.

According to one particular embodiment, this difficulty may be mitigated by the use of intelligent mapping and/or caching. More particularly, the flash manager 3543 and/or mapping module 3545 may dynamically manage the real/virtual sector mapping. By way of example, flash manager 3543 and/or mapping module 3545 may note which files are most commonly used and, consequently, dynamically modify the real and virtual allocation of sectors (transparently to the HDFS 3508 and possibly as background operations) so as to ensure that the most commonly used files are stored within real sectors while the least used files are stored in virtual sectors in external devices. That is, if a certain file stored in virtual sectors undergoes high usage (e.g., is read often), then mapping module 3545 and flash manager 3543 may dynamically initiate a transfer of the data associated with the highly used file from the virtual sectors within the external device 3522 to real sectors with storage region 3540. Alternatively, highly read data may be preemptively (and at least temporarily) stored within cache 3545. Conversely, data associated with infrequently accessed files may be dynamically transferred from real sectors within storage region 3540 to virtual sectors within external device 3522 at the behest of mapping module 3545 and/or flash manager 3543.

Additionally, in some embodiments, the LSD driver or HDFS 3508 may be configured so as to allow more flexibility if such flexibility is supported. By way of example, if the storage operation may not be performed within a 'guaranteed response time' defined by the storage interface standard (e.g. where the external device 3522 is another LSD and the communication is rapid) then a retry message may be sent. Additionally, a Quality of Services (QOS) paradigm may be setup so as to allow for servicing and the transfer of data between LSD 3504 and external device 3522 under the time limit constraint. By way of example, the QOS paradigm may include factors such as available bandwidth, amount of data to be transferred, and the amount of data already cached, among many others.

The inventors have realized the desirability of providing functionality in a local storage device (LSD) to index data in a memory array of the LSD without involvement of a host device (HD). Thus, for example, the data of the LSD may be indexed even when the LSD is being used by multiple HD' s. Furthermore, the monitoring and characterizing functionality need not be ported to various HD platforms, since the functionality is independent of HD platform. The indexing may include generating a collection of data that can be used to respond to search queries with respect to data of the LSD. The queries may be originated from a HD or from within the LSD.

The use of the indexing result is not limited to responding to search queries. For example, the indexing result may be used for content screening, i.e., an application looking for particular strings like "porn," so as to forbid access to unauthorized content in the memory array of the LSD. The content screening may be carried out, for example, in the HD (resulting, for example, in avoiding access requests to particular content in the memory array of the LSD or, as another example, may be carried out in the LSD itself, blocking access requests, whether write access requests or read access requests, that are received from the HD.

With the increase of the capabilities of storage device controllers, the execution of software applications from within the storage device using processing resources made available by the storage device controllers becomes possible. This enhanced operability of the storage device controllers leads to a paradigm of new indexing modes which are, for example, useful to index data on the storage device without involvement of the host device. Such indexing can be used, for example, for improving a user's digital content consumption experience that typically spans across multiple devices - connected or unconnected - or access modes - wired vs. wireless, fixed vs. mobile etc.

The index may be, for example, exposed to, provided to or accessible by a service provider that in return provides the user with enhanced search or other usage capability. For example, the storage device may contain pre-loaded content and the user may also be encouraged to download content (such as from a web site associated with the retailer). In return the user may provide consent for an index to be provided from the storage device and, for example, possibly even receive focused proposals from the retailer and/or associated entities. As another example, storage device vendors may be enabled to provide targeted services to their customer base.

In order to provide support to a "user-centric" (as opposed to traditional "device-centric") indexing approach, the invention goes beyond the strict limitations of the host managed, LBA-based ("LBA is an abbreviation for logical block addressing) mass storage paradigm and provides an indexing paradigm that may be fully backward compatible with legacy mass storage devices but also enhances the indexing of mass storage, thus enhancing the retrieval/search of digital content usage. In addition, the reporting of an index generated in this way need not depend on indexing functionality in a host device.

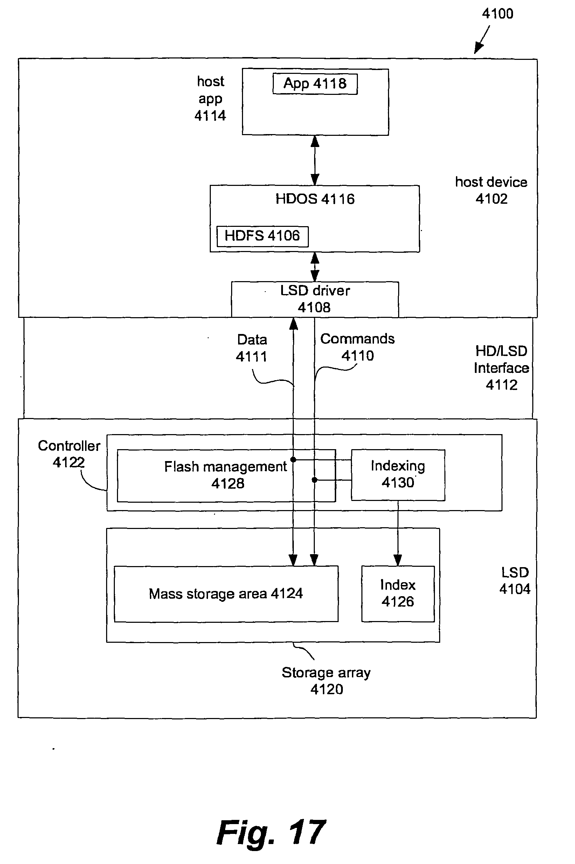

Fig. 17 illustrates a computing system 4100 including a host device (HD) 4102 and a local storage device (LSD) 4104. HD 4102 includes a host device file system (HDFS) 4106. LSD 4104 can take the form of removable memory devices such as a memory card having a relatively small form factor and can be used to store digital data for electronics products such as cameras, hand-held or notebook computers, network cards, network appliances, set-top boxes, hand-held or other small audio players/recorders (e.g., MP3 devices), and medical monitors. Examples of a memory card include PC Card (formerly PCMCIA device), Flash card (e.g., Compact Flash Type I and II), Secure Digital (SD) card, Multimedia card (MMC), ATA card (e.g., Compact Flash card), memory stick, SmartMedia card. In addition, LSD 4104 can take the form of non-removable memory devices such as SD compatible iNAND™ embedded Flash drive manufactured by SanDisk Corporation of Milpitas CA.

LSD 4104 can communicate with HD 4102 by way of HD/LSD interface 4112. It should be noted that HD/LSD 4112 can be configured as a mechanical entity (such as a socket or interconnecting bus) into which HD 4102 and LSD 4104 can mechanically connect. In some embodiments, HD/LSD interface 4108 can take the form of a wireless interface. Generally, HD 4102 includes a processor. However, for the sake of clarity, the processor included in HD 4102 is neither shown nor mentioned further in this discussion but is, nonetheless, presumed to be present. LSD 4104 can be physically connected exclusively to HD 4102 and therefore does not access or otherwise communicate with circuits and/or applications external to computing system 4100 without intervention by HD 4102. Typically, LSD 4104 does not utilize any interface to a device external to HD 4102 other than that interface provided by the HD 4102 though, in some cases, LSD 4104 may directly interface to a device external to HD 4102.

HD 4102 includes host device file system (HDFS) 4106 in communication with LSD driver 4108. In the described embodiment, HDFS 4106 can issue LSD management command 4110 to LSD driver 4108. LSD driver 4108 can, in turn, pass LSD management command 4110 (appropriately formatted) to LSD 4104 by way of HD/LSD interface 4112. For example, LSD management command 4110 can take the form of a block command in those cases where LSD 4104 is configured to include a data storage array having logical block address (LBA) architecture. LSD management commands 4110 result in the flow of data 4111 between LSD 4104 and HD 4102.

HD 4102 can also include (internal) software application 4114. By internal application it is meant that software application 4114 can utilize HDFS 4106 (which is typically part of the host device operating system 4116) and LSD driver 4108 to communicate with LSD 4104. Such software applications can include an application 4118 each of which typically resides in host device main memory (that can take the form of a hard disk drive, or HDD, as well as non-volatile memory such as FLASH memory).

For example, computing system 4100 can be a portable media player, and application 4118 may be a media player application. In this case, for example, LSD 4104 may store various digital media files such as audio files in the form of MP3, video/audio files in the form of MP4 or still photograph files in the form of JPEG. The LSD management commands 4110 may be, for example, data access commands to retrieve the data of the files from LSD 4104.

In the Fig. 17 example, the data access commands may be HDFS commands to read a portion of a file allocation table (FAT) stored in a mass storage area 4120 of the LSD 4104 and to then read one or more data blocks from the mass storage area 4120. For example, the mass storage area 4120 may be a memory array and the mass storage area may be managed by the HDFS 4106 and not by a file system local to the LSD 4104. For example, LSD 4104 can include controller 4122 and mass storage array 4120 having a first storage area 4124 and second storage area 4126. It should be noted that storage array 4120 can be formed of an array of memory cells (such as FLASH). In this particular case, even though mass storage array 4120 can be presumed to be an array of FLASH memory cells, the invention is not limited to only FLASH type memory cells since it is contemplated that the invention can be used with any appropriate type of memory cell.

Controller 4122 includes flash manager 4128 that can manage first storage area 4124, acting at the behest of HDFS 4106. In a particularly useful arrangement, first storage area 4124 can be an LBA-based mass storage array. Accordingly, the location of blocks of data stored in first storage area 4124 can be specified using logical block addressing (LBA) where each block can be, for example, on the order of 512 or 1024 bytes each. In this way, first storage area 4124 can be fully backward compatible with any contemplated legacy mass storage architectures (i.e. able to work in conjunction with legacy hosts) and more specifically LBA type systems. In particular, LSD 4104 (in particular, first storage area 4124) can operate under standard LBA architecture using legacy interfaces, busses, and all associated protocols providing for full compatibility with an installed base of legacy products.

Controller 4122 further includes an indexer 4130 that is configured to index data stored in the first storage area 4124 of the LSD 4104 without involvement of the host device 4102. In one example, the indexer 4130 indexes data as the data is being stored to and/or read from the first storage area 4124 by the HD 4102. Thus, for example, the indexer 4130 may discern the data content being transferred between the first storage area 4124 and the HD 4102 and, based thereon, index the data in the first storage area 4124. The monitoring and indexing is done by the LSD 4104 and the result is stored as "index data" in the second storage area 4126 of the mass storage array 4120. As another example, the indexer 4130 may generate index data based on commands being used by the host device 4102 to access the first storage area 4124. As yet another example, the indexer 4130 may, without the involvement of the host device 4102, access data in the first storage area 4124 to generate index data regarding the data in the first storage area 4124.

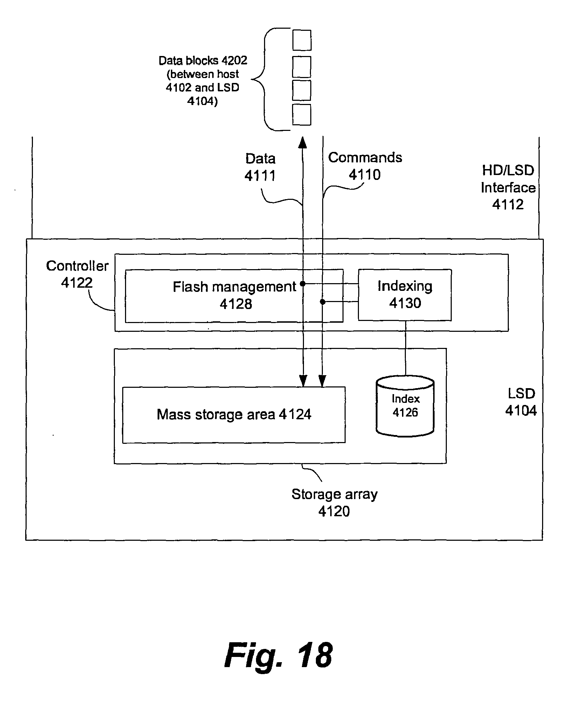

Fig. 18 illustrates an example of how the data indexing may occur in greater detail based on observing data access operations by the HD 4102 to the LSD 4104, the observing being without involvement of the HD 4102. Referring to Fig. 18, commands 4110 are provided from the HD 4102 to the LSD 4104 via the HD/LSD interface 4112. As discussed above, the commands 4110 are provided to the flash manager 4128 of the controller 4122 to manage first storage area 4124 acting at the behest of HDFS 4106. The indexer 4130 observes the commands 4110 and, based thereon, in conjunction with data 4111 observed to be stored to or read from the first storage area 4124, indexes the data in the first storage area 4124. The commands 4110 may be used to characterize the data access to inform the indexing functionality. The index information is provided to be stored in the second storage area 4126 of the storage array 4120.

While the commands 4110 are illustrated as being provided to the flash manager 4128 of the controller acting at the behest of HDFS 4106, in other examples, commands or other signals are provided from the HD 4102 to the LSD 4104 that are not as a result of HDFS operations. For example, such command or other signals may be provided based on other operations, such as driver level operations that are not as a result of HDFS operations.

The data access characterization may help to distinguish, for example, between the data that is indexed being video, music or photo, which can inform the indexing functionality. Thus, index information provided to be stored in the second storage area 4126 of the storage array 4120 may be based at least in part on the data access characterization by the indexer 4130, whether directly being the determined data access characterization or a result of further processing the determined data access characterization.

For example, if it is discerned by the indexer 4130 that the HD 4102 provides as a command 4110 a single data read command that is a read data block command, and there are no further corresponding data read commands, then it may determine that a photo read, by the HD 4102, has occurred from the first storage area 4124. As another example, if it is discerned that the HD 4102 provides a command 4110 to read the File Allocation Table (FAT) of the first storage area 4124 (presumably to map the data location), and then it is discerned that the HD 4102 provides commands 4110 to read data blocks from the first storage area 4124 at a fixed rate/throughput, then the indexer 4130 can discern that this group of commands corresponds to a read of a music file from the first storage area 4124. As yet another example, if it is discerned by the usage data collector 4130 that the HD 4102 provides a command 4110 to read the File Allocation Table (FAT) of the first storage area 4124 (presumably to map the data location), and then the indexer 4130 discerns that the HD 4102 provides commands 4110 to read data blocks from the first storage area 4124 at a variable rate/throughput, then this group of commands can be characterized as a read of a video file from the first storage area 4124. (In some cases, though, the FAT data may be cached in the HD, so it may be difficult or impossible to correlate subsequent data access commands to the FAT read.) These are examples of what the indexer 4130 can discern from the commands 4110 from the HD 4102 to the LSD 4104 and other examples are possible. While many of the examples herein are relative to read data access, the data access being characterized may also (or instead) include write data access, such as write data access to load media files into the first storage area 4124.

While these are examples of data access patterns, it should be understood that the patterns can be pre-loaded in the LSD 4104 (possibly even dynamically updated, examples of which are discussed later in this patent application) and used as a reference to identify specific types of data access by the indexer 4130. In use, the patterns may be quite simple, as in the examples, or may be much more complex.

Furthermore, the indexer 4130 may use the content of data blocks 4202 being transferred between the HD 4102 and the first storage area 4124 of the LSD 4104 (e.g., in either or both of a read and write direction) in the process of providing index information of the data stored in the memory array 4124. For example, the indexer 4130 may discern the content of a data block includes the string "JFIF," may characterize the data block as corresponding to a photo (JPEG) and may use this characterization in the process of providing index information. As another example, an MP3 file typically has "tags" starting with the string "ID3", PDF files starts with "%PDF", and mp4 video files include the string "ftyp3gp." Thus, for example, each "tag" may be considered as one specific pattern type, which can be manipulated like any other pattern, such as being pre-loaded, updated, or otherwise.

The data characterizations may be, for example, stored in the index as part of the index data. Thus, for example, the data characterizations may be used to determine search result and/or to further refine search results that would otherwise be provided based on a word or data index alone.

Furthermore, the indexer 4130 may directly employ the content of data blocks 4202 being transferred between the HD 4102 and the first storage area 4124 of the LSD 4104 (e.g., in either or both of a read and write direction) as index data of the data stored in the first portion of the memory array 4124. Such content may include, for example, textual data or metadata directly included in the content of the data blocks 4202.

In some examples, the content to be indexed may be further processed to recognize data indirectly represented thereby. Thus, for example, if it is determined by the indexer 4130 that the data has been characterized as an audio file, then digital voice recognition may be used to recognize content data (e.g., such as spoken or sung words) to be indexed. Similarly, image processing may be used to recognize the content if it is determined by the indexer 4130 that the data has been characterized as a video file. Thus, for example, it may be possible to recognize the general subject matter or even specific details of the video file that can then be stored as part of the search index. In some examples, the index may also or instead have characteristics of a catalog such that that index can be used for responding to search queries that are not just based on content desired to be present in the search results but, rather, may also or otherwise be based on behavior (or other metadata, not strictly content-based, with respect to particular documents (such as media) stored in the memory array of the LSD. For example, the indexing may be applied to the management of media by one or more programs executing in the HD and accessing the media using LBA-based commands, and it may be desirable to base a search on information in a catalog such as: • How many times has a song stored in the memory array of the LSD has been played?
- When was a song stored in the memory array of the LSD played last?
- Was a song stored in the memory array of the LSD played to the end, or was the playing aborted?

For example, when a media item is being played, the indexer 4130 may operate to update some fields in the catalog for the item, such as "date last played" or "number of times played."

Furthermore, for example, the catalog may be updated based on discerning, from commands 4110 and/or data 4111, operations such as: • defining a new play list - a new record is added to the play list catalog; and
- deleting an item - a record is deleted from the catalog.

The searching of the catalog may be done as a query such as "search?artist=madonna&number_times+_played=0" - means "find all songs by Madonna that I never played." The searching may also or otherwise be based on content in the songs, such as "London" or "guitar solo" or other content that has been discerned and indexed by the indexer 4130.

In addition to monitoring the commands 4110 and data 4111 passed between the host device 4102 and the LSD 4104, the indexer 4130 may operate by directly accessing the data in the mass storage area 4124. Thus, for example, in this way, the indexer may operate, such as in the background, to generate index data for storage in the index 4126, still without involvement of the host device 4102 to populate the index 4126.

The second storage area 4126 may include the index generated by the indexer 4130. For example, in Fig. 18, the second storage area 4126 may include any of various types of index data now known or in the future known to be usable by a search engine to return search results, relevant to a corpus of data, in response to one ore more search queries.

The index may be stored in the storage array 4120, possibly even invisible to the HDFS 4106. Having described some examples of how index data may be generated by the LSD 4104, we now discuss some examples of how the index data may be used. In general, the index data may be used by the LSD 4104 itself, by the HD 4102 and/or by an external process.

Referring again to Fig. 17, the system 4100 may be configured such that the search index 4126 may be obtained and/or used by the HD 4102. For example, the search index 4126 may be stored within the mass storage area 4124 of the storage array 4120. See, for example, United States patent application no. 12/029,356, referenced above in the "Related Applications" section, which describes an example of a method to write into the mass storage area of an LSD even though this area is managed by an external file system (HDFS). In this case, the search index 4126 is accessible to the HD 4102 using operations that may otherwise be used to generally access data in the mass storage area 4124. Thus, for example, an application 4118 executing on the HD 4102 may operate such that the HDFS 4106 causes commands 4110 to be provided to LSD 4104 via LSD driver 4108 and HD/LSD interface 4112. Such commands 4110 may be provided to flash manager 4128 to cause the search index 4126 to be provided to HD 4102 as data 4111 via HD/LSD interface 4112.

The search index thus obtained by HD 4102 may be used, for example, by an application 4118 being executed by the HD 4102. The search index thus obtained may be provided from the HD 4102 to an external device or system, such as to a media management system on a computer or other server to which HD 4102 may be connected. Such search index may be used by that external device or system, for example, in at least partial determination of how that external device or system interacts with HD 4102 or otherwise operates.

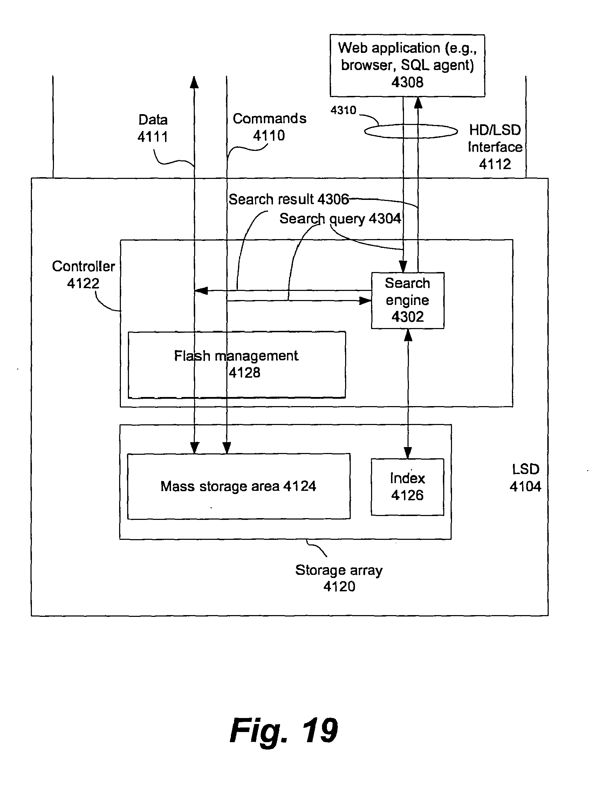

Referring now to Fig. 19, this shows an example configuration of a system in which the index may be used by a search engine 4302 executed by the LSD 4104 itself. In the example, the flash manager 4128 may operate to receive a command 4110 or part of a command 4110 from the host device 4102 that is a search query 4304. The search engine 4302 may access the search index 4126 and, based on the search query 4304, return a search result 4306 to the host device 4102. As another example, an indexing result may be used for content screening by the LSD, i.e., an application looking for particular strings like "porn," so as to forbid access to unauthorized content in the memory array of the LSD. The content screening may be carried out, for example, in the HD (resulting, for example, in avoiding access requests to particular content in the memory array of the LSD or, as another example, may be carried out in the LSD itself, blocking access requests, whether write access requests or read access requests, that are received from the HD.

As another example, an application 4308 (e.g., a web application, such as a browser or SQL agent) may be operating on the host device 4102 and may interact with the search engine 4302 (such as through a logical interface 4310 other than the logical interface used for data access operations) to obtain a search result 4306 in response to a search query 4304.

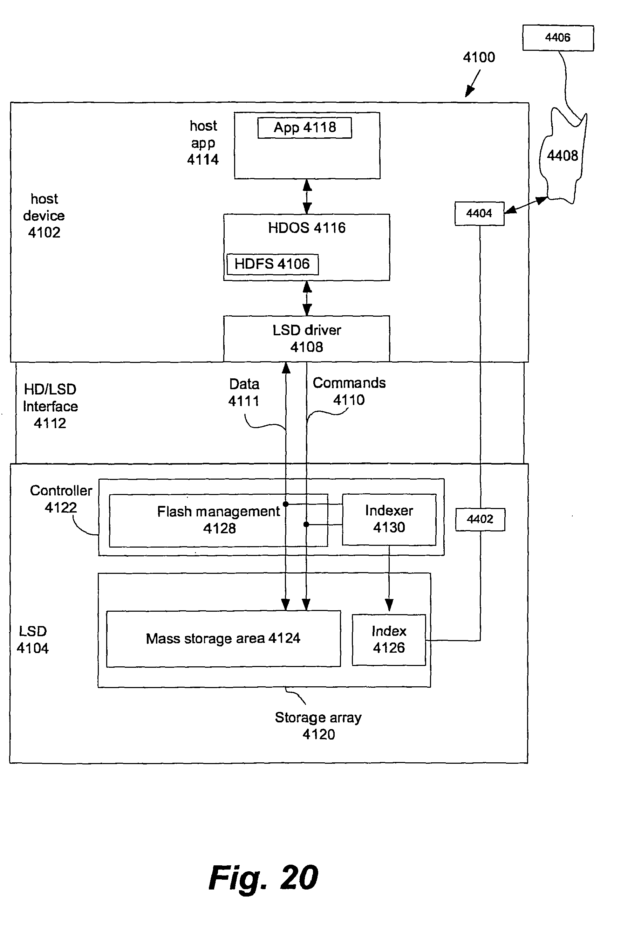

Fig. 20 illustrates an example configuration in which some or all of the search index 4126 may be transferred to or be accessible to an external device (such as device 4406 coupled to HD 4102 via a network 4408) outside of a master/slave paradigm such as implemented, for example, by the host application 4114, HDFS 4106 and LSD driver 4108 in cooperation with processing of LSD 4104. An example of data transfer or data access outside a conventional master/slave (or host/slave) paradigm is described, for example, in United States patent application no. 12/029,356, referenced above in the "Related Applications" paragraph.

Referring still to Fig. 20, an agent 4402 on LSD 4104 is in communication with an agent 4404 on HD 4102. Thus, for example, communication between agent 4402 on LSD 4104 and agent 4404 on HD 4102 may be via a secure path that does not require intervention by HDFS 4106 and/or such that the transferred index data is not otherwise accessible to processing (such as host application 4114) on HD 4102.

Furthermore, device 4406 may also perform storage operations (as mentioned above) regarding the search index 4126, such as to clear the search index 4126 or portions of the search index, modifying information used to determine the search index (e.g., such as parameters used to perform the voice recognition or image recognition processing), or other such information.

Furthermore, using the secure path, the index 4126 may be accessed by device 4406, such as for the purpose of responding to a search query, without transferring the search index 4126 to the device 4406. In one example, the agent 4402 may include search engine functionality that can provide a query response to the external device 4406, by processing the search index 4126 on the LSD 4104, based on a search query provided to the agent 4402 from the external device 4406. As discussed above, the search query may be to search for particular content and/or to utilize metadata in the index 4126 to determine a query response.

In general, using the Fig. 20 configuration as an example, an application that processes the search index 4126 may be accessed via a logical interface shared with any relevant application in the HD (or in the LSD). The fact that the LSD exposes an internet/IP/network interface makes it easier for a standard internet client application in the HD to access the index in the LSD as a standard server. Thus, there may be a standard Internet/IP-based client application (e.g. web browser or SQL client) running on the HD and the index 4126 may be accessed as a server (e.g., Web Server or SQL server) in the LSD. In any case, the server is in the LSD, not in the HD, and the client is either in the HD or in a remote device.

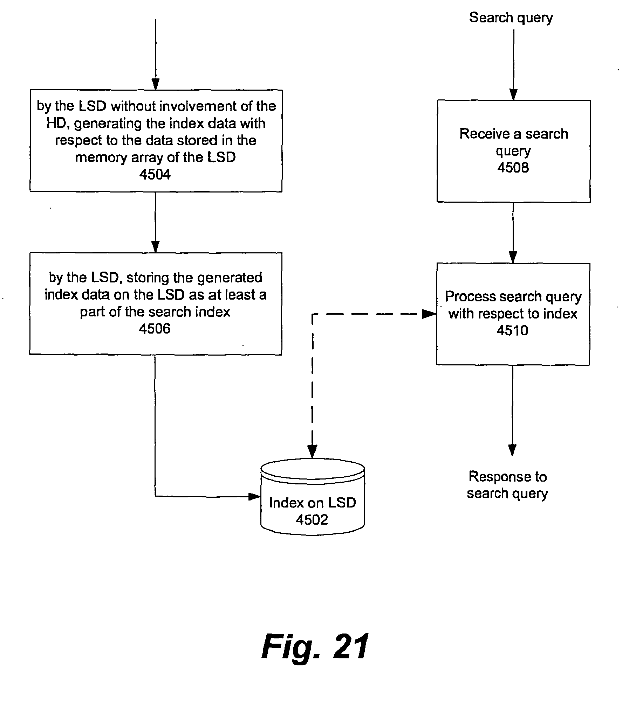

We now turn to Fig. 21, which is a flowchart illustrating, in a broad aspect, a method by which an LSD may generate index data for an index 4502 on the LSD. At 4504, without involvement of the HD, the LSD generates index data with respect to data stored in a memory array of the LSD. The memory array of the LSD is managed as data blocks by the HD. At 4506, the LSD stores the generated index data on the LSD as at least a part of the search index 4502. Thus, for example, a search query may be received (4508) and the search query processed (4510) with respect to the index 4502 to generate a response to the search query.

We have thus described a system and method by which an LSD may index data in a memory array of the LSD without involvement of a host device (HD). In addition, we have described how the index may be processed to, for example, respond to search queries. We have also described, for example, how the search index may be employed for content screening.

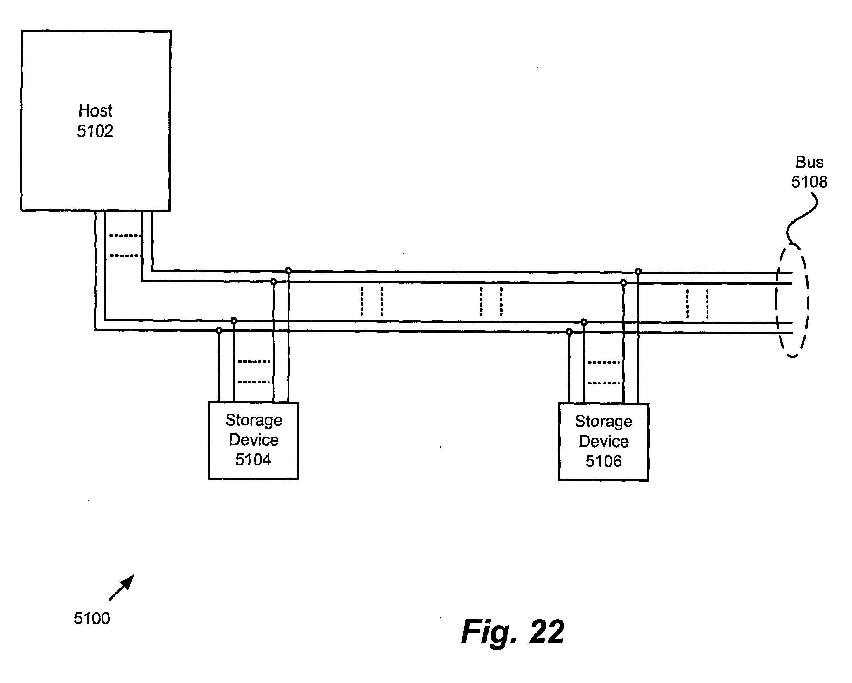

Fig. 22 illustrates a simplified block diagram of a master/slave system 5100 in accordance with an embodiment of the present invention. By way of example, according to particular embodiments described herein, a slave device may take the form of a local storage device such as but not limited to any of the aforementioned storage devices described above while the master device takes the form of a host device such as but not limited to any of the aforementioned host devices described above. As described above in the background, master/slave is a model for a communication protocol in which one device or process has unidirectional control over one or more other devices. In a conventional system, once a master/slave relationship between devices or processes is established, the direction of control is always from the master to the slaves, i.e. a slave cannot initiate a transaction. In some systems, a master is elected from a group of eligible devices with the other devices acting in the role of slaves. Accordingly, master/slave system 5100 (hereinafter also referred to simply as system 5100) includes at least master device 5102 (hereinafter also referred to as host device 5102 or host controller 5102), first slave device 5104 (hereinafter also referred to as storage device 5104) and second slave device 5106 (hereinafter also referred to as storage device 5106) that relate to each other at least by way of a conventional master/slave paradigm.

System 5100 also includes a number of communication or signal lines 5108 (hereinafter referred to as bus 5108) used to connect host device 5102 with peripheral storage devices 5104 and 5106. It should be noted that even though only two peripheral storage devices are shown, more or fewer storage devices can readily be coupled to bus 5108. The actual number of signal lines that constitute bus 5108 may also be widely varied. By way of example, some modern buses have a relatively small number of signal lines (e.g. 8-16 signal lines), while other modern buses may have over 100 lines that may themselves be logically divided into subsets of lines that effectively act as sub-buses (e.g., an address bus, a control bus, a data bus, etc.).

Each storage device typically includes a corresponding unique and permanent device identifier. In some bus protocols, the permanent device identifier is used to identify the device in bus communications. In other protocols, the host controller will assign a temporary device identifier and/or an associated set of addresses to each of the devices coupled to the bus. Typically, such temporary device identifiers and/or addresses are assigned upon connection and initialization of the respective storage device 5104 or 5106 with the bus 5108 and host controller 5102, or in the case of a removable memory card, upon insertion of the card into an associated card reader. Although the specifics of the bus protocol and the memory management protocol will vary based on the nature of the particular bus and storage devices employed, the host controller 5102 is typically aware of each storage device's respective device identifier(s).

Typically, a specific device attached to the bus 5108 will know whether it is supposed to respond to a particular communication or command based upon the communication sent from the host 5102, which typically uses device identifiers and/or addresses in targeting communications/commands to specific storage devices. That is, in some protocols, each communication will generally include a device identifier that informs the storage devices whether or not they are the target of the communication. In other protocols, the device identifier is not explicitly sent as part of each memory related communication. Rather, the command may identify an address to which the command (e.g., a read, write or erase command) is addressed. In general, devices that are not identified or addressed by the communication will simply ignore the communication.

In the illustrated embodiment, communications are sent over the shared bus 5108 to the storage devices 5104 and 5106 according to a suitable bus protocol. The bus protocol specifies how information is communicated over the bus. Again, suitable bus protocols include the Secure Digital Card (SD) protocol, the Multi Media Card (MMC) protocol and the Universal Serial Bus (USB) protocol, although a wide variety of other bus protocols may be used as well. Furthermore, as will be appreciated by those familiar with the art, current storage devices employ a wide variety of different architectures and it is expected that new architectures will continue to be developed. In general, the present invention may be employed in conjunction with a wide variety of different types of memory, so long as the storage device has suitable processing power.

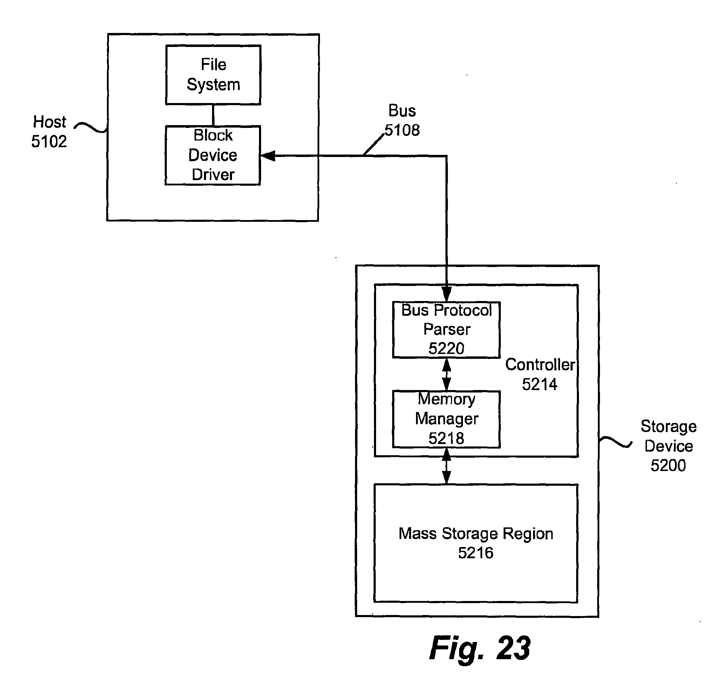

Fig. 23 is a block diagram that illustrates the general structure of a storage device 5200 representative of each of the storage devices 5104 and 5106 in more detail in accordance with one embodiment of the present invention. In various embodiments, storage device 5200 may be a conventional or legacy storage device. As previously mentioned, the storage device 5200 may be either a removable or a non-removable device. In the illustrated embodiment, the storage device 5200 is a conventional removable FLASH memory card and generally includes a memory controller 5214 and a mass storage region 5216. The memory controller 5214 includes a memory manager 5218 and protocol parser 5220.

As will be understood by those familiar with the art, the protocol parser 5220 is configured to analyze communications sent over the bus 5108. More specifically, the protocol parser 5220 is configured to analyze a communication sent from the host 5102 and determine whether storage device 5200 is an intended target of the bus communication based on a device identifier or address specified as part of the communication. If the bus communication is a memory operation directed towards storage device 5200, the communication is passed to the memory manager 5218 which in turn performs the requested operation accessing mass storage region 5216. Other instructions directed at the storage device 5200 are responded to by either the protocol parser 5220 or the memory manager 5218 as appropriate. Instructions and communications directed at other devices are generally simply ignored by storage device 5200.

In embodiments where at least one of the storage devices in removable, the storage device identifier is preferably a permanent device identifier associated with the targeted storage device. As will be familiar to those skilled in the art, many types of storage devices such as FLASH memory cards have an associated permanent device identifier that may be used for this purpose. However, in embodiments that utilize storage devices that do not include permanent device identifiers, a device identifier assigned by the host 5102 may be used. Here it should be noted that in some cases, a single physical device may include two or more addressable storage regions (or devices) within the physical device. In this case, each storage region may have a corresponding device identifier and/or set of logical addresses. Additionally, if a particular command is addressed to all storage devices on the bus 5108, then either a broadcast identifier that indicates that the command was addressed to all devices on the bus, or a list of all of the targeted device identifiers may be used.

Generally, a communication such as a command transmitted from the host 5102 includes an operation identifier that identifies the type of bus protocol operation to be performed. The identified operations may be memory operations such as read, write and erase operations; memory management commands such as an instruction for a targeted storage device to create a partition; initialization and authentication requests; interrupts; acknowledgements; error signals and any other bus related commands or operations.

Referring back to system 5100, the host 5102 controls various operations of the storage devices 5104 and 5106. By way of example, the host transmits commands to the storage devices instructing the storage device to write data, read data and erase along with other housekeeping operations. Commands are communicated from the host 5102 over the bus 5108 to one or more targeted storage devices connected with the bus. Only the storage device(s) targeted by a given command (e.g., by a device identifier and/or address within the command) accepts the command and executes an operation based on the command. It should be noted that, in the described embodiments, only the host 5102 is capable of transmitting commands over the bus 5108.

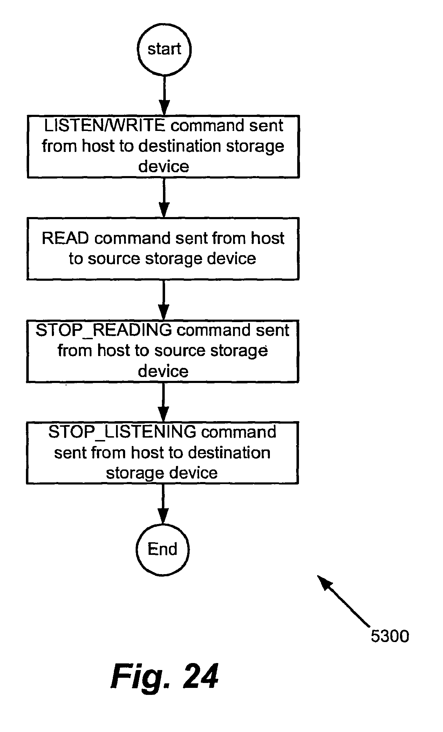

For the purpose of illustrating a basic example of a particular embodiment of the present invention, a process 5300 of writing data from source storage device 5104 to destination storage device 5106 is described with reference to the flowchart of Fig. 24 and the system of Fig. 22. Process 5300 begins at 5302 with host 5102 sending a LISTENAVRITE command over bus 5108 targeting storage device 5106 and instructing storage device 5106 to listen to the bus and write data from the bus into the device's memory. In one embodiment, the LISTEN/WRITE command instructs storage device 5106 to begin listening to the bus 5108 at a specific time TI and write data from the bus after time TI into the device's memory. More specifically, in embodiments in which a time division multiplexing protocol is used to organize the transfer of data over the bus 5108, the host 5102 may instruct the storage device 5106 to begin listening to the bus 5108 at a specific time slot XI. In yet another embodiment, the slave device 5106 can be instructed to start listening immediately and wait until data is available on the bus 5108 to write.

Host 5102 also sends a READ command over bus 5108 at 5304 targeting storage device 5104 and instructing storage device 5104 to read data from the device's memory and to output the data onto bus 5108. In one embodiment, the READ command instructs storage device 5104 to begin reading and outputting data onto the bus 5108 at a specific time, preferably at or after TI so as to not lose any data. Again, in embodiments in which a time division multiplexing protocol is used to organize the transfer of data over the bus 5108, the host 5102 may instruct the storage device 5104 to begin reading and outputting data onto the bus 5108 at the specific time slot XI. In another embodiment, the slave device 5104 is instructed to read and output data onto the bus immediately.

In this way, storage device 5106 pulls the data directly output from storage device 5104 from the bus 5108 and writes the data into memory. More particularly, unlike in conventional arrangements, the data output from storage device 5104 is not first temporarily cached in the host 5102 or in any other device prior to being pulled from bus 5108 and written into storage device 5106. Thus, while the host 5102 initiates the transaction of data between storage device 5104 and storage device 5106, the host 5102 is not involved in storing and/or transmitting data.

Thus, while various master/slave bus protocols (such as the SD protocol) dictate that only the host may initiate transactions and send commands, the invention circumvents this conventional paradigm. That is, the invention enables the direct transfer of data between storage device 5104 and 5106 while enabling the use of legacy devices and master/slave protocols as each storage device presumes that the data it is sending or receiving over the bus 5108 is being sent to or received from the host 5102. It should also be appreciated that, in this way, the total quantity of data transmitted over the bus 5108 may be approximately cut in half; that is, since data may be written directly from one storage device to another storage device, rather than first cached and then re-transmitted by the caching device, the amount of data transmitted over the bus 5108 for a given transaction may be roughly cut in half and hence, the total bandwidth required may be similarly reduced. As a result, the data transfer rate between the storage devices themselves may be increased and, furthermore, the processor requirements of the host 5102 may be reduced.

In one embodiment, storage device 5104 continues reading and outputting data onto the bus 5108 until such time as the host 5102 issues a STOP_READING command at 5306 targeting device 5104 and instructing storage device 5104 to stop reading and outputting data onto the bus 5108. Similarly, storage device 5106 continues pulling data from the bus 5108 until such time as the host 5102 issues a STOP_LISTENING command at 5308 targeting device 5106 and instructing storage device 5106 to stop pulling data from the bus.

In an alternate embodiment, the READ command also instructs storage device 5104 to continue outputting data onto the bus 5108 until such point as a duration DI has elapsed. Similarly, the LISTEN/WRITE command may also instruct storage device 5106 to continue pulling data from the bus 5108 until a duration D2 has elapsed. In a preferred embodiment, D2 is at least as long as DI so as to not lose any data. By way of example, if the host 5102 knows the amount of data to be transferred (e.g., the number of bits) and the operating frequency of the bus 5108, then the host can calculate the duration of time needed to transfer the data and subsequently instruct storage device 5104 to output data for this duration and instruct storage device 5106 to continue listening and writing the data for this duration.

In another alternate embodiment, the LISTEN/WRITE command instructs storage device 5106 to listen to the bus 5108 during specific time slots Xn, which may or may not be consecutive. Data on the bus 5108 during the time slots Xn are then written into the device's memory. In this alternate embodiment, the READ command similarly instructs storage device 5104 to begin reading and outputting data onto the bus 5108 during the specific time slots Xn. Again, it should be noted that the time slots may not be consecutive. More particularly, the host 5102 may instruct the storage device 5104 to output data A onto the bus 5108 in time slots X1, X2, X3 and X4 which, again, may not in some embodiments be consecutive. The host 5102 would then instruct storage device 5106 to listen and pull data from the bus 5108 during time slots X1, X2, X3 and X4.

The foregoing description, for purposes of explanation, used specific examples to provide a thorough understanding of the invention. However, it will be apparent to one skilled in the art that the specific details are not required in order to practice the invention. Thus, the foregoing descriptions of specific embodiments of the present invention are presented for purposes of illustration and description. They are not intended to be exhaustive or to limit the invention to the precise forms disclosed. It will be apparent to one of ordinary skill in the art that many modifications and variations are possible in view of the above teachings.

For instance, although process 5300 was described with reference to transferring data from a single storage device 5104 to another single storage device 5106, it should be appreciated that the host 5102 may issue a multicast or broadcast command instructing a plurality of storage devices to listen to the bus at specific times and write the associated data to memory. In this way, multiple copies of the data can be stored on a plurality of devices simultaneously.

Additionally, although the foregoing description has been described in the context of reading data from one memory device and transferring data to another memory device where it is to be stored, it should also be appreciated that aspects of the present invention are applicable to devices other than those especially configured as storage devices. By way of example, aspects of the present invention may be useful in transferring communications and data to and from external networks. More specifically, a first slave device coupled with a bus may be a network card acting as a network bridge to an external network or protocol, such as WiMax, Wi-Fi or Bluetooth, and the second slave device may be a storage device coupled with the bus. By way of example, a master device may instruct the first slave device to directly pass data it receives or has received from an external network through the bus to the second slave device, or instruct the second slave device to send data to the first slave device to be communicated over the external network. In such embodiments, the network card may be a card on the SD bus, using SDIO protocol.

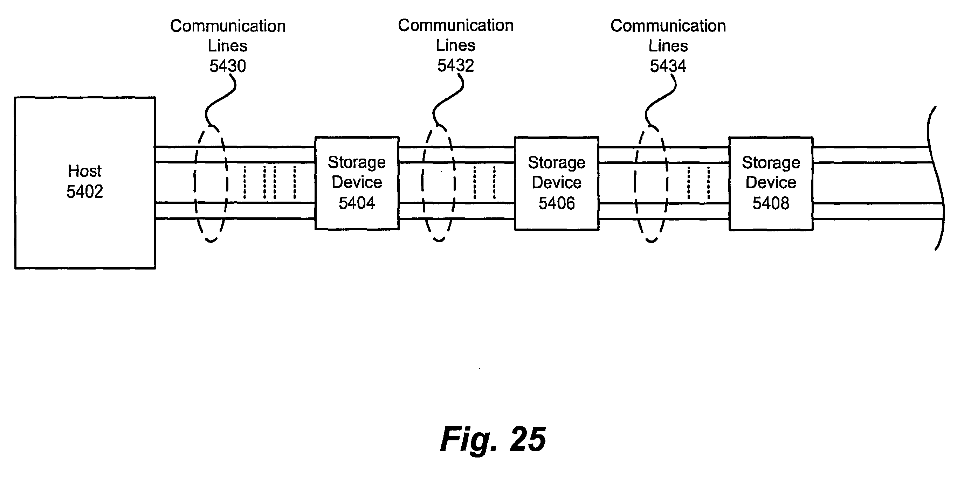

Furthermore, although foregoing description has been described in terms of a particular bus/device configuration, in alternate embodiments the storage devices may be connected in other suitable configurations or arrangements. By way of example, in the embodiment illustrated in Fig. 25, each device, including slave storage devices 5404, 5406 and 5408, is connected serially in a daisy chain arrangement. Such an arrangement may be desirable in various high speed consumer electronics applications, among others. Although only three storage devices are shown in the embodiment illustrated in Fig. 25, it will be appreciated that more or fewer devices may be arranged in the daisy chain arrangement. In general, two to five devices are typically connected in such an arrangement.

By daisy chain arrangement, it is meant that pins of one device are electrically connected to pins of a neighboring device. The connection can be either by hard soldering, by a printed circuit layout or by connection of socket pins. For example, a second set of pins from storage device 5404 can be connected to a first set of pins from storage device 5406 via a set of communication lines 5432, a second set of pins of storage device 5406 can be connected to a first set of pins of storage device 5408 via a set of communication lines 5434, and so on. In this way, all of the storage devices other than the first and last device in the daisy chain arrangement are connected to two immediately adjacent neighboring devices. Unlike the other storage devices, however, the first set of pins of storage device 5404 are connected via a set of communication lines 5430 with host 5402 serving as the master device. In one embodiment, all of the storage devices share a clock; however, this is not a requirement as each device may generate its own clock.

In the illustrated embodiment, there is no common bus that interconnects the storage devices 5404, 5406 and 5408 with one another and to the host 5402. Rather, in this configuration, each device passes to the next device downstream in the chain the commands from the host 5402 that are not addressed to itself. That is, each storage device (e.g., storage devices 5406 and 5408) other than the first device in the chain (e.g., storing device 5404) is coupled to the host 5402 by means of any upstream devices in the chain. That is, communications or information passed from the host 5402 to a particular storage device must first pass sequentially through all other upstream devices in the chain. In effect, the storage devices 5404, 5406 and 5408 along with communication lines 5430, 5432 and 5434 form a virtual communication bus that serves to pass communications and information from the host to the storage devices and from the storage devices to the host.

In one example embodiment in which the storage devices 5404, 5406 and 5408 are arranged into a daisy chain configuration, a host 5402 may transmit a LISTENAVRITE command down the string of daisy-chained devices. By way of example, host 5402 may transmit a LISTEN/WRITE command targeting storage device 5406 over communication lines 5430 where it is first received by storage device 5404. Storage device 5404 may then pass the LISTENMRITE command over communication lines 5432 where the command is then received at target storage device 5406. The LISTENAVRITE command may instruct the storage device 5406 to listen to communication lines 5434 at a specific time and to write data from the communication lines 5434 beginning at the specific time. Host 5402 may also transmit a READ command targeting storage device 5408 over communication lines 5430. The READ command may be passed by storage devices 5404 and 5406 and along communication lines 5432 and 5434 before reaching target storage device 5408 and may instruct storage device 5408 to read data from memory and output the data onto communication lines 5434 at a specific time. In this way, storage device 5406 may listen to the communication lines 5434 at the specific time instructed by the LISTENAVRITE command and write the data it pulls from the communication lines 5434, which has been directly read from storage device 5408 and output onto communication lines 5434 by storage device 5408, without first having the data be transferred to the host 5402.

In other embodiments, the storage devices 5404, 5406 and 5408 could be arranged into a daisy chain configuration as in Fig. 25 while a separate common bus interconnects the storage devices with themselves and to the host 5402. In this way, unlike conventional arrangements, the signal or communication path between the daisy chained devices is separate and distinct from a bus and therefore, again unlike conventional approaches, does not consume bus resources that could otherwise be used to pass information and/or data between the storage devices and host 5402.

In order to provide greater functionality and therefore user satisfaction, the latest portable consumer electronic products (in particular the processor included in a host device) are being asked to perform more user support (ancillary) functions in addition to those core services (media player, for example) already provided. However, since these portable consumer electronic products have both limited processor resources and RAM, any additional functions can cause the processor to run slow and consume excessive power resulting in a less than favorable user experience. One of the most used and relied upon ancillary services (especially in light of the large number of stored data files made accessible to the user) are search/query functions and other such related read functions. The search/query function can be problematic when applied to high capacity memory devices when data is stored strictly as logical blocks. For example, SanDisk Inc. located in Milpitas, CA is a worldwide Flash memory vendor that is currently selling 8GB Flash memory cards for mobile devices and has announced support for 16GB. This capacity will only grow larger as time goes on and competition expands. Such high capacity memories of this size can accommodate literally thousands of image files (JPEG), music files (MP3) or hundreds of video files (MP4) that can be transferred from an external system such as a computer to the portable consumer electronic using object transfer protocols such as Picture Transfer Protocol (PTP) or Media Transfer Protocol (MTP) each by Microsoft Corporation. An object protocol is particularly well suited to transferring files that contain a predetermined amount of data such as a digital photograph or an MP3 music file. For example, such protocols may be used to transfer digital photographs between a digital camera and a PC or to transfer MP3 music files from a host computer (such as a PC) to an MP3 player. It should be noted that object transfer protocols (such as MTP) are more focused on 'write-related' commands (e.g., CopyObject, MoveObject etc.), however, they also cover 'read- related' commands (e.g., GetPartialObject, GetObjectProp Value etc.).

With such a large number of stored data files, any search/query function can consume large amounts of processor resources and take excessive time to complete. This is particularly true since in conventional mass storage devices, content is stored at the granularity of logical blocks whereas search/query functions can be more efficiently performed when the data is stored at the granularity of a data object. For example, database management languages (e.g. SQL) are notably well suited to query or manipulate data at the granularity of objects (e.g. retrieval of data that can possibly be organized in a relational manner, as per a relational data base management system or DBMS via the SELECT command in the case of SQL). Since it is typically the search / query operations (i.e. 'read-related' commands) that consume the most processing resources of the host processor in the context of ancillary services, it would be beneficial for the overall improvement of the performance of ancillary services (and the system as a whole) if query languages (such as database management languages such as SQL) could be used in portable consumer electronic products to preferably perform read operations such as query/search and so on. It should also be noted even though database languages such as SQL also cover 'write - related commands' (e.g. CREATE, ALTER or INSERT, UPDATE, DELETE), the most advantageous use of such database languages in the context of improving the performance of portable consumer electronics products would be for execution of read functions such as query.

Although storing all content as data objects instead of logical blocks may appear to be the answer to this problem, in order to maintain backward compatibility with legacy products and installed base, a complete switch to an "object oriented" paradigm is both counterproductive and unnecessary.

Hence, in accordance with various embodiments, a more efficient allocation of host device computing resources is implemented by providing dual representation of content stored in the memory array of a local storage device (LSD) in communication with the host device. By dual representation, it is meant that the content stored in the LSD is provided in both a logical block representation (i.e., accessible via legacy mass storage interfaces) and as an object representation accessible via a data object interface where the object or object properties can be manipulated. A dual representation of the stored content provides for streamlining the operations of the host application by providing data in a form most suitable for the requesting application. Moreover, a synchronization service is performed that provides for the synchronization of the stored content between the logical block representation and the object representation. More specifically, the synchronization provides for synchronizing object property information stored in one portion of a storage array and the corresponding object stored in a mass storage portion of the array. Accordingly, there is provided at least a memory array logically configured to provide a dual representation of stored content in both a logical block representation and as a data object representation as well as a synchronization service that assures object properties are current.

In this way, whichever representation is best suited for efficient execution of a particular component of the host application can be readily accessed. For example, if the host device is a multimedia player and a core application is an MP3 decoder, then the MP3 decoder will preferentially access MP3 files stored as logical blocks. However, if a user of the multimedia player wishes to search all available audio files stored in the memory array, then a search application will preferentially use the stored content represented as objects, relying on object properties for example, to complete the search request. It should be noted that in an object oriented environment, object metadata refers to a pre-defined set of properties considered to be part of the object itself, such as in a header. In addition to object information, however, the described embodiments also consider object properties that can be defined externally to the object (such as by a LSD in which the object is stored) and not necessarily conveyed with it. For example, a number of times that an object has been accessed and/or played, etc. can be considered to be an object property.

The dual representation of the stored content can include content stored in a mass storage portion of the memory array at the granularity of a logical block as well as at the granularity of an object. Object properties associated with the stored object can be stored in a portion of the storage array logically or physically separate from that portion in which the object itself is stored. For example, the object can be a public portion (i.e., a portion visible to the HDFS) of the storage array whereas the object properties can be stored in a private portion of the memory array. Furthermore, the embodiments described provide for synchronizing the object properties corresponding to the object having correspondingly same content stored in the block representation. In this way an object stored in the mass storage portion can have associated object properties (stored as a file, table, etc.) stored in the other portion of the memory array. It is the function of a synchronizer to assure that any changes to the stored object is reflected in the associated properties.

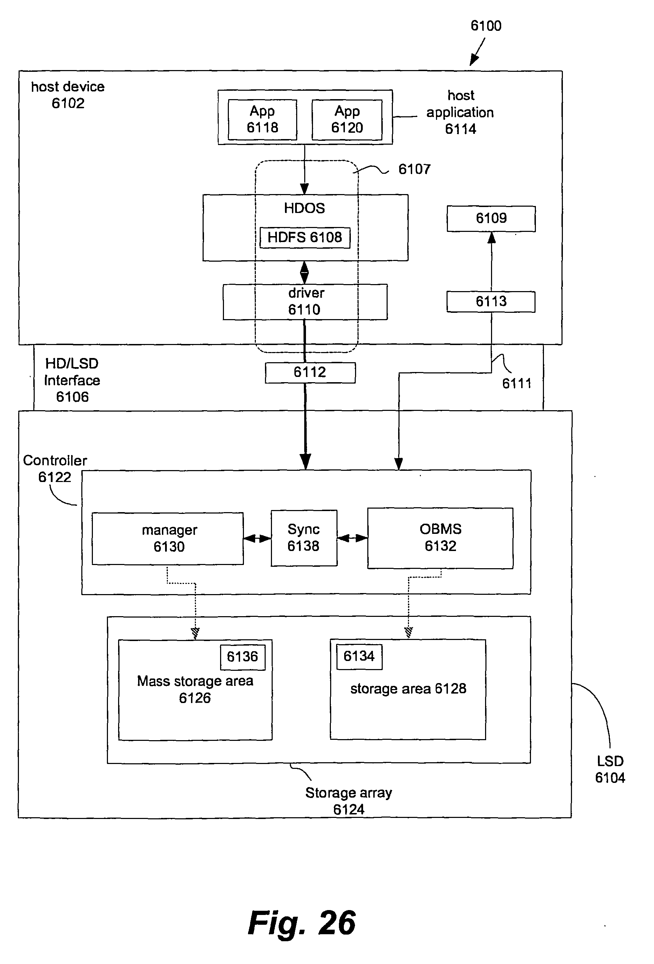

Fig. 26 illustrates a computing system 6100 including a host device (HD) 6102 and a local storage device (LSD) 6104. LSD 6104 can take the form of removable memory devices such as a memory card having a relatively small form factor and can be used to store digital data for electronics products such as cameras, hand-held or notebook computers, network cards, network appliances, set-top boxes, hand-held or other small audio players/recorders (e.g., MP3 devices), and medical monitors. Examples of a memory card include PC Card (formerly PCMCIA device), Flash card (e.g., Compact Flash Type I and II), Secure Digital (SD) card, Multimedia card (MMC), ATA card (e.g., Compact Flash card), memory stick, SmartMedia card. In addition, LSD 6104 can take the form of non-removable memory devices such as SD compatible iNAND™ embedded Flash drive manufactured by SanDisk Corporation of Milpitas CA. LSD 6104 can communicate with host device 6102 by way of HD/LSD interface 6106. It should be noted that HD/LSD 6106 can be configured as a mechanical entity (such as a socket or interconnecting bus) into which HD 6102 and LSD 6104 can mechanically connect. In some embodiments, HD/LSD 6106 can take the form of a wireless interface. HD 6102 includes a processor. However, for the sake of clarity, the processor included in HD 6102 is neither shown nor mentioned further in this discussion but is, nonetheless, presumed to be present. Typically, LSD 6104 does not utilize any interface to a device external to HD 6102 other than that interface provided by the HD 6102. HD 6102 includes legacy mass storage path 6107. Legacy mass storage path 6107 includes host device file system (HDFS) 6108 (which is typically part of the host device operating system (HDOS)) in communication with legacy mass storage driver 6110. It should be noted that HDFS 6108 can be configured to operate based upon any number of file systems. For example, HDFS 6108 can be a file allocation table (FAT) based file system. However, in other embodiments, HDFS 6108 may be a file system based on ext2, ext3, NTFS and JFFS amongst others. Thus, while the described embodiment may be practiced with other file systems, the following description focuses on FAT-based file system embodiments. By way of example, the FAT file system may be a FAT- 16 or FAT-32 file system known in the art.

In the described embodiment, HDFS 6108 can issue LSD block command 6112 to LSD 6104 using a mass storage path that can take the form of a logical interface or as a physical interface such as mass storage path 6107. Legacy mass storage driver 6110 can, in turn, pass LSD block command 6112 to LSD 6104 by way of HD/LSD interface 6106. In order to utilize an object representation of data stored in LSD 6104, HD 6102 can utilize object based (OB) interface 6109 (that can be configured as either a logical interface or a physical interface) configured to convey object-related commands 6113 over the HD/LSD storage (physical) interface / bus 6106 to LSD 6104. It is contemplated that OB interface 6109 can be integrated at the driver level or at the OS level or even at the application level (in which case it will partially use the mass storage path 6107). In the described embodiment, OB interface 6109 can utilize a logical IP (internet protocol) network interface in which case OB interface 6109 can convey application, object-based protocols usually defined over IP (e.g. SQL over IP, or MTP over IP etc.)

HD 6102 can also include host application 6114 that can utilize HDFS 6108 and legacy mass storage driver 6110 to communicate with LSD 6104. Host application 6114 can include core application 6118 arranged to provide core services (play media files, display images, etc.) and ancillary services application 6120 arranged to provide ancillary services (keyword search, modify playlist, etc.) that can be used to assist host application 6114 in management and/or execution of content stored in LSD 6104. It should be noted that ancillary services can also be run from LSD 6104 without support from host application 6114. In this way, LSD 6104 can provides its own set of ancillary services independent of HD 6102 or in support of HD 6102 in those cases deemed appropriate. It should also be noted that such ancillary services can operate at any level of the architecture described herein. For example, application 6120 could well be part of the operating system (OS). Furthermore, application 6120 can be a remote application that uses the object-based representation of stored data in LSD 6104 where application 6120 can reside in a remote device or another LSD separate from LSD 6104 but in communication with HD 6102/LSD6104.

LSD 6104 can include controller 6122 and storage array 6124 configured (either logically or physically) to include at least first portion 6126 and second portion 6128. It should be noted that storage array 6124 can be formed of an array of memory cells (such as FLASH). In this particular case, even though storage array 6124 can be presumed to be an array of FLASH memory cells, the embodiments are not limited to only FLASH type memory cells since it is contemplated that the embodiments can be used with any appropriate type of memory cell. Controller 6122 can include Flash manager 6130 that can manage at least first portion 6126 acting at the behest of HDFS 6108. In a particularly useful arrangement, data can be stored in first portion 6126 using LBA protocol. Accordingly, the location of blocks of data stored in mass storage area 6126 can be specified using LBA protocol where each block can be, for example, on the order of 512 or 1024 bytes each. In this way, mass storage area 6126 can be fully backward compatible with any contemplated legacy mass storage architectures (i.e. able to work in conjunction with legacy hosts). LSD 6104 can therefore operate using legacy interfaces, busses, and all associated protocols providing for full compatibility with installed base of legacy products. In this way, mass storage area 126 can be used to store data represented as a data object or as a logical data block.

Controller 6122 can include object based management system (OBMS) 6132 arranged to provide object management services to second portion 6128 that can be used to store and retrieve data object property information 6134 representative of and corresponding to data object 6136 stored in mass storage area 6126. A typical example of such an OBMS 6132 can be a database management system (DBMS) designed to control the organization, storage, management and retrieval of data in a database (DB). The OBMS can be responsive to any DB query / management language (such as. SQL). Accordingly, objects can be stored in area 6126 according to a DB format, or more particularly as data structures (i.e; fields, records, files and objects). OBMS 6132 can utilize FLASH manager 6130 to access / manage areas 6126 and 6128 by providing a logical object management layer on top of FLASH manager 6130. In some embodiments, however, OBMS 6132 can embed its own Flash Management layer separate from Flash manager 6130.

Object management services provided by OBMS 6132 can include retrieving and storing object property information associated with data object 6136 stored in memory storage area 6126. Data object information can include a data object information dataset. Moreover, the location of the clusters / block associated with an object stored in area 6126 can as well be considered as part of the object property that can be stored in area 6128. In the described embodiment, the data object information dataset can provide an overview of the core properties of object 6136. These core properties can include, for example, the size of the data component of object 6136 and object associations which can be used to associate data objects as well as to describe hierarchical file systems on devices. It should be noted that data object properties can provide a mechanism for exchanging object-describing information separate from the objects themselves. One of the benefits of object properties is to permit the rapid enumeration of large storages regardless of the file-system.

In order to assure that objects stored in mass storage area 6126 have a consistent object representation in area 6128, synchronizer 6138 (that can reside in LSD 6104 or HD 6102) can be used to update the object properties stored in area 6128 corresponding to the updated object stored in the mass storage area 6126. By updating it is meant any operation that can be performed on or to a data file stored (or to be stored) in mass storage area 6126 that alters or modifies any characteristic associated with a data object. It should be noted that the number and nature of the properties being managed by the OBMS 6132 and offered via the Object representation' (i.e. handled by synchronizer 6138) can be either defined by ancillary application 6120 or by LSD 6104 itself, or by both. Also the object properties managed by OBMS 6132 may well differ depending on the objects themselves. Such object properties can include, for example, name, size, authors for some, user generated tags for other, and a number of time the content has been played. It should be note that once content is identified, such as by the HD 6102 or LSD 6104, then different sets of information associated with that content can be managed by OBMS 6132

Synchronizer 6138 can perform what is referred to as a bi-directional synchronization operation. For example, a write command on mass storage area 6126 conveyed via mass storage path 6107 can result in a new or updated object available for read and or manipulation via the object (OB) path 6111. Moreover, a write related command (e.g., update or move an object) conveyed by way of OB interface 6109 can be available for read or manipulation via the mass storage path 6107. Therefore, a 'write'-based command (e.g. modify object, move object) conveyed by way of the OB interface 6109 (using at least driver 6110) can be synchronized with area 6128 by synchronizer 6138.

Therefore, when the write-related command (e.g. modify or move object) is conveyed to LSD 6104 via the OB path 6109 using OB path 6111, the object can be written to the mass storage area 6126 while the corresponding properties are updated by way of synchronizer 6138 in area 6128. However, since area 6126 is managed by HDFS 6108 (management that includes caching any FAT information on HD 6102) HDFS 6108 would not be aware of any modifications occurring internally on area 6126. Therefore in order to assure that the properties are ultimately synchronized in area 6128 when an object is written to in the mass storage area 6126, an internal write command using placeholders of a pre-determined size located in mass storage area 6126 that are recognized by HDFS 6108 can be used.

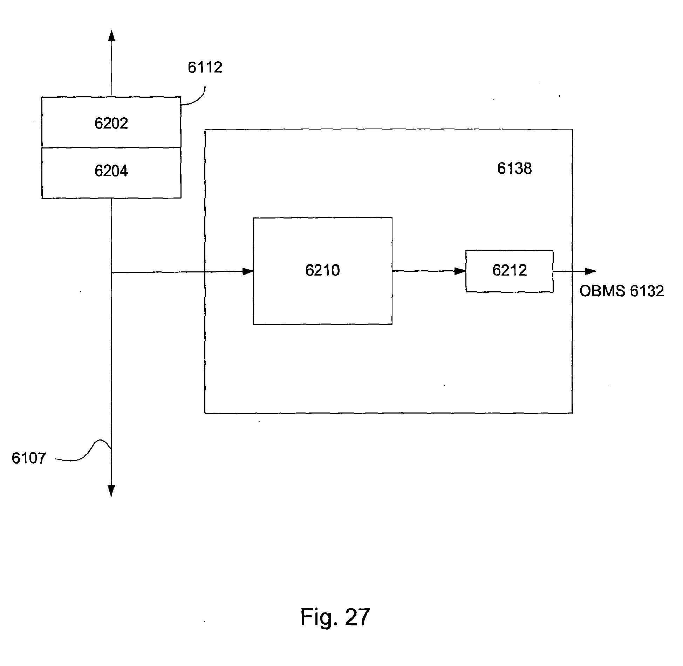

Fig. 27 shows a particular embodiment of synchronizer 6138 in accordance with a described embodiment. Synchronizer 6138 can be coupled to mass storage path between HD 6102 and LSD 6104 and is therefore able to observe any LSD block command 6112 that is passed from HD 6102 to LSD 6104. In the described embodiment, LSD block command 6112 is a FAT block-based command that can include information and data in data portion 6202 and can include a command instruction portion 6204 that instructs controller 6122 in the type of operation (read, write, copy, etc.) to be performed. Synchronizer 6138 can include at least object property extraction unit 6210 arranged to extract salient properties of an object. Extraction unit 6210 can extract appropriate object properties (filename, format, file size, etc.) which is passed to an information unit 6212. At any time, the updated information can be passed to OBMS 6132 that can, in turn, identify and update the appropriate data object property in area 6128.

Moreover, when data is written to mass storage area 6126, since synchronizer 6138 comprehends the 'FAT structure' of the data written to mass storage area 6126, synchronizer 6138 can observe LSD block command 6112 and identify and update object properties 'on the fly'. For example, data extraction unit 6210 can take the form of usage data collector 6210. Usage data collector 6210 can observe commands 6112 and, based thereon, determines data access characterizations such as, for example, usage counters to be stored as properties in the storage area 6128. While commands 6112 are provided to the flash manager 6130 of the controller 6122 acting at the behest of HDFS 6208, in other examples, commands or other signals are provided from the HD 6102 to the LSD 6104 that are not as a result of HDFS operations. For example, such command or other signals may be provided based on other operations, such as driver level operations that are not as a result of HDFS operations. The data access characterizations 6206 may be inferred by the usage data collector 6210 based on the frequency of read and/or write operations to characterize the data access.

In any case, synchronizer 6138 can operate asynchronously or in the background and read from area 6126 to identify any properties that require synchronization.

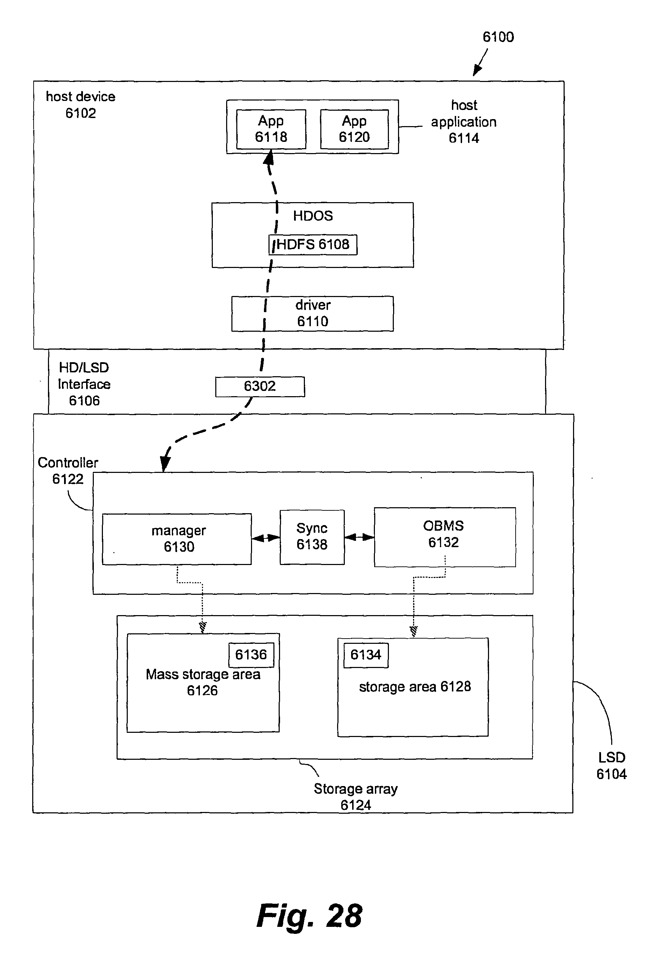

Fig. 28 shows core application 6118 executing a core service (such as reading an MP3 file) that requires reading data stored in mass storage area 6126, by read command 6302 conveyed by way of the mass storage path 6107 to LSD 6104. Synchronizer 6138 determines that since no properties of the accessed object is changed and therefore there is no need to update corresponding properties in area 6128 by OBMS 6132 (unless, for example, a counter is updated)

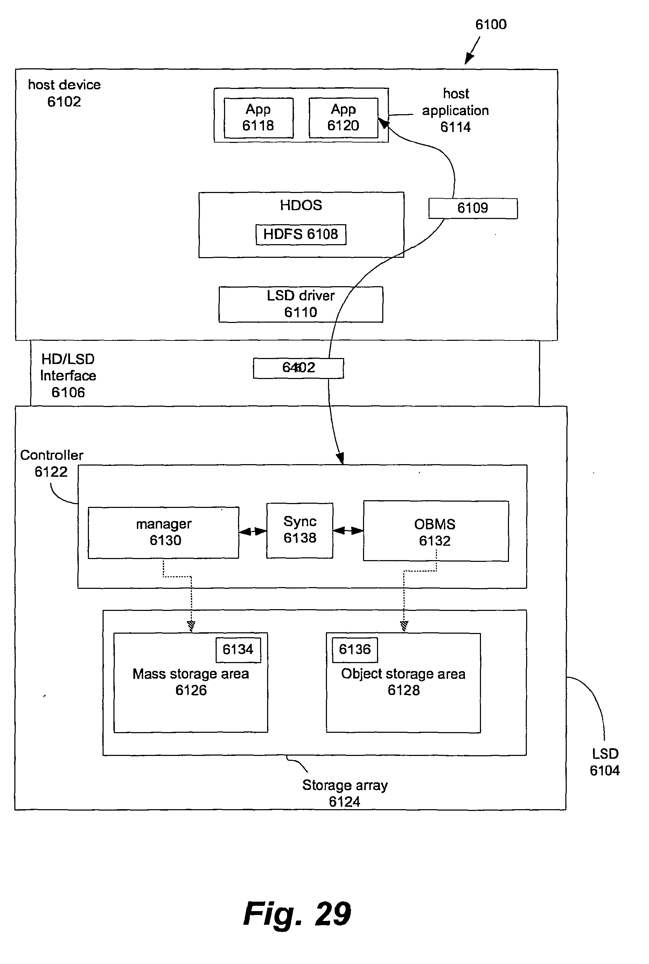

Fig. 29 illustrates the situation where HD 6102 has issued a write command 6402 (or any other command that will result in modifying object stored in mass storage area 6126) conveyed to LSD 6104 by way of mass storage path 6107. Synchronizer 6138 observes that properties associated with an object in mass storage area 6126 will be modified by the execution of command 6108 and responds by causing OBMS 6132 to update object properties stored in area 6128. It should be noted that synchronizer 6138 can also regularly check (in the background, for example), the status of content in mass storage area 6126 by periodically and regularly reading into mass storage area 6126 to determine whether any modifications have occurred to objects stored therein. In some embodiments, synchronizer 6138 can identify patterns of mass storage area 6126 access and based upon those patterns deduce properties of the object stored in mass store area 6126. In any case, OBMS 6132 updates the appropriate object properties stored in storage area 6128.

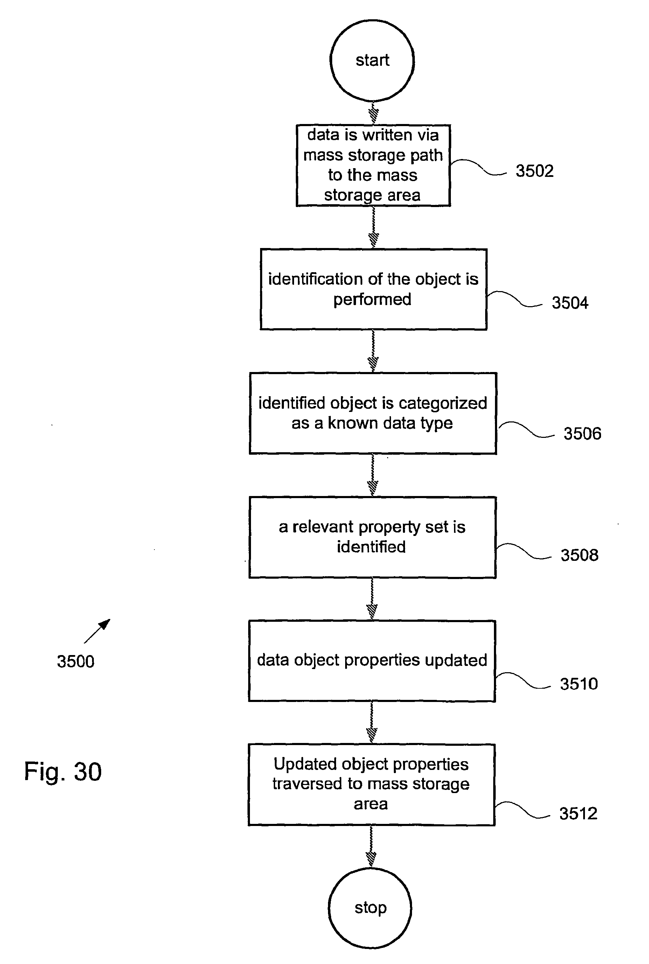

Fig. 30 illustrates a flowchart representing a process 6500 in accordance with one of the described embodiments. The process 6500 begins at 6502 by providing a data storage array. At 6504, data in the form of logical data blocks is then provided to the data storage array. At 6506, the logical data blocks are managed by a first logical interface. At 6508 data objects corresponding to the logical data blocks are provided to the data storage array. At 6510, the data objects are managed by a second logical interface. At 6512, the data stored as logical data blocks are modified by way of the first interface. At 6514, the modified data is made accessible by way of the second interface and the first interface. At 6516, a predetermined set of object properties is managed concurrent with 6514.

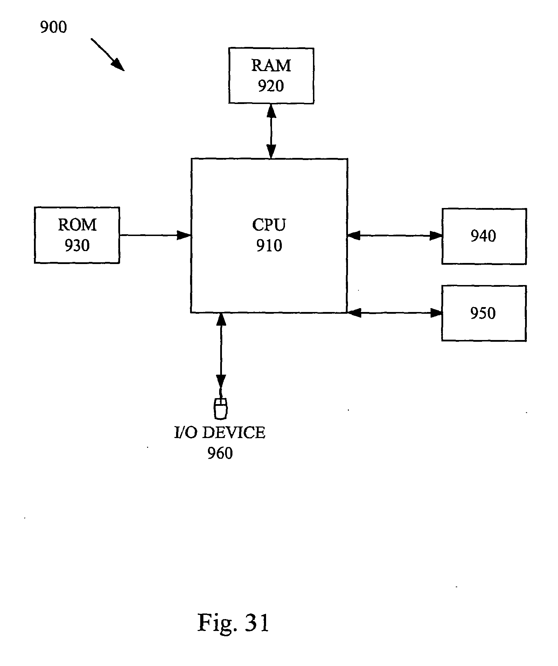

Fig. 31 shows a representative system 900 illustrating additional components typically found in host device 204. System 900 includes central processing unit (CPU) 910, random access memory (RAM) 920, read only memory (ROM) 930, and primary storage devices 940 and 950. As is well known in the art, ROM 930 acts to transfer data and instructions uni-directionally to the CPU 910, while RAM 920 is used typically to transfer data and instructions in a bi-directional manner. CPU 910 may generally include any number of processors. Both primary storage devices 940 and 950 may include any suitable computer-readable media. CPUs 910 are also coupled to one or more input/output devices 960 familiar to those of skill in the computer hardware and software arts.

In the described embodiments, mobile devices (e.g., portable media devices) can communicate with one another. This type of communication can be referred to as peer-to-peer interaction. In this regard, one mobile device can communicate (e.g., unicast) directly with another mobile device. In another example, one mobile device can communicate (e.g., broadcast, anycast or multicast) to a plurality of other mobile devices. In the peer-to-peer environment, one mobile device can communicate with one or more other electronic devices (whether mobile or stationary) in the immediate vicinity. Data sharing can be performed when such communication is available.

Data transfer could be between a mobile device and a computing device, such as a home computer or another mobile device. Typically, the mobile device and the computing device would be associated with a particular user. For example, when the mobile device is within range of a home computer (or a home network), data transfer can be performed between the mobile device and the home computer. Data transfer could also be between two or more mobile devices, or between two or more non-mobile devices. The data transfer can be automatic without any user action or can alternatively require manual approval by a user. The network devices can be associated with one another via an identification number or other suitable mechanism.

A mobile device or non-mobile device capable of receiving, transmitting and /or storing data may be referred to as a "data device." The manner by which the data arrives at the data device can depend upon implementation. For example, the data can be directly transferred to the data device, or the data can be indirectly transferred to the data device. For example, the data transfer can be between one data device to another data device. Alternatively, one data device can cause another data device to transfer desired data to a recipient data device.

The shared data can be transferred to a recipient device by file transfer or streaming. The data transferred can be received by one or more data devices. Examples of data devices include a media player, PDA, a speaker unit, a wireless transmitter/receiver unit, etc. Users of data devices can also create and distribute content through data sharing. The streaming can be limited so as to restrict the number of data devices simultaneously receiving the data. On the other hand, if the users of the data devices are subscribers to the streaming content (i.e., have a subscription), then the streaming can be unlimited as to subscribers. Managing (including storing) some portion of the media item content associated with the media item metadata may also be done to facilitate the streaming of media item content. For example, a user could begin playing such a previously stored portion of the media item content before streaming of the remaining content even begins.

Data can be shared after being purchased. For example, a recipient could purchase data from a remote server. The remote server would then cause the purchased data to be delivered to the recipient's data device. The purchase can be performed in real-time or can be deferred until a later point in time. Thereafter, the purchased data can be shared from the recipient's data device to another data device.

For example, in the work environment or other network environment, as a user comes into an employer's office to work, the user's mobile device can transfer data to the user's work computer or to a network server for the office. The data transfer can be automatic without any user action or can alternatively require manual approval by a user. The user of the mobile device can also communicate with mobile devices of coworkers or other users of the network to exchange data.

Regardless of the particular environment, the data transfer can be wireless. The wireless data transfer can be facilitated by a wireless network. One mobile device could wirelessly transmit data in a unicast fashion from one mobile device to another mobile device or stationary computing device. Still further, one mobile device could wirelessly transmit data in a multicast or broadcast fashion to a plurality of other mobile devices. It should be noted that any home-server computer can reside on any of a number of other data storage devices in a network to which computing device 200 belongs.

The advantages of the invention are numerous. Different embodiments or implementations may yield one or more of the following advantages. One advantage of the invention is legacy devices can be added or removed without consideration of modifying system hardware. Another advantage of the invention is that it can be used with any host computer without modification therefore reducing the cost and increasing the applicability of the invention. Another advantage of the invention is the data in the LSD can be indexed without consideration of modifying functionality of the HD. Furthermore, the index can be associated with a particular LSD, even if the LSD is used with multiple HD's.

The many features and advantages of the invention are apparent from the written description and, thus, it is intended by the appended claims to cover all such features and advantages of the invention. Further, since numerous modifications and changes will readily occur to those skilled in the art, it is not desired to limit the invention to the exact construction and operation as illustrated and described. Hence, all suitable modifications and equivalents may be resorted to as falling within the scope of the invention.
Aspects of the invention will now be summarised in the following Clauses:
1. A computing system, comprising:
   a host device (HD);
   and a local storage device (LSD) managed by the HD, wherein the LSD does not utilize any interface to a device external to the HD other than that interface provided by the HD, and wherein the LSD indirectly prompts the HD to execute a requested process by using a LSD logical request to prompt the HD to establish a communication path between the LSD and a launching application, wherein the LSD and the launching application logically interact over the communication path without intervention by the HD, and wherein the logical interaction causes the launching application to prompt the HD to execute the requested process wherein the LSD logical request is not created to serve a HD initiated process.
2. A computing system as recited in Clause 1, further comprising:
   a HD/LSD interface providing a communication path between the HD and the LSD;
   in the HD, a host device file system (HDFS) arranged to generate a block command; and
   in the LSD, at least one storage area managed at least by the HDFS, wherein the HDFS manages the at least one storage area by generating a block command that is passed to the at least one storage area by way of the HD/LSD interface.
3. A computing system as recited in Clause 2, wherein the LSD uses the LSD logical request to prompt the HD to establish the communication path between the LSD and the launching application by either,
   if the host device is polling the LSD, then the LSD responds to the host device's polling with the LSD logical request, wherein the host device's polling is independent of any HDFS initiated process or LSD driver initiated process, otherwise,
   generating the LSD logical request, associating the LSD logical request with a LSD interrupt signal, and raising the LSD interrupt to the attention of the host device.
4. A computing system as recited in Clause 3, wherein the LSD logical request prompts the host device to utilize a network interface to provide the communication path as a network link between the host device and a remote launching application associated with a device that is external to the HD and the LSD and that is included in a network, or the LSD logical request prompts the host device to provide the communication path as a local communication path between the LSD and a local launching application associated with a local device external to the LSD wherein the local communication path is not the network link
5. A computing system as recited in Clause 4 wherein the local device is a SIM card managed by the HD, wherein the SIM card is compliant with the SIM Application Toolkit set of commands or the SIM card is compliant with the USIM Application Toolkit set of commands
6. A computing system as recited in Clause 4 wherein the device external to the host device and the LSD is a network device (ND).
7. A computing system as recited in Clause 6, wherein when the network is an IP protocol based network, then the LSD and the SIM card are assigned an LSD IP address and a SIM IP address, respectively, the host device is assigned a host device IP address, and the ND is assigned an ND IP address.
8. A computing system as recited in Clause 7, wherein the requested process is a browser application launch.
9. A computing system as recited in Clause 8, wherein the browser application points to the LSD and wherein the browser application opens a user interface (UI) arranged to receive a user input.
10. A computing system as recited in Clause 9, wherein browser application facilitates a logical interaction between the LSD and the UI thereby providing the LSD with direct access to a user.
11. A method of indirectly prompting the HD to execute a requested process in a computing system having a host device (HD) and a local storage device (LSD) managed by the HD, wherein the LSD does not utilize any interface to a device external to the HD other than that interface provided by the HD, the method comprising:
   using a LSD logical request to prompt the HD to establish a communication path between the LSD and a launching application, wherein the LSD logical request is not created to serve a HD initiated process;
   logically interacting over the communication path without intervention by the HD;
   causing the launching application to prompt the HD to execute the requested process; and
   executing the requested process.
12. A method as recited in Clause 11, wherein the computing system further comprises:
   a HD/LSD interface providing a communication path between the HD and the LSD;
   in the HD, a host device file system (HDFS) arranged to generate a block command; and
   in the LSD, at least one storage area managed at least by the HDFS, wherein the HDFS manages the at least one storage area by generating a block command that is passed to the at least one storage area by way of the HD/LSD interface.
13. A method as recited in Clause 12, wherein the LSD uses the LSD logical request to prompt the HD to establish the communication path between the LSD and the launching application by either,
   if the host device is polling the LSD, then the LSD responds to the host device's polling with the LSD logical request, wherein the host device's polling is independent of any HDFS initiated process, otherwise,
   generating the LSD logical request, associating the LSD logical request with a LSD interrupt signal, and raising the LSD interrupt to the attention of the host device.
14. A method as recited in Clause 13, wherein the LSD logical request prompts the host device to utilize a network interface to provide the communication path as a network link between the host device and the launching application associated with a device that is external to the HD and the LSD and that is included in a network, or the LSD logical request prompts the host device to provide the local communication path as a local communication path between the LSD and a local launching application associated with a local device that is external to the LSD wherein the local communication path is not the network link.
15. A method as recited in Clause 14 wherein the local device is a SIM card managed by the host device, wherein the SIM card is compliant with the SIM Application Toolkit set of commands, or the SIM card is compliant with the USIM Application Toolkit set of commands.
16. A method as recited in Clause 15 wherein the device external to the host device and the LSD is a network device (ND).
17. A method as recited in Clause 16, wherein when the network is an IP protocol based network, then the LSD and the SIM card are assigned an LSD IP address and a SIM IP address, respectively, the host device is assigned a host device IP address, and the ND is assigned an ND IP address.
18. A method as recited in Clause 17, wherein the requested process is a browser application launch.
19. A method as recited in Clause 18, wherein the browser application points to the LSD and wherein the browser application opens a user interface (UI) arranged to receive a user input.
20. A method as recited in Clause 19, wherein the browser application facilitates logical interaction between the LSD and the UI thereby providing the LSD direct access to a user.
21. A LSD, comprising:
   a memory array logically arranged to include at least a first portion and at least a second portion wherein the first and the second portions are independent of each other, and wherein a first application manages first application content in the first portion and wherein a second application manages second application content in the second portion, wherein the first and the second applications execute independently from each other, and wherein the managing of the first application content by the first application is independent of the managing of the second application content by the second application, and wherein the LSD informs the second application of the first application content stored in the first portion, wherein the informing by the LSD is independent from a host device (HD).
22. A LSD as recited in Clause 21, wherein the managing by the first application is performed based upon a first application content management policy and wherein the managing by the second application is performed based upon a second application content management policy.
23. A LSD as recited in Clause 22 wherein the second application uses the information provided to the second application by the LSD of the first application content stored in the first portion to deduce the first application content management policy.
24. A LSD as recited in Clause 23, wherein the second application uses the deduced first application content management policy to update the second application content management policy.
25. A LSD as recited in Clause 24, wherein the second application uses the updated second application content management policy to predict an upcoming first application managing operation.
26. A LSD as recited in Clause 25, wherein the second application initiates a second portion management operation based upon the predicted upcoming first application management operation.
27. A LSD as recited in Clause 26, wherein the LSD is in communication with the HD wherein the HD includes a host device file system (HDFS), and wherein the informing by the LSD is independent of the HDFS.
28. A LSD as recited in Clause 27, wherein the first portion is managed by the HDFS, wherein the first application uses the HDFS to manage the first application content in the first portion, wherein the second portion is not managed by the HDFS, and wherein the second portion is invisible to the HDFS.
29. A LSD as recited in Clause 28, wherein the host device (HD) includes a network interface that the HD uses to establish a communication path over which the second portion accesses the network, wherein once the HD establishes the communication path, there is no further intervention by the HD except to maintain the communication path.
30. A LSD as recited in Clause 29, wherein the first application is a browser cache manager and wherein the second application is a proxy cache manager.
31. A LSD as recited in Clause 30, wherein the second portion includes at least a proxy cache managed by the proxy cache manager, wherein the proxy cache manager manages the proxy cache content in the proxy cache according to a proxy cache management policy.
32. A LSD as recited in Clause 31, wherein the first portion includes at least a browser cache managed by the browser cache manager, wherein the browser cache manager manages the browser cache content in the browser cache according to a browser cache management policy.
33. A LSD as recited in Clause 32, wherein the proxy cache manager modifies the proxy cache management policy based upon the information about the browser cache content provided by the LSD.
34. A LSD as recited in Clause 33, wherein the proxy cache manager uses the modified proxy cache management policy to predict a browser cache operation.
35. A LSD as recited in Clause 34, wherein the proxy cache manager uses the predicted browser cache operation to update the proxy cache content.
36. A computing system comprising:
   a host device that includes a host device file system (HDFS) and a network interface;
   a local storage device LSD, comprising:
      a memory array logically arranged to include at least a first portion and at least a second portion wherein the first and the second portions are independent from each other, wherein the first portion is managed by the HDFS such that the first application uses the HDFS to manage the first application content in the first portion, and wherein the second portion is not managed by the HDFS such that the second portion is invisible to the HDFS wherein the first and the second applications execute independently from each other, and wherein the managing of the first application content by the first application is independent of the managing of the second application content by the second application, and wherein the LSD informs the second application of the first application content stored in the first portion, wherein the informing is invisible to the HDFS.
37. A computing system as recited in Clause 36, wherein that managing by the first application is performed based upon a first application content management policy and wherein the managing by the second application is performed based upon a second application content management policy.
38. A computing system as recited in Clause 37, wherein the second application uses the information provided to the second application by the LSD of the first application content stored in the first portion to deduce the first application content management policy.
39. A computing system as recited in Clause 38, wherein the second application uses the deduced first application content management policy to update the second application content management policy.
40. A computing system as recited in Clause 39, wherein the second application uses the updated second application content management policy to predict an upcoming first application operation.
41. A computing system as recited in Clause 40, wherein the second application initiates a second portion operation based upon the predicted upcoming first application operation.
42. A computing system as recited in Clause 41, wherein the host device (HD) includes a network interface that the HD uses to facilitate network access to the second portion.
43. A computing system as recited in Clause 42, wherein the first application is a browser cache manager and wherein the second application is a proxy cache manager.
44. A computing system as recited in Clause 43, wherein the second portion includes at least a proxy cache managed by the proxy cache manager, wherein the proxy cache manager manages proxy cache content in the proxy cache according to a proxy cache management policy.
45. A computing system as recited in Clause 44, wherein the first portion includes at least a browser cache managed by the browser cache manager, wherein the browser cache manager manages browser cache content in the browser cache according to a browser cache management policy.
46. A computing system as recited in Clause 44, wherein the proxy cache manager modifies the proxy cache management policy based upon the information about the browser cache content provided by the LSD.
47. A computing system as recited in Clause 45, wherein the proxy cache manager uses the modified proxy cache management policy to predict a browser cache operation.
48. A computing system as recited in Clause 45, wherein the proxy cache manager uses the predicted browser cache operation to update the proxy cache content.
49. A method of acquiring and consuming protected digital content having at least one restriction attached thereto by a digital content provider in accordance with a DRM scheme, the method performed by a system that includes a local storage device (LSD) having a memory array, wherein the LSD is coupled with a host device (HD) having at least a host device file system (HDFS) arranged to manage at least a portion of the memory array, the method comprising:
   acquiring the protected digital content by the LSD;
   securely storing the acquired protected digital content in the memory array by the LSD, wherein the acquiring and the securely storing are each in accordance with the DRM scheme and neither are initiated by the HDFS; and
   consuming the protected digital content by,
      converting at least some of the securely stored protected digital content into a digital data stream, and
      streaming the digital data stream by the LSD, wherein if the digital data stream has the at least one restriction attached thereto that is a usage restriction, then the LSD enforces the usage restriction.
50. A method as recited in Clause 49, wherein the protected digital content includes digital content and corresponding rights objects, and wherein the usage restriction includes preventing unauthorized copying of the protected digital content, or allowing a predetermined number of uses of the protected digital content.
51. A method as recited in Clause 50, wherein the memory array further comprises:
   at least a first portion managed by the HDFS that is visible to the HDFS and at least a second portion that is not managed by the HDFS and is invisible to the HDFS, and wherein the securely storing the protected digital content further comprises:
      storing encrypted digital content in the first portion of the memory array that is visible to the HDFS, and
      storing the rights objects corresponding to the digital content in the second portion of the memory array that is invisible to the HDFS.
52. A method as recited in Clause 50, wherein the securely storing the protected digital content further comprises:
   encrypting the protected digital content; and
   storing the encrypted protected digital content in the first portion of the memory array that is visible to the HDFS.
53. A method as recited in Clause 49, wherein LSD streams the digital data stream to an agent external to the LSD, and wherein if the at least one restriction includes an access restriction, then the external agent can process the digital data stream only if the external agent is an authenticated external agent having access credentials acceptable to the first DRM scheme.
54. A method as recited in Clause 53, wherein the external agent resides in a second LSD connected to the HD by way of an interface.
55. A method as recited in Clause 54, wherein the external agent is a local digital media player renderer application running in the HD.
56. A method as recited in Clause 54, wherein the protected digital content is acquired from a remote device (RD) that is external to the HD and the LSD and that is included in a network.
57. A method as recited in Clause 56, further comprising:
   mutually authenticating the LSD and the RD prior to the acquiring of the protected digital content; and
   initiating the acquiring of the digital content by the LSD from the RD only when the mutual authentication is successfully concluded.
58. A method as recited in Clause 57, wherein the HD further comprises a network interface providing the HD access to a network.
59. A method as recited in Clause 58, wherein the acquiring the protected digital content further comprises:
   prompting the HD by the RD to use the network interface to establish a communication path between the LSD and the RD wherein once the communication path is established by the HD there is no further intervention by the HD except to maintain the communication path, or
   prompting the HD by the LSD to use the network interface to establish the communication path between the LSD and the RD wherein once the communication path is established by the HD there is no further intervention by the HD except to maintain the communication path; and
   logically interacting over the communication path by the LSD and the RD, wherein the logical interaction is invisible to the HD.
60. A method as recited in Clause 59, wherein the logical interaction includes a RD command that causes the RD to send the protected digital content from the RD to the LSD and that compels the LSD to store the protected digital content in the memory array, or wherein the logical interaction includes a LSD command that causes the LSD to request that the RD send the digital content from the RD to the LSD.
61. A method as recited in Clause 60, wherein the converting at least some of the securely stored protected digital content into the digital data stream comprises:
   reading the protected digital content from the memory array; and
   arranging the protected digital content read from the memory array into at least one data stream.
62. A method as recited in Clause 61, wherein the streaming the protected digital content from the memory array by the LSD comprises:
   forming a streaming channel; and
   streaming the protected digital content over the streaming channel.
63. A method as recited in Clause 62, wherein if the DRM requires that the streaming channel be a secure streaming channel, then
   forming the secure streaming channel; and
   streaming the protected digital content over the secure streaming channel.
64. A method as recited in Clause 49, wherein the protected digital content is a digital media file that includes a MP3 audio file and/or a video file.
65. A method as recited in Clause 49, wherein the system is arranged to concurrently acquire and consume other protected digital content that has at least one restriction attached thereto in accordance with another DRM scheme.
66. In a computing device having a host device (HD) in communication with a local storage device (LSD), wherein the LSD includes a memory array comprising a plurality of data blocks via which the memory array is accessible to the HD, a method of generating a search index with respect to data stored in the memory array of the LSD, the method comprising:
   by the LSD without involvement of the HD, generating the index data with respect to the data stored in the memory array of the LSD; and
   by the LSD, storing the generated index data on the LSD as at least a part of the search index.
67. The method of Clause 66, wherein:
   generating the index data with respect to the data stored in the memory array of the LSD includes
   by the LSD, observing access to the LSD as a result of data access operations by the HD relative to the memory array of the LSD wherein such data access operations result in data blocks being provided to or from the memory array;
   by the LSD, determining data characterizing the observed data access operations; and
      generating the index data based at least in part on the determined characterizing data.
68. The method of Clause 67, wherein:
   determining data characterizing the observed data access operations includes determining data that at least includes data other than content of the data being accessed in the observed data access operations.
69. The method of Clause 68, wherein:
   the data access operations include operations to access data of media content; and
   determining data characterizing the observed data access operations includes determining data characterizing behavior represented by observed data access operations, relative to the media content, and at least including data other than the data of the accessed media content itself.
70. The method of Clause 67, wherein:
   the HD includes a host device file system (HDFS) and the data access operations by the HD relative to the memory array of the LSD include HDFS operations.
71. The method of Clause 66, wherein:
   generating the index data with respect to the data stored in the memory array of the LSD includes generating the index data to at least include the data stored in the memory array.
72. The method of Clause 71 , wherein:
   generating the index data to at least include the data stored in the memory array includes extracting content that is comprised of data stored in the memory array, wherein the content is the data stored in the memory array.
73. The method of Clause 66, wherein:
   generating the index data with respect to the data stored in the memory array of the LSD includes performing a recognition algorithm on data stored in the memory array, wherein the generated index data is indicative of a result of the recognition algorithm.
74. The method of Clause 66, wherein:
   generating the index data with respect to the data stored in the memory array of the LSD includes, by the LSD, accessing the data from the memory array of the LSD and generating the index data with respect thereto, without involvement of the HD.
75. The method of Clause 66, further comprising:
   by the LSD, receiving a search query; and
   by the LSD, processing the search query with respect to the search index and providing a search result in response thereto.
76. The method of Clause 75, wherein:
   receiving a search query includes receiving a search query from the HD.
77. The method of Clause 75, wherein:
   receiving a search query includes receiving a search query from a device other than the HD.
78. The method of Clause 66, further comprising:
   providing the search index from the LSD to the host device.
79. The method of Clause 66, further comprising:
   providing the search index from the LSD to a device other than the host device.
80. The method of Clause 66, further comprising:
   by the LSD, receiving a data access request from the HD for particular content in the memory array of the LSD; and
   by the LSD, based on the data access request, processing the generated index data in view of the particular content of the data access request to determine whether to block the access request.
81. The method of Clause 66, further comprising:
   by the HD, based on a data access request for particular content in the memory array of the LSD, processing the generated index data stored in the LSD, in view of the particular content of the data access request, to determine whether to block the access request.
82. A system, comprising:
   a data storage array;
   a first logical interface adapted for managing data stored in the data storage array as logical data blocks; and
   a second logical interface adapted for managing data objects corresponding to the data stored as logical data blocks, wherein when at least some of the data stored as logical data blocks is modified by way of the first logical interface, the modified data is accessible by way of both the first and the second logical interfaces, and wherein the being accessible by way of the second logical interface involves concurrently managing a predetermined set of data object properties and the modifying.
83. A system as recited in Clause 82, wherein the concurrently managing the predetermined set of data object properties is facilitated by a synchronization unit, wherein the facilitating includes synchronizing the data objects and the predetermined set of object properties.
84. A system as recited in Clause 82, wherein the predetermined set of object properties includes an object name, an object size, a number of times the object has been accessed.
85. A system as recited in Clause 82, wherein the data storage array, the first logical interface and the second logical interface are included in a local storage device (LSD).
86. A system as recited in Clause 85 wherein the LSD is coupled to a host device (HD) having a host application and a host device file system (HDFS) arranged to generate a block command.
87. A system as recited in Clause 86, wherein the synchronization unit is included in the HD.
88. A system as recited in Clause 83, wherein the data storage array is configured to include a first portion and a second portion.
89. A system as recited in Clause 88, wherein the first portion is a mass storage portion in communication with the first and the second logical interfaces arranged to store the logical block data and the corresponding data objects, and wherein the second portion is arranged to store the predetermined set of data object properties.
90. A system as recited in Clause 89, wherein when an object in the first portion is modified, then the synchronization unit updates the corresponding data object properties stored in the second portion.
91. A local storage device (LSD), comprising:
   a data storage array;
   a first logical interface adapted for managing data stored in the data storage array as logical data blocks; and
   a second logical interface adapted for managing data objects corresponding to the data stored as logical data blocks, wherein when at least some of the data stored as logical data blocks is modified by way of the first logical interface, the modified data is accessible by way of both the first and the second logical interfaces, and wherein the being accessible by way of the second logical interface involves concurrently managing a predetermined set of data object properties and the modifying.
92. An LSD as recited in Clause 91 wherein the LSD is coupled to a host device (HD) having a host application and a host device file system (HDFS) arranged to generate a block command.
93. An LSD as recited in Clause 92, wherein the concurrently managing the predetermined set of data object properties is facilitated by a synchronization unit, wherein the facilitating includes synchronizing the data objects and the predetermined set of object properties.
94. An LSD as recited in Clause 93, wherein the synchronization unit is included in the HD.
95. An LSD as recited in Clause 94, wherein the predetermined set of object properties includes an object name, an object size, a number of times the object has been accessed.
96. An LSD as recited in Clause 94, wherein the data storage array is configured to include a first portion and a second portion.
97. An LSD as recited in Clause 96, wherein the first portion is a mass storage portion in communication with the first and the second logical interfaces arranged to store the logical block data and the corresponding data objects, and wherein the second portion is arranged to store the predetermined set of data object properties.
98. An LSD as recited in Clause 97, wherein when an object in the first portion is modified, then the synchronization unit updates the corresponding data object properties stored in the second portion.
99. A method, comprising:
   in a data storage array,
   managing data stored in the data storage array as logical data blocks by way of a first interface; and
   managing data objects stored in the data storage array by way of a second interface, wherein the data objects correspond to the data stored as logical data blocks, wherein when the data stored as logical data blocks is modified by way of the first interface, the modified data is accessible by way of both the first and the second interface, and wherein the being accessible by way of the second interface involves concurrently managing a predetermined set of data object properties.
100. A method as recited in Clause 99, wherein the concurrently managing the predetermined set of data object properties is facilitated by a synchronization unit, wherein the facilitating includes synchronizing the data objects and the predetermined set of object properties.
101. A method as recited in Clause 100, wherein the predetermined set of object properties includes an object name, an object size, a number of times the object has been accessed.
102. A method as recited in Clause 100, wherein the data storage array, the first logical interface and the second logical interface are included in a local storage device (LSD).
103. A method as recited in Clause 102 wherein the LSD is coupled to a host device (HD) having a host application and a host device file system (HDFS) arranged to generate a block command.
104. A method as recited in Clause 103, wherein the synchronization unit is included in the HD.
105. A method as recited in Clause 104, wherein the data storage array is configured to include a first portion and a second portion.
106. A method as recited in Clause 105, wherein the first portion is a mass storage portion in communication with the first and the second interface arranged to store the logical block data and the corresponding data objects, and wherein the second portion is arranged to store the predetermined set of data object properties.
107. A method as recited in Clause 106, wherein when an object in the first portion is modified, then the synchronization unit updates the corresponding data object properties stored in the second portion.

## Claims

1. A method of acquiring and consuming protected digital content having at least one restriction attached thereto by a digital content provider in accordance with a DRM scheme, the method performed by a system that includes a local storage device (LSD) having a memory array, wherein the LSD is coupled with a host device (HD) having at least a host device file system (HDFS) arranged to manage at least a portion of the memory array, the method comprising:
acquiring the protected digital content by the LSD;
securely storing the acquired protected digital content in the memory array by the LSD, wherein the acquiring and the securely storing are each in accordance with the DRM scheme and neither are initiated by the HDFS; and
consuming the protected digital content by,
converting at least some of the securely stored protected digital content into a digital data stream, and
streaming the digital data stream by the LSD, wherein if the digital data stream has the at least one restriction attached thereto that is a usage restriction, then the LSD enforces the usage restriction.

2. A method as recited in claim 1, wherein the protected digital content includes digital content and corresponding rights objects, and wherein the usage restriction includes preventing unauthorized copying of the protected digital content, or allowing a predetermined number of uses of the protected digital content.

3. A method as recited in claims 1 or 2, wherein the memory array further comprises:
at least a first portion managed by the HDFS that is visible to the HDFS and at least a second portion that is not managed by the HDFS and is invisible to the HDFS, and wherein the securely storing the protected digital content further comprises:
storing encrypted digital content in the first portion of the memory array that is visible to the HDFS, and
storing the rights objects corresponding to the digital content in the second portion of the memory array that is invisible to the HDFS.

4. A method as recited in claims 1 or 2, wherein the securely storing the protected digital content further comprises:
encrypting the protected digital content; and
storing the encrypted protected digital content in the first portion of the memory array that is visible to the HDFS.

5. A method as recited in claim 1, wherein LSD streams the digital data stream to an agent external to the LSD, and wherein if the at least one restriction includes an access restriction, then the external agent can process the digital data stream only if the external agent is an authenticated external agent having access credentials acceptable to the first DRM scheme.

6. A method as recited in claim 5, wherein the external agent resides in a second LSD connected to the HD by way of an interface.

7. A method as recited in claim 1, wherein the external agent is a local digital media player renderer application running in the HD.

8. A method as recited in claim1, wherein the protected digital content is acquired from a remote device (RD) that is external to the HD and the LSD and that is included in a network.

9. A method as recited in claim 1, further comprising:
mutually authenticating the LSD and the RD prior to the acquiring of the protected digital content; and
initiating the acquiring of the digital content by the LSD from the RD only when the mutual authentication is successfully concluded.

10. A method as recited in claim 1, wherein the HD further comprises a network interface providing the HD access to a network.

11. A method as recited in claim 1, wherein the acquiring the protected digital content further comprises:
prompting the HD by the RD to use the network interface to establish a communication path between the LSD and the RD wherein once the communication path is established by the HD there is no further intervention by the HD except to maintain the communication path, or
prompting the HD by the LSD to use the network interface to establish the communication path between the LSD and the RD wherein once the communication path is established by the HD there is no further intervention by the HD except to maintain the communication path; and
logically interacting over the communication path by the LSD and the RD, wherein the logical interaction is invisible to the HD.

12. A method as recited in claim 11, wherein the logical interaction includes a RD command that causes the RD to send the protected digital content from the RD to the LSD and that compels the LSD to store the protected digital content in the memory array, or wherein the logical interaction includes a LSD command that causes the LSD to request that the RD send the digital content from the RD to the LSD.

13. A method as recited in claim 12, wherein the converting at least some of the securely stored protected digital content into the digital data stream comprises:
reading the protected digital content from the memory array; and
arranging the protected digital content read from the memory array into at least one data stream.

14. A method as recited in claim 13, wherein the streaming the protected digital content from the memory array by the LSD comprises:
forming a streaming channel; and
streaming the protected digital content over the streaming channel.

15. A method as recited in claim 14, wherein if the DRM requires that the streaming channel be a secure streaming channel, then
forming the secure streaming channel; and
streaming the protected digital content over the secure streaming channel wherein the protected digital content is a digital media file that includes a MP3 audio file and/or a video file wherein the system is arranged to concurrently acquire and consume other protected digital content that has at least one restriction attached thereto in accordance with another DRM scheme.
